# EUROPEAN PATENT APPLICATION

(11) **EP 1 030 272 A2**
(43) Date of publication of application: **23.08.2000**
(21) Application number: 00103156.6
(22) Date of filing: 16.02.2000
(51) Int. Cl.: G07F 19/00, G07F 7/10, H04M 17/00

(54) **Electronic asset utilization system, electronic asset utilization method, server for use with electronic asset utilization system, and recording medium having recorded thereon electronic asset utilization method**

(30) Priority: 18.02.1999 JP 3954399; 04.01.2000 JP 2000000101
(71) Applicant: MATSUSHITA ELECTRIC INDUSTRIAL CO., LTD., Kadoma-shi, Osaka-fu (JP)
(72) Inventor: Kawaguchi, Kyoko, Matsudo-shi, Chiba (JP); Takayama, Hisashi, Tokyo (JP); Matsuse, Tetsuo, Ikoma-gun, Nara (JP); Shibata, Akio, Kounosu-shi, Saitama (JP)
(74) Representative: Grünecker, Kinkeldey, Stockmair & Schwanhäusser Anwaltssozietät

(57) **Abstract**

An electronic asset utilization system is constituted of a stationary terminal 11, such as a set-top box (STB), a mobile terminal 13, such as a portable cellular phone, and a server 15 for paying a charge for issuance of an electronic asset or an order for an electronic asset. The stationary terminal 11, the mobile terminal 13, and the server 15 are connected to a communications network. After having received an order for an electronic asset, such as an electronic ticket, and has settled the order, the server 15 sends the electronic asset to a specified terminal. Further, upon receipt of a request for service, the server 15 performs a processing operation related to the service request and transmits the thus-requested service to a specified terminal.

## Description

### BACKGROUND OF THE INVENTION

The present invention relates to an electronic asset utilization system and an electronic asset utilization method, which are intended to effect utilization of an electronic prepaid card or an electronic ticket (which will hereinafter be collectively referred to as "electronic asset"), such as use or purchase of electronic asset. Further, the present invention relates to a server for use with the electronic asset utilization system and method, as well as to a recording medium on which there is recorded a program for carrying out the electronic asset utilization method.

An existing settlement system used for purchasing a commodity product or receiving service is of a prepayment type. For example, a user purchases a prepaid card, such as a "telephone card" or a "pachinko (pinball) card", before purchasing a commodity product or receiving service and settles transactions by use of the pre-paid card. Since prepaid cards have recently become pervasive, the prepayment-type settlement system is often used.

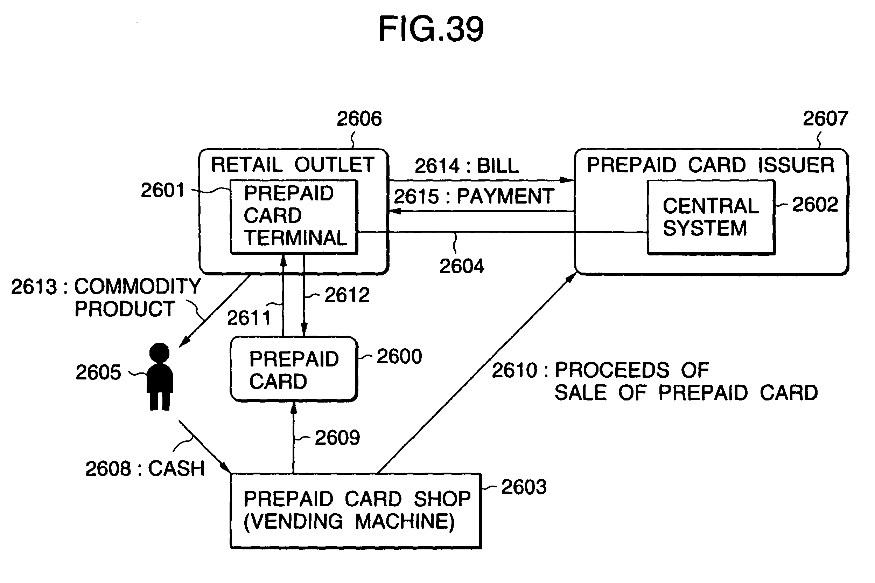

Next will be described the existing prepayment-type settlement system using a prepaid card, by reference to FIG. 39.

In the drawing, a prepaid card terminal 2601 disposed in a retail outlet 2606 is to settle transactions by use of a prepaid card. The prepaid card terminal 2601 is connected to a central system 2602 of a prepaid card issuer 2607 by way of a communications line 2604. In some retail outlets, the prepaid card terminal 2601 is connected to the central system 2602 of the prepaid card issuer 2607 by way of a POS (point-of-sale) system disposed in the retail outlet and the communications line 2604.

Before purchasing a commodity product at the retail outlet 2606 through use of a prepaid card, a consumer 2605 first purchases a prepaid card 2600 (2609) from a prepaid card sales shop 2603 by paying cash (2608). The proceeds of the sale of the prepaid card are sent to the prepaid card issuer 2607 from the prepaid card sales shop 2603 (2610).

The consumer 2605 hands the prepaid card 2600 over to a clerk in the retail outlet 2606 (2611) and asks him to settle the transaction by use of the prepaid card. When the clerk inserts the prepaid card 2600 into a card reader of the prepaid card terminal 2601 and performs a prepaid-card settlement operation, the prepaid card terminal 2601 reads, from the prepaid card, data pertaining to the available balance of the card (hereinafter referred to simply as "balance data") and writes, into the prepaid card 2600, new balance data calculated by deduction of the cost of the commodity product from the balance data. The prepaid card terminal 2601 prints, through use of a printer, an accounting statement on which appear a bill citing the commodity price and the new balance data pertaining to the prepaid card 2600. The clerk hands over to the consumer 2605 (2612 and 2613) the purchased commodity, the prepaid card 2600, and the accounting statement, thus terminating the settlement of the transaction using the prepaid card.

Subsequently, the prepaid card terminal 2601 bills a charge to the central system 2602 of the prepaid card issuer 2607 on the basis of the amount deduced from the prepaid card 2600, by way of the communications line 2604 (2614). Upon being charged, the prepaid card issuer 2607 pays the charge to the retail outlet 2606 (2615).

There may be a case where a prepaid card is purchased from a prepaid card vending machine or a case where the prepaid card terminal 2601 is embodied as a vending machine or a public phone having the capability of settling a transaction by use of a prepaid card. Any of these embodiments is in principle based on the same mechanism. As described in Japanese Patent Publication No. 103426/1994, a system for performing mutual authentication between a prepaid card and a card reader/writer through use of an electronic signature has been put forward as a security measure. An IC card equipped with an IC chip capable of reserving an electronic prepaid card or balance data has recently come into use in place of a prepaid card.

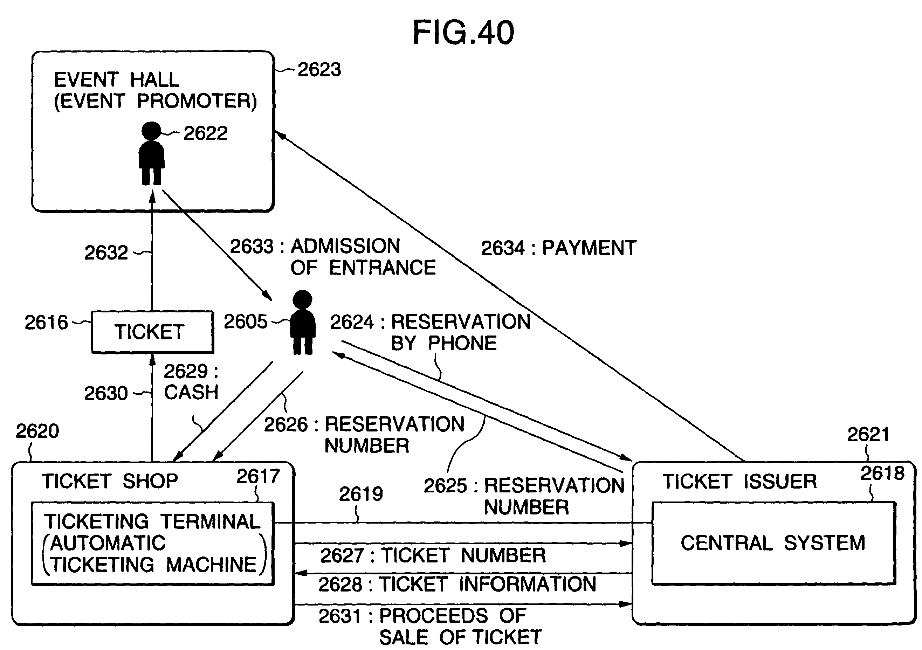

By reference to FIG. 40, next will be described an existing sales system for selling tickets for various events, public performances, or movies and allowing entry of audience into a hall. Like the previously-described settlement, this sales system also employs a prepayment method.

In the drawing, a ticketing terminal 2617 is disposed in a ticket shop 2620 and is to issue a ticket. The ticketing terminal 2617 is connected to a ticket issuer 2621 by way of a communications line 2619.

In a case where the consumer 2605 purchases a ticket for an event, a public performance, or a movie, he calls the central system 2618 of the ticket issuer 2621 and reserves a desired ticket (2624). The central system 2618 carries out booking of the requested ticket and issues a reservation number to the consumer 2605 (2625). The consumer 2605 who has received the reservation number goes to the ticket shop 2620 and asks a clerk to issue the ticket by telling her the reservation number.

The clerk performs a ticketing operation by entry of the reservation number into the ticketing terminal 2617. The ticketing terminal 2617 transmits the reservation number to the central system 2618 of the ticket issuer 2621 by way of the communications line 2619 (2627). In response to the transmission of the reservation number, the central system 2618 transmits to the ticketing terminal 2617 (2628) data pertaining to the booked ticket. The ticketing terminal 2617 prints the thus-received ticket data on a paperboard specified by the ticket issuer 2621 and outputs the thus-printed paperboard as a ticket 2616. The clerk delivers (2630) the thus-issued ticket 2616 to the consumer 2605 in exchange for cash (2629), thus terminating the sale of the ticket.

The proceeds of the sale of the ticket are transmitted to the ticket issuer 2621 after a commission for the ticket shop 2620 has been deducted from the proceeds. After a commission for the ticket issuer 2621 has been deduced from the proceeds, the remainder is paid to the promoter of the event (2634).

The consumer 2605 goes to an event hall 2623 designated for the ticket 2616 and hands the ticket 2616 over to a responsible official 2622 (2632). After having visually checked whether or not the details of the ticket 2616 are correct, the official 2622 allows the consumer 2605 to enter the hall (2633).

Next will be described a broadcast view system which allows viewing of a digital television broadcast by use of a communications satellite (CS) or a like satellite. In an existing broadcast view system, after having established contract with a broadcaster, the user receives a broadcast program and key data to be used for decoding the program through use of a dedicated receiving terminal (set-top box: STB). The thus-decoded broadcast program is displayed on a TV screen. When the user views a pay-per-view program, a charging operation is performed, whereby billing information and historic data are written into the IC card inserted in the receiving terminal. The billing information is periodically transmitted to the broadcaster by way of a communications line, and the charge is settled.

As prepaid cards have become widespread, the existing settlement system has encountered a drawback of an increase in the number of problems, such as sale or use of counterfeit cards and unauthorized billing performed by the retail outlets 2606. Instances of unauthorized billing performed by the retail outlets 2606 are divided into distinct categories; for example, charging an amount higher than the real price of a commodity product or than an amount appearing on the display of the prepaid card terminal 2601 without the user's knowledge, and charging, to the central system 2602, an amount higher than the amount deducted from the prepaid card 2600. At the time of settlement, the prepaid card terminal 2601 in principle rewrites only the balance data recorded on the prepaid card 2600. Therefore, unauthorized billing can be readily performed by modification of the prepaid card terminal 2601.

Further, in the existing settlement system, the prepaid card 2600 per se is inserted directly into the prepaid card terminal 2601. There is a chance of tampering with the information recorded on the prepaid card 2600 by modification of the prepaid card terminal 2601 or unauthorized reading of the personal information recorded on the prepaid card 2600, which would usually not be read at the time of settlement.

For these reasons, demand exists for the prepaid card terminal 2601 and a settlement system, which have a higher degree of reliability and security. For example, a physical measure must be taken against unauthorized modification of the prepaid card terminal 2601, such as sealing a housing of the prepaid card terminal 2601 in order to prevent disassembly thereof. However, such a countermeasure hinders reduction in the size or cost of the prepaid card terminal 2601.

In the existing settlement system, the consumer 2605 cannot directly ascertain the amount deducted from the prepaid card 2601. For this reason, the retail outlet 2606 must hand over, to the consumer 2605, an accounting statement having printed thereon a bill specifying the commodity price and the available balance of the prepaid card 2600. However, submission of such an accounting statement hinders an increase in sales efficiency and saving of resources.

Further, the storage capacity of the prepaid card 2601 is limited and comparatively small, and hence a large amount of information cannot stored in the prepaid card. For this reason, a prepaid card encounters difficulty in storing information of various types into a single card.

In the existing sales system, even when the ticket has already been booked online, the user has to go to the ticket shop 2630 in order to purchase and request issuance of a ticket. The sales system encounters a problem of the user being subjected to inconvenience of having to go to the ticket shop 2620 in the end. Further, in the existing sales system, the officer 2622 has to visually examine the tickets 2616 at the entrance of the event hall 2623, thus deteriorating the efficiency of examination work and involving a potential of causing an examination failure. Further, there is a fear of a consumer gaining unauthorized entry through use of a counterfeit ticket or a like ticket.

In the existing broadcast view system, payment of a charge for pay service, such as a pay-per-view broadcast program, is limited to a withdrawal from a bank account or settlement with a credit card. Further, in the existing broadcast system, billing information and history information are accumulated in a receiving terminal, and these information items are collected periodically. Therefore, there has been a necessity for ensuring a communications line for establishing communication with a server of the broadcaster.

### SUMMARY OF THE INVENTION

The present invention has been conceived in view of the above-described problems of the existing systems and is aimed at providing an electronic asset utilization system for fulfilling a settlement system, a sales system, and a broadcast system, which are very convenient and safe, through use of electronic asset having monetary values, such as electronic prepaid cards or electronic tickets. Further, the present invention is aimed at providing an electronic asset utilization method, a server for use with the electronic asset utilization system, and a recording medium having recorded thereon the electronic asset utilization method.

To solve the problems, the present invention provides an electronic asset utilization system comprising: a first mobile terminal which has first wireless communications means capable of establishing connection to a communications network by means of wireless communications and is portable; a first stationary terminal which is disposed to be stationary and outputs a signal for instructing supply of a desired electronic asset to the first mobile terminal; and a server which supplies the desired electronic asset to the first mobile terminal in accordance with the signal output from the first stationary terminal, wherein the first mobile terminal, the first stationary terminal, and the server are connected to the communications network.

Further, there is provided an electronic asset utilization system comprising: a first mobile terminal which has first wireless communications means capable of establishing connection to a communications network by means of wireless communications and is portable; a second mobile terminal which has second wireless communications means capable of establishing connection to the communications network by means of wireless communications, outputs a signal for instructing supply of a desired electronic asset to the first mobile terminal, and is portable; and a server which supplies the desired electronic asset to the first mobile terminal in accordance with the signal output from the second stationary terminal, wherein the first mobile terminal, the second mobile terminal, and the server are connected to the communications network.

There is also provided an electronic asset utilization system comprising: a first mobile terminal which has first wireless communications means capable of establishing connection to a communications network by means of wireless communications and is portable; a first stationary terminal which is disposed to be stationary and outputs a signal for instructing supply of a desired electronic asset; and a server which supplies the desired electronic asset to the first mobile terminal by way of the first stationary terminal or to the first mobile terminal, in accordance with the signal output from the first stationary terminal, wherein the first mobile terminal, the first stationary terminal, and the server are connected to the communications network.

Preferably, the first mobile terminal has transfer means capable of transferring the electronic asset supplied to the first mobile terminal to the stationary terminal that is disposed to be stationary.

Preferably, the transfer means corresponds to communications means capable of carrying out communications with the stationary terminal.

Preferably, the transfer means corresponds to portable recording means.

Preferably, an owner or user of the first stationary terminal or the second mobile terminal differs from an owner or user of the first mobile terminal.

Preferably, the first mobile terminal is identical with the second mobile terminal.

Preferably, upon receipt, from the first stationary terminal or the second mobile terminal, of an instruction for supplying an electronic asset, the server sends a request for effecting payment to the first stationary terminal or the second mobile terminal.

Preferably, upon receipt, from the first stationary terminal, of an instruction for supplying an electronic asset, the server sends a request for effecting payment to the first mobile terminal.

Preferably, the first stationary terminal, the first mobile terminal, or the second mobile terminal sends an electronic asset having a monetary value to the server, in exchange for the electronic asset supplied in accordance with the instruction output from the first stationary terminal or the second mobile terminal.

Preferably, the first stationary terminal or the server has history/billing information storage means for storing history/billing information pertaining to the electronic asset supplied in accordance with the instruction, and the first mobile terminal sends an electronic asset having a monetary value to the server as a payment, on the basis of the history/billing information stored in the history/billing information storage means.

Preferably, the first mobile terminal sends the history/billing information to the server.

Preferably, the server settles the payment by use of the electronic asset having a monetary value and sends the result of settlement to the first stationary terminal or the second mobile terminal.

Preferably, the first stationary terminal updates the history/billing information stored in the history/billing information storage means, through use of the result of settlement transmitted to the first stationary terminal.

Preferably, the first stationary terminal or the second mobile terminal sends, to the server, personal identification information pertaining to a person who has instructed supply of the electronic asset.

Preferably, the personal identification information is supplied from the first mobile terminal.

Preferably, the personal identification information is encrypted so that it can be decrypted.

Further, the present invention provides an electronic asset utilization system comprising: a third stationary terminal which is disposed to be stationary; a third mobile terminal which has third wireless communications means capable of establishing connection to a communications network by means of wireless communications, outputs a signal for instructing supply of a desired electronic asset to the third mobile terminal, and is portable; and a server which supplies the desired electronic asset to the third stationary terminal in accordance with the signal output from the third mobile terminal, wherein the third stationary terminal, the third mobile terminal, and the server are connected to the communications network.

There is also provided an electronic asset utilization system comprising: a third stationary terminal which is disposed to be stationary; a fourth stationary terminal which is disposed to be stationary and outputs a signal for instructing supply of a desired electronic asset to the third stationary terminal; and a server which supplies the desired electronic asset to the third stationary terminal in accordance with the signal output from the fourth stationary terminal, wherein the third stationary terminal, the fourth stationary terminal, and the server are connected to the communications network.

Preferably, the third stationary terminal has transfer means capable of transferring to a portable mobile terminal the electronic asset supplied to the third stationary terminal.

Preferably, the transfer means corresponds to communications means capable of carrying out communications with the stationary terminal.

Preferably, the transfer means corresponds to portable recording means.

Preferably, an owner or user of the third mobile terminal or the fourth stationary terminal differs from an owner or user of the third stationary terminal.

Preferably, the third stationary terminal is identical with the fourth stationary terminal.

Preferably, upon receipt, from the third mobile terminal or the fourth stationary terminal, of an instruction for supplying an electronic asset, the server sends a request for effecting payment to the third mobile terminal or the fourth stationary terminal.

Preferably, upon receipt, from the third mobile terminal, of an instruction for supplying an electronic asset, the server sends a request for effecting payment to the third stationary terminal.

Preferably, the third mobile terminal or the fourth stationary terminal sends an electronic asset having a monetary value to the server, in exchange for the electronic asset supplied in accordance with the instruction output from the third mobile terminal or the fourth stationary terminal.

Preferably, the fourth stationary terminal or the server has history/billing information storage means for storing history/billing information pertaining to the electronic asset supplied in accordance with the instruction, and the fourth stationary terminal sends an electronic asset having a monetary value to the server as a payment, on the basis of the history/billing information stored in the history/billing information storage means.

Preferably, the fourth stationary terminal sends the history/billing information to the server.

Preferably, the server settles the payment by use of the electronic asset having a monetary value and sends the result of settlement to the third mobile terminal or the fourth stationary terminal.

Preferably, the fourth stationary terminal updates the history/billing information stored in the history/billing information storage means, through use of the result of settlement transmitted to the fourth stationary terminal.

Preferably, the third mobile terminal or the fourth stationary terminal sends, to the server, personal identification information pertaining to a person who has instructed supply of the electronic asset.

Preferably, the electronic value is supplied at a set time and date.

Preferably, the electronic asset corresponds to an electronic prepaid card having a monetary value, an electronic ticket, or a pay-per-view broadcast ticket for use in viewing a pay-per-view broadcast program.

Preferably, the pay-per-view broadcast ticket contains key information to be used in a processing operation for making a broadcast program viewable.

There is also provided an electronic asset utilization system comprising: a mobile terminal which is connected to a communications network by means of wireless communications and is portable; a stationary terminal which has information storage means for storing information and is disposed to be stationary; and a server connected to the communications network, wherein the information transferred from the stationary terminal to the mobile terminal is sent to the serer by way of the communications network.

Preferably, the information transferred to the mobile terminal is sent to the server by way of another stationary terminal which is disposed to be stationary and the communications network.

There is also provided an electronic asset utilization method for use with an electronic asset utilization system including a first mobile terminal which is connected to a communications network by means of wireless communications and is portable, a first stationary terminal disposed to be stationary, and a server connected to the first mobile terminal and the first stationary terminal by way of the communications network, the method comprising: an instruction step in which the first stationary terminal instructs the server to supply a desired electronic asset to the first mobile terminal; and a supply step in which the server supplies the desired electronic asset to the first mobile terminal in accordance with the instruction output from the first stationary terminal.

Further, the present invention provides an electronic asset utilization method for use with an electronic asset utilization system including first and second mobile terminals which are connected to a communications network by means of wireless communications and are portable, and a server connected to the first and second mobile terminals by way of the communications network, the method comprising: an instruction step in which the second mobile terminal instructs the server to supply a desired electronic asset to the first mobile terminal; and a supply step in which the server supplies the desired electronic asset to the first mobile terminal in accordance with the instruction output from the second mobile terminal.

There is also provided an electronic asset utilization method for use with an electronic asset utilization system including a first mobile terminal which is connected to a communications network by means of wireless communications and is portable, a first stationary terminal disposed to be stationary, and a server connected to the first mobile terminal and the first stationary terminal by way of the communications network, the method comprising: an instruction step in which the first stationary terminal instructs the server to supply a desired electronic asset; and a supply step in which the server supplies the desired electronic asset to the first stationary terminal or the first mobile terminal by way of the first stationary terminal, in accordance with the instruction output from the first stationary terminal.

Preferably, the electronic asset utilization system has a stationary terminal disposed to be stationary, and the electronic asset utilization method has a step of transferring the electronic asset supplied to the first mobile terminal to the stationary terminal.

Preferably, the electronic asset is supplied to the first stationary terminal or the first mobile terminal owned by a person differing from the owner or user of the second mobile terminal.

Preferably, the first mobile terminal is identical with the second mobile terminal.

Preferably, the electronic asset utilization method further comprises a billing step of sending a request for effecting payment to the first stationary terminal or the second mobile terminal when the first stationary terminal or the second mobile terminal instructs supply of an electronic asset.

Preferably, the electronic asset utilization method further comprises a billing step of sending a request for effecting payment to the first mobile terminal when the first stationary terminal instructs supply of an electronic asset.

Preferably, the electronic asset utilization method further comprises a payment step in which the first stationary terminal or the second mobile terminal sends an electronic asset having a monetary value to the server, in exchange for the electronic asset supplied in the instruction step.

Preferably, the electronic asset utilization method further comprises a payment step in which the first mobile terminal sends an electronic asset having a monetary value to the server as a payment, on the basis of history/billing information which is stored in the first stationary terminal or the server and pertains to the electronic asset supplied in accordance with the instruction in the instruction step.

Preferably, the electronic asset utilization method further comprises a history/billing information transmission step in which the first mobile terminal transmits the history/billing information to the server.

Preferably, the electronic asset utilization method further comprises: a settlement step of settling a charge by use of the electronic asset having a monetary value; and a settlement result transmission step of transmitting the result of the settlement performed in the settlement step to the first stationary terminal or the second mobile terminal.

Preferably, the history/billing information is updated through use of the settlement result transmitted to the first stationary terminal.

Preferably, the electronic asset utilization method further comprises a personal identification information transmission step in which the first stationary terminal or the second mobile terminal sends, to the server, personal identification information pertaining to a person who has instructed supply of the electronic asset.

Preferably, the personal identification information is supplied from the first mobile terminal.

Preferably, the personal identification information is encrypted such that the information can be decrypted later.

Preferably, processing is carried out in sequence from the instruction step, the payment step, and the supply step.

There is provided an electronic asset utilization method for use with an electronic asset utilization system including a third stationary terminal disposed to be stationary, a third mobile terminal which is connected to a communications network by means of wireless communications and is portable, and a server connected to the third stationary terminal and the third mobile terminal by way of the communications network, the method comprising: an instruction step in which the third mobile terminal instructs the server to supply a desired electronic asset to the third stationary terminal; and a supply step in which the server supplies the desired electronic asset to the third stationary terminal in accordance with the instruction output from the third mobile terminal.

The present invention also provides an electronic asset utilization method for use with an electronic asset utilization system including third and fourth stationary terminals disposed to be stationary, and a server connected to the third and fourth stationary terminals by way of a communications network, the method comprising: an instruction step in which the fourth stationary terminal instructs the server to supply a desired electronic asset to the third stationary terminal; and a supply step in which the server supplies the desired electronic asset to the third stationary terminal in accordance with the instruction output from the fourth stationary terminal.

Preferably, the electronic asset utilization system further comprises a portable mobile terminal, and the electronic asset utilization method includes a step of transferring the electronic asset supplied to the third stationary terminal to the mobile terminal.

Preferably, the electronic asset is supplied to the third mobile terminal or the third stationary terminal owned by a person differing from the owner or user of the fourth stationary terminal.

Preferably, the third stationary terminal is identical with the fourth stationary terminal.

Preferably, the electronic asset utilization method further comprises a billing step of sending a request for effecting payment to the third mobile terminal or the fourth stationary terminal when the third mobile terminal or the fourth stationary terminal instructs supply of an electronic asset.

Preferably, the electronic asset utilization method further comprises a billing step of sending a request for effecting payment to the third stationary terminal when the third mobile terminal instructs supply of an electronic asset.

Preferably, the electronic asset utilization method further comprises a payment step in which the third mobile terminal or the fourth stationary terminal sends an electronic asset having a monetary value to the server, in exchange for the electronic asset supplied in the instruction step.

Preferably, the electronic asset utilization method further comprises a payment step in which the fourth stationary terminal sends an electronic asset having a monetary value to the server as a payment, on the basis of history/billing information which is stored in the fourth stationary terminal and pertains to the electronic asset supplied in accordance with the instruction in the instruction step.

Preferably, the electronic asset utilization method further comprises a history/billing information transmission step in which the fourth stationary terminal transmits the history/billing information to the server.

Preferably, the electronic asset utilization method further comprises: a settlement step of settling a charge by use of the electronic asset having a monetary value; and a settlement result transmission step of transmitting the result of the settlement performed in the settlement step to the third mobile terminal or the fourth stationary terminal.

Preferably, the history/billing information is updated through use of the settlement result transmitted to the fourth stationary terminal.

Preferably, the electronic asset utilization method further comprises a personal identification information transmission step in which the third mobile terminal or the fourth stationary terminal sends, to the server, personal identification information pertaining to a person who has instructed supply of the electronic asset.

Preferably, processing is carried out in sequence from the instruction step, the payment step, and the supply step.

Preferably, the electronic asset is supplied at a set time and date.

Preferably, the electronic asset corresponds to any one of an electronic prepaid card having a monetary value, an electronic ticket, and a pay-per-view broadcast ticket for use in viewing a pay-per-view program.

Preferably, the pay-per-view broadcast ticket includes key information for use with an operation for making a broadcast program viewable.

The present invention provides an electronic asset utilization method for use with an electronic asset utilization system including a mobile terminal which is connected to a communications network by means of wireless communications and is portable, a stationary terminal which has information storage means for storing information and is disposed to be stationary, and a server connected to the communications network, the method comprising: a transfer step of transferring the information stored in the information storage means from the stationary terminal to the mobile terminal; and a transmission step of transmitting the information transferred to the mobile terminal to the server by way of the communications network.

Preferably, the information transferred to the mobile terminal is sent to the server by way of another stationary terminal disposed to be stationary and the communications network.

There is also provided a server which is connected, by way of a communications network, to a first portable mobile terminal and a first stationary terminal disposed to be stationary, and supplies a desired electronic asset to the first mobile terminal in accordance with a signal which is received from the first stationary terminal for instructing supply of the desired electronic asset to the first mobile terminal.

The present invention also provides a server which is connected, by way of a communications network, to first and second portable mobile terminals, and supplies a desired electronic asset to the first mobile terminal in accordance with a signal which is received from the second stationary terminal for instructing supply of the desired electronic asset to the first mobile terminal.

There is also provided a server which is connected, by way of a communications network, to a first stationary terminal disposed to be stationary, and supplies a desired electronic asset to the first mobile terminal or to a first portable mobile terminal capable of being connected to the first stationary terminal by way of the first stationary terminal, in accordance with a signal which is received from the first stationary terminal for instructing supply of the desired electronic asset.

The present invention also provides a server which is connected, by way of a communications network, to a third portable mobile terminal and a third stationary terminal disposed to be stationary, and supplies a desired electronic asset to the third stationary terminal in accordance with a signal which is received from the third mobile terminal for instructing supply of the desired electronic asset to the third stationary terminal.

There is further provided a server which is connected, by way of a communications network, to third and fourth stationary terminals disposed to be stationary, and supplies a desired electronic asset to the third stationary terminal in accordance with a signal which is received from the fourth stationary terminal for instructing supply of the desired electronic asset to the third stationary terminal.

Preferably, a bill is sent when supply of an electronic asset is instructed by any one of the first stationary terminal, the first mobile terminal, the second mobile terminal, the third mobile terminal, and the third stationary terminal.

Preferably, the bill is settled by use of an electronic asset which has a monetary value and has been transmitted in response to the bill, and the result of settlement is transmitted to the terminal that has instructed supply of the electronic asset.

Preferably, the electronic asset is supplied at a set time and date.

There is also provided a server for use with an electronic asset utilization system comprising: a first mobile terminal which has first wireless communications means capable of establishing connection to a communications network by means of wireless communications and is portable; a first stationary terminal which is disposed to be stationary and outputs a signal for instructing supply of a desired electronic asset to the first mobile terminal; and a server which supplies the desired electronic asset to the first mobile terminal in accordance with the signal output from the first stationary terminal, wherein the first mobile terminal, the first stationary terminal, and the server are connected to the communications network.

The present invention further provides a server for use with an electronic asset utilization system comprising: a first mobile terminal which has first wireless communications means capable of establishing connection to a communications network by means of wireless communications and is portable; a second mobile terminal which has second wireless communications means capable of establishing connection to the communications network by means of wireless communications, outputs a signal for instructing supply of a desired electronic asset to the first mobile terminal, and is portable; and a server which supplies the desired electronic asset to the first mobile terminal in accordance with the signal output from the second stationary terminal, wherein the first mobile terminal, the second mobile terminal, and the server are connected to the communications network.

There is further provided a server for use with an electronic asset utilization system comprising: a first mobile terminal which has first wireless communications means capable of establishing connection to a communications network by means of wireless communications and is portable; a first stationary terminal which is disposed to be stationary and outputs a signal for instructing supply of a desired electronic asset; and a server which supplies the desired electronic asset to the first mobile terminal by way of the first stationary terminal or to the first mobile terminal, in accordance with the signal output from the first stationary terminal, wherein the first mobile terminal, the first stationary terminal, and the server are connected to the communications network.

The present invention provides a server for use with an electronic asset utilization system comprising: a third stationary terminal which is disposed to be stationary; a third mobile terminal which has third wireless communications means capable of establishing connection to a communications network by means of wireless communications, outputs a signal for instructing supply of a desired electronic asset to the third mobile terminal, and is portable; and a server which supplies the desired electronic asset to the third stationary terminal in accordance with the signal output from the third mobile terminal, wherein the third stationary terminal, the third mobile terminal, and the server are connected to the communications network.

The present invention further provides a server for use with an electronic asset utilization system comprising: a third stationary terminal which is disposed to be stationary; a fourth stationary terminal which is disposed to be stationary and outputs a signal for instructing supply of a desired electronic asset to the third stationary terminal; and a server which supplies the desired electronic asset to the third stationary terminal in accordance with the signal output from the fourth stationary terminal, wherein the third stationary terminal, the fourth stationary terminal, and the server are connected to the communications network.

Preferably, a bill is sent when supply of an electronic asset is instructed by any one of the first stationary terminal, the first mobile terminal, the second mobile terminal, the third mobile terminal, and the third stationary terminal.

Preferably, the bill is settled by use of an electronic asset which has a monetary value and has been transmitted in response to the bill, and the result of settlement is transmitted to the terminal that has instructed supply of the electronic asset.

Preferably, the electronic asset is supplied at a set time and date.

The present invention further provides a computerreadable recording medium on which there is recorded a program for carrying out any one of the above-described electronic asset utilization methods.

In the present invention, the first stationary terminal instructs the server to supply a desired electronic asset to the first mobile terminal by way of the communications network (instruction step). In accordance with the instruction from the first stationary terminal, the server supplies a desired electronic asset to the first mobile terminal by way of the communications network (supply step).

In the present invention, the second mobile terminal instructs the server to supply a desired electronic asset to the first mobile terminal by way of the communications network (instruction step). In accordance with the instruction from the second mobile terminal, the server supplies a desired electronic asset to the first mobile terminal by way of the communications network (supply step).

In the present invention, the first stationary terminal instructs the server to supply a desired electronic asset to the first stationary terminal by way of the communications network (instruction step). In accordance with the instruction from the first stationary terminal, the server supplies a desired electronic asset to the first stationary terminal, or to the first mobile terminal by way of the first stationary terminal (supply step).

In the present invention, the third mobile terminal instructs the server to supply a desired electronic asset to the third stationary terminal by way of the communications network (instruction step). In accordance with the instruction from the third mobile terminal, the server supplies a desired electronic asset to the third stationary terminal by way of the communications network (supply step).

In the present invention, the fourth stationary terminal instructs the server to supply a desired electronic asset to the third mobile terminal by way of the communications network (instruction step). In accordance with the instruction from the first stationary terminal, the server supplies a desired electronic asset to the third stationary terminal by way of the communications network (supply step).

Accordingly, in a case where the user requests to purchase an electronic asset, for example, an electronic prepaid card or an electronic ticket, the user places with the server an order for a desired electronic asset by way of the communications network. The server performs processing corresponding to the order and can again transmit the desired electronic asset (such as an electronic prepaid card or an electronic ticket) to the set terminal by way of the communications network.

In a case where the use requests to settle payment or receive service through use of an electronic asset, such as electronic money, an electronic ticket, and a pay-per-view broadcast ticket, the user sends, to the server, a desired request by way of the communications network. The server performs processing operation corresponding to the request and can transmit an electronic asset (such as a result of settlement of payment or desired service) to the terminal by way of the communications network.

As mentioned above, the user can acquire a required electronic asset, as required, by way of the communications network. Accordingly, the user does not need to go out for only the purpose of purchasing or suing an electronic asset. Therefore, the present invention can provide an electronic asset utilization system which provides a high degree of convenience, a corresponding electronic asset utilization method, a server for use with the electronic asset utilization system, and a recording medium having recorded thereon the electronic asset utilization method.

In the present invention, the first mobile terminal has transfer means capable of transferring the electronic asset supplied to the first mobile terminal to the stationary terminal that is disposed to be stationary. Particularly, the transfer means corresponds to communications means capable of carrying out communications with the stationary terminal, and the transfer means corresponds to portable recording means.

In the present invention, the third stationary terminal has transfer means capable of transferring to a portable mobile terminal the electronic asset supplied to the third stationary terminal. Particularly, the transfer means corresponds to communications means capable of carrying out communications with the stationary terminal, and the transfer means corresponds to portable recording means.

As mentioned above, the terminal capable of storing an electronic asset is not limited to the terminal to which the electronic asset has been supplied. The electronic asset may be stored in another terminal through use of transfer means. Therefore, in a case where the storage capacity of memory of the first mobile terminal for storing an electronic asset is small, the electronic asset supplied to the first mobile terminal is transferred to the stationary terminal through use of the transfer means and is stored in the stationary terminal, thereby saving the memory of the first mobile terminal. Even in the event that the user brings the first mobile terminal out of his home and loses it, the risk of losing the electronic asset along with the first mobile terminal can be reduced, so long as the electronic asset is stored in the stationary terminal. Further, the display screen of the stationary terminal is usually greater in area than the display screen of the mobile terminal. Hence, even in terms of operability, use of the stationary terminal provides a higher degree of convenience to the user.

In a case where the electronic asset supplied to the third stationary terminal is stored in the terminal, in unmodified form, and where the user utilizes the electronic asset by way of the mobile terminal, when the electronic asset is transferred from the third stationary terminal to the mobile terminal, the memory of the mobile terminal can be saved, and the risk of the user losing the electronic asset can be reduced.

In the present invention, the electronic asset is supplied to the first stationary terminal or the first mobile terminal owned by a person differing from the owner or user of the second mobile terminal.

In the present invention, the electronic asset is supplied to the third mobile terminal or the third stationary terminal owned by a person differing from the owner or user of the fourth stationary terminal.

Further, the user can send a desired electronic asset or service to a person other than the user who has placed an order to an electronic asset or the user who has requested provision of service. Therefore, an electronic asset or service can be utilized as a gift for another person other than the user, i.e., a friend or lover. Since the electronic asset utilization system uses the communications network, the present invention can provide an electronic asset utilization system which can send an electronic asset or service to a person residing in a distant location and provides a higher degree of convenience, a corresponding electronic asset utilization method, and a recording medium having recorded thereon the electronic asset utilization method.

In the present invention, the server desirably sends a request for effecting payment to the first stationary terminal or the second mobile terminal when receiving an electronic asset supplied from the first stationary terminal or the second mobile terminal.

In the present invention, upon receipt, from the first stationary terminal, of an instruction for supplying an electronic asset, the server sends a request for effecting payment to the first mobile terminal.

In the present invention, upon receipt, from the third mobile terminal or the third stationary terminal, of an instruction for supplying an electronic asset, the server sends a request for effecting payment to the third mobile terminal or the third stationary terminal.

In the present invention, the first stationary terminal, the first stationary terminal, the first mobile terminal, or the second mobile terminal sends an electronic asset having a monetary value to the server, in exchange for the electronic asset that has been supplied in accordance with the instruction output from the first stationary terminal or the second mobile terminal.

In the present invention, the third mobile terminal or the fourth stationary terminal sends an electronic asset having a monetary value to the server, in exchange for the electronic asset that has been supplied in accordance with the instruction output from the third mobile terminal or the third stationary terminal.

Upon receipt of an instruction for supplying an electronic asset, the server sends, to the terminal which has instructed supply of the electronic asset, a request for effecting payment by use of an electronic asset having a monetary value in exchange for the electronic asset, every time the server receives an instruction for supplying an electronic asset. The user does not need to go to, for example, a convenience store, for only the purpose of paying the charge sent from the server. Therefore, the present invention can provide an electronic asset utilization system which provides a high degree of convenience, a corresponding electronic asset utilization method, a server for use with the electronic asset utilization system, and a recording medium having recorded thereon the electronic asset utilization method.

In the present invention, the first stationary terminal or the server has history/billing information storage means for storing history/billing information pertaining to the electronic asset supplied in accordance with the instruction, and the first mobile terminal sends an electronic asset having a monetary value to the server as a payment, on the basis of the history/billing information stored in the history/billing information storage means.

In the present invention, the first mobile terminal sends the history/billing information to the server.

In the present invention, the fourth stationary terminal or the server has history/billing information storage means for storing history/billing information pertaining to the electronic asset supplied in accordance with the instruction, and the fourth stationary terminal sends an electronic asset having a monetary value to the server as a payment, on the basis of the history/billing information stored in the history/billing information storage means.

In the present invention, the fourth stationary terminal sends the history/billing information to the server.

The user can effect payment by use of an electronic asset having a monetary value at a time and data desired by the user or at a specified time and date, not for necessarily each instruction for supply of an electronic asset but optionally on the basis of the history/billing information pertaining to the electronic asset which is supplied in accordance with an instruction during a predetermined period of time.

In the present invention, the server settles the payment by use of the electronic asset having a monetary value and sends the result of settlement to the first stationary terminal or the second mobile terminal.

In the present invention, the first stationary terminal updates the history/billing information stored in the history/billing information storage means, through use of the result of settlement transmitted to the first stationary terminal.

In the present invention, the server settles the payment by use of the electronic asset having a monetary value and sends the result of settlement to the third mobile terminal or the fourth stationary terminal.

In the present invention, the fourth stationary terminal updates the history/billing information stored in the history/billing information storage means, through use of the result of settlement transmitted to the fourth stationary terminal.

The history/billing information can be automatically updated by transmission of the result of payment to the terminal which has effected payment. Therefore, the user who uses the terminal can ascertain the result of payment. The present invention can provide an electronic asset utilization system having a higher degree of reliability, a corresponding electronic asset utilization method, and a recording medium having recorded thereon the electronic asset utilization method. Further, since the history/billing information is updated through use of the result of payment, the user does not have to perform a special operation for updating purposes. Even in term of this point, the present invention can provide an electronic asset utilization system which provides a higher degree of convenience, a corresponding electronic asset utilization method, and a recording medium having recorded thereon the electronic asset utilization method.

In the present invention, the first stationary terminal or the second mobile terminal sends, to the server, personal identification information pertaining to a person who has instructed supply of the electronic asset.

In the present invention, the personal identification information is supplied from the first mobile terminal.

In the present invention, the personal identification information is encrypted so that the server can decrypt the information.

In the present invention, the third mobile terminal or the fourth stationary terminal sends, to the server, personal identification information pertaining to a person who has instructed supply of the electronic asset.

The server can specify the person who has instructed supply of an electronic asset, by reference to the personal identification information that has been transmitted to the server, such as a user ID or a password. In a case where the personal identification information is encrypted, even in the event that the personal identification information is illegally read in the communications network or by way of a terminal involved in the network, usable information cannot be extracted from the personal identification information set to be decrypted by only the server. Therefore, the present invention can provide an electronic asset utilization system having a higher degree of reliability and security, a corresponding electronic asset utilization method, and a recording medium having recorded thereon the electronic asset utilization method.

In the present invention, the electronic value is supplied at a set time and date.

An electronic asset can be supplied at, for example, a time and date specified by the person who has instructed supply of the electronic asset. Therefore, the present invention can provide an electronic asset utilization system providing a higher degree of convenience, a corresponding electronic asset utilization method, a server for use with the electronic asset utilization system, and a recording medium having recorded thereon the electronic asset utilization method.

In the present invention, the information stored in the information storage means of the stationary terminal is transferred from the stationary terminal to the mobile terminal by way of the communications network.

In the present invention, the information transferred to the mobile terminal is sent to the server by way of the communications network after having been transferred to another stationary terminal disposed to be stationary.

In a case where the information corresponds to, for example, history information or billing information, the user temporarily stores the history/billing information into the mobile terminal. After having verified the history/billing information through use of the mobile terminal, the user can send the information to the server by way of another stationary terminal. Thus, since the user can ascertain the contents of the information stored in the information storage means, the present invention can provide an electronic asset utilization system providing a higher degree of convenience, a corresponding electronic asset utilization method, and a recording medium having recorded thereon the electronic asset utilization method.

### BRIEF DESCRIPTION OF THE DRAWINGS

FIG. 1 is a block diagram showing an electronic asset purchasing system according to a first embodiment of an electronic asset utilization system of the present invention;
FIG. 2 is a block diagram showing a modification of the electronic asset purchasing system according to the first embodiment of the electronic asset utilization system of the present invention;
FIG. 3 is a block diagram showing another modification of the electronic asset purchasing system according to the first embodiment of the electronic asset utilization system of the present invention;
FIG. 4 is a block diagram showing a first example of the electronic asset purchasing system according to the first embodiment of the electronic asset utilization system;
FIG. 5 is a block diagram showing a second example of the electronic asset purchasing system according to the first embodiment of the electronic asset utilization system;
FIG. 6 is a block diagram showing a third example of the electronic asset purchasing system according to the first embodiment of the electronic asset utilization system;
FIG. 7 is a block diagram showing a fourth example of the electronic asset purchasing system according to the first embodiment of the electronic asset utilization system;
FIG. 8 is a block diagram showing a fifth example of the electronic asset purchasing system according to the first embodiment of the electronic asset utilization system;
FIG. 9 is a block diagram showing a sixth example of the electronic asset purchasing system according to the first embodiment of the electronic asset utilization system;
FIG. 10 is a block diagram showing a seventh example of the electronic asset purchasing system according to the first embodiment of the electronic asset utilization system;
FIG. 11 is a block diagram showing an eighth example of the electronic asset purchasing system according to the first embodiment of the electronic asset utilization system;
FIG. 12 is a block diagram showing a ninth example of the electronic asset purchasing system according to the first embodiment of the electronic asset utilization system;
FIG. 13 is a block diagram showing a tenth example of the electronic asset purchasing system according to the first embodiment of the electronic asset utilization system;
FIG. 14 is a block diagram showing an eleventh example of the electronic asset purchasing system according to the first embodiment of the electronic asset utilization system;
FIG. 15 is a block diagram showing a twelfth example of the electronic asset purchasing system according to the first embodiment of the electronic asset utilization system;
FIG. 16 is a block diagram showing a thirteenth example of the electronic asset purchasing system according to the first embodiment of the electronic asset utilization system;
FIG. 17 is a block diagram showing a fourteenth example of the electronic asset purchasing system according to the first embodiment of the electronic asset utilization system;
FIG. 18 is a block diagram showing a fifteenth example of the electronic asset purchasing system according to the first embodiment of the electronic asset utilization system;
FIG. 19 is a block diagram showing a portion of the electronic asset utilization system according to the fifteenth example of the electronic asset purchasing system;
FIG. 20 is a block diagram showing a sixteenth example of the electronic asset purchasing system according to the first embodiment of the electronic asset utilization system;
FIG. 21 is a block diagram showing a seventeenth example of the electronic asset purchasing system according to the first embodiment of the electronic asset utilization system;
FIG. 22 is a block diagram showing an eighteenth example of the electronic asset purchasing system according to the first embodiment of the electronic asset utilization system;
FIG. 23 is a block diagram showing a nineteenth example of the electronic asset purchasing system according to the first embodiment of the electronic asset utilization system;
FIG. 24 is a block diagram showing an electronic asset use system according to a second embodiment of the electronic asset utilization system of the present invention;
FIG. 25 is a block diagram showing a modification of the electronic asset use system according to a second embodiment of the electronic asset utilization system of the present invention;
FIG. 26 is a block diagram showing another modification of the electronic asset use system according to a second embodiment of the electronic asset utilization system of the present invention;
FIG. 27 is a block diagram showing a first example of the electronic asset use system according to the second embodiment of the electronic asset utilization system;
FIG. 28 is a block diagram showing a second example of the electronic asset use system according to the second embodiment of the electronic asset utilization system;
FIG. 29 is a block diagram showing a third example of the electronic asset use system according to the second embodiment of the electronic asset utilization system;
FIG. 30 is a block diagram showing a fourth example of the electronic asset use system according to the second embodiment of the electronic asset utilization system;
FIG. 31 is a block diagram showing a fifth example of the electronic asset use system according to the second embodiment of the electronic asset utilization system;
FIG. 32 is a block diagram showing a sixth example of the electronic asset use system according to the second embodiment of the electronic asset utilization system;
FIG. 33 is a block diagram showing a seventh example of the electronic asset use system according to the second embodiment of the electronic asset utilization system;
FIG. 34 is a block diagram showing an electronic asset utilization system according to a third embodiment of the present invention;
FIG. 35 is a descriptive illustration for showing the data stratum of an electronic asset;
FIGS. 36A, 36B, and 36E are descriptive views showing indication examples appearing on a monitor of a stationary terminal at the time of purchase of an electronic asset, and FIGS. 36C and 36D are descriptive views showing indication examples appearing on an LCD of a mobile terminal at the time of purchase of an electronic asset;
FIG. 38 is a descriptive view showing various modes of relationship between the stationary terminal, the proprietor (administrator) of the mobile terminal or the server, and the user;
FIG. 39 is a descriptive view showing an existing prepayment-type settlement system using a prepaid card; and
FIG. 40 is a descriptive view showing an existing ticket sales system.

### DETAILED DESCRPTION OF THE PREFERRED EMBODIMENTS

An electronic asset utilization system, an electronic asset utilization method, a server for use with the electronic asset utilization system, and a recording medium having recorded thereon the electronic asset utilization method according to the present invention will be described in detail hereinbelow by reference to the accompanying drawings. Although detailed descriptions are given of the electronic asset utilization system and the electronic asset utilization method of the present invention, the description of the recording medium of the present invention shall be deemed as being contained in the description of the electronic asset utilization method provided hereinbelow, since a program for carrying out the electronic asset utilization method is recorded on the recording medium. The present invention is not limited to the below embodiments or examples; the present invention can be carried out in various forms falling within the scope of the invention.

Further, a term "electronic asset utilization system" comprehensively encompasses the concept of the electronic asset utilization system, that of the electronic asset utilization method, and that of the recording medium. The electronic asset utilization system shall contain an electronic asset purchasing system for purchasing an electronic asset by way of a communications network and an electronic asset use system for using an electronic asset. Here, a term "electronic asset" comprehensively encompasses an electronic prepaid card having a monetary value, an electronic ticket to which a ticket of an event or movie is converted, an electronic pay-per-view broadcast ticket to which a ticket for use in viewing a pay-per-view broadcast program is converted, a mileage card, a royalty point card and the like.

Embodiments of the electronic asset utilization system will be described in sequence from a first embodiment directed to an electronic asset purchasing system and a second embodiment directed toward an electronic asset use system. Further, a third embodiment will be described as a comprehensive electronic asset utilization system.

### [First Embodiment]

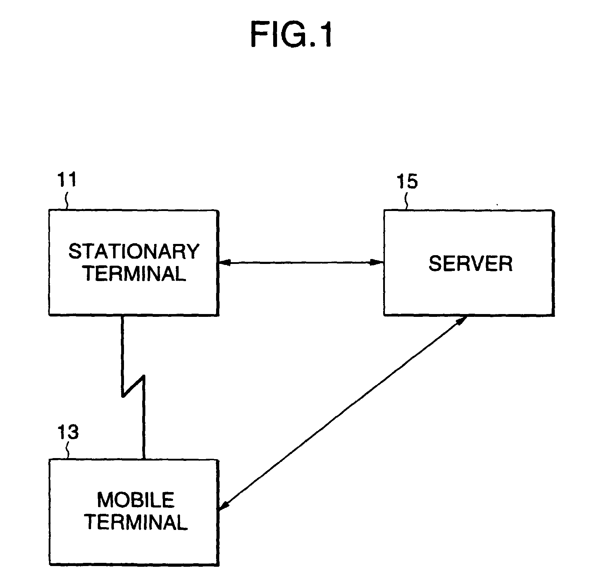

FIG. 1 is a block diagram showing an electronic asset purchasing system according to a first embodiment of an electronic asset utilization system of the present invention. In the present embodiment, the electronic asset utilization system of the present invention is used for the electronic asset purchasing system.

As shown in the drawings, the electronic asset utilization system 10 of the present embodiment comprises a stationary terminal 11, a mobile terminal 13, and a server 15. These elements are connected to a communications network which is constituted of a wireless or wired public telephone line, a leased line, or a satellite communications line.

The stationary terminal 11 corresponds to a personal computer (PC), a set-top box (STB), or an Internet TV set, which are disposed at a user's home, a friend's house, or a hotel room; a point-of-sales (POS) terminal or a vending machine disposed at a ticket shop or a convenience store; or a ticket examination system disposed at the entrance gate of an event hall or a like facility. Here, STB is an add-on device for use with, for example, a television set disposed in the home, and has a capability of decompressing the compressed video data transmitted over the communications network, as well as a simple personal-computer function of making the TV useful for many purposes.

The stationary terminal 11 is connected to the communications network by way of a cable or by means of a radio communications device, such as a personal handy phone system (PHS) or a like system. Here, the stationary terminal 11 is not necessarily connected to the communications network at all times and has communication means capable of communicating electronic assets, such as an electronic prepaid card, an electronic ticket, a pay-per-view broadcast ticket, or a like asset, with the mobile terminal 13 through use of infrared-ray communications (IrDA) or short-range radio communications (for example, Bluetooth) or means capable of reading data from or writing data on a transportable compact memory card or a like device.

The mobile terminal 13 corresponds to a portable cellular phone; a handy terminal such as a personal digital assistance (PDA), or a notebook computer, or a like device; or a portable terminal connected to a communications network by way of a cable or wireless communications. The mobile terminal 13 has communications means capable of conducting communications by means of infrared-ray communications (IrDA) or short-range radio communications (e.g., Bluetooth) or means capable of reading data from or writing data on a portable compact memory card or a like device.

A display section of the stationary terminal 11 for indicating the contents of an electronic asset is greater in area than a display section of the mobile terminal 13. In a word, the display section of the stationary terminal 11 has a large screen, and the display section of the mobile terminal 13 has a small screen. Further, memory or a hard disk drive of the stationary terminal 11 for reserving electronic asset is greater in storage capacity than memory of the mobile terminal 13. Further, the stationary terminal 11 has a low probability of causing failures such as communications errors or a like problem than does the mobile terminal 13 and hence is considered highly reliable.

The stationary terminal 11 disposed in, for example, the home, is shared among family members. In contrast, the stationary terminal disposed in a shop, such as a convenience store or a ticket shop, is shared among a great number of unspecified people. In contrast, the mobile terminal 13 is a piece of personal property.

Further, the server 15 corresponds to a server such as a server for issuing an electronic prepaid card, a server for issuing a pay-per-view broadcast ticket, or a like server. The server 15 is connected to the stationary terminal 11 and the mobile terminal 13 by way of the communications network. The server 15 receives an order pertaining to an electronic asset from the stationary terminal 11 or the mobile terminal 13, downloads an electronic asset to the stationary terminal 11 or the mobile terminal 13, and settles an order pertaining to an electronic asset.

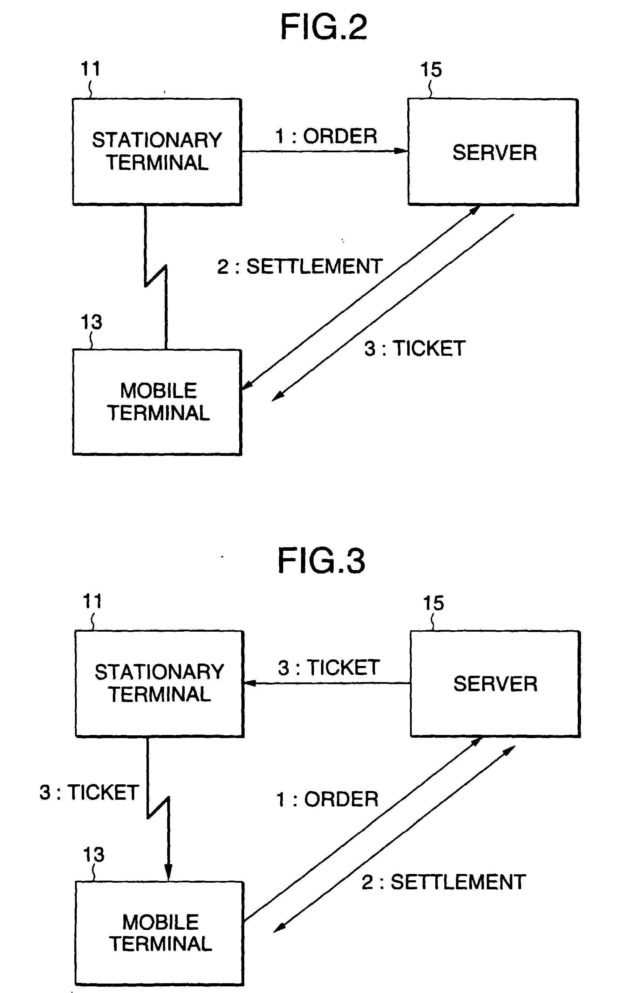

As shown in FIG. 2, in the electronic asset utilization system 10 of the present embodiment, upon receipt of an order for an electronic asset, such as an electronic ticket, from the stationary terminal 11, the server 15 performs settlement of the order with the mobile terminal 13, and downloads to the mobile terminal 13 the ordered electronic asset. Alternatively, as shown in FIG. 3, the server 15 processes an order sent from the mobile terminal 13, settles the order with the mobile terminal 13, and downloads the ordered electronic asset to the stationary terminal 11. The electronic asset, which has been downloaded to the mobile terminal 13, may be transferred to the stationary terminal 11, through use of infrared-ray communications, short-range radio communications, or a portable compact memory card. Conversely, the electronic asset which has been downloaded to the stationary terminal 11 may be transferred to the mobile terminal 13.

### (First Example)

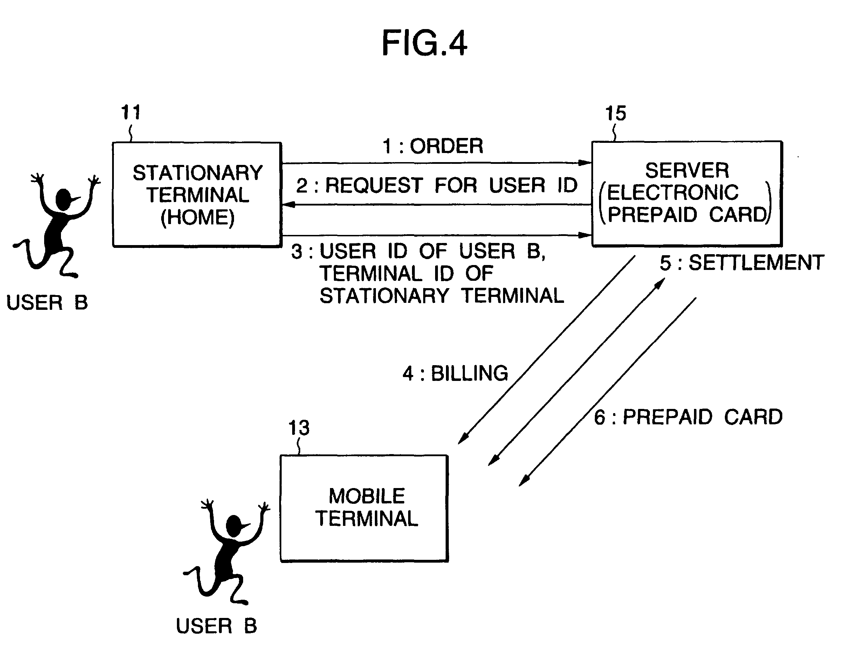

FIG. 4 is a block diagram showing a first example of the electronic asset purchasing system according to the first embodiment of the electronic asset utilization system of the present invention. In the present example, the stationary terminal 11 corresponds to an STB or a PC disposed at the home of the user (hereinafter referred to as "user B"). The server 15 corresponds to a server for issuing an electronic prepaid card. This example is based on the assumption that user B uses both the stationary terminal 11 and the mobile terminal 13.

First, user B places an order with the server 15 for an electronic prepaid card through use of the stationary terminal 11. In response to the order, the server 15 requests identification information relating to user B (hereinafter referred to simply as a "user ID") and an ID of the stationary terminal 11 (hereinafter referred to as a "terminal ID"). User B enters his user ID into the stationary terminal 11, whereupon the user ID and the terminal ID are transmitted to the server 15. The server 15 verifies the thus-received IDs. If a match is determined to exist between the user ID and the terminal ID, and the data that have been registered in a first ID table (not shown) in advance, the server 15 acquires, from the first ID table, the phone number of the mobile terminal 13 owned by user B and requires the mobile terminal 13 to submit payment for the electronic prepaid card. After user B has settled the charge by the server 15 in response to the request for payment, the server 15 downloads the electronic prepaid card to the mobile terminal 13.

As mentioned above, in the present example, the user can purchase an electronic prepaid card by way of the communications network, thus eliminating the trouble of going out for the purpose of purchasing a prepaid card, which has been required in the existing electronic asset purchasing system. Further, since the user can place an order for an electronic prepaid card at any time, an electronic prepaid card valued at a required amount can be purchased whenever necessary.

At the time of the server 15 requiring the mobile terminal 13 to submit payment, data pertaining to the electronic prepaid card that has been ordered by user B may be transmitted to the mobile terminal 13 so that user B can verify the order. The charge may be settled after user B has ascertained the data displayed on the mobile terminal 13. Further, the electronic prepaid card may be downloaded at a time other than immediately after the payment has been made and stored in the server 15. The electronic prepaid card may be downloaded to the mobile terminal 13 on a time and date desired by user B. In this case, the storage capacity of the memory of the mobile terminal can be saved until the electronic prepaid card is received. Even if user B has lost his mobile terminal 13 before receiving an electronic prepaid card, the electronic prepaid card that user B has purchased still remains stored in the server 15, and therefore damage resulting from loss of the mobile terminal 13 may be reduced.

### (Second Example)

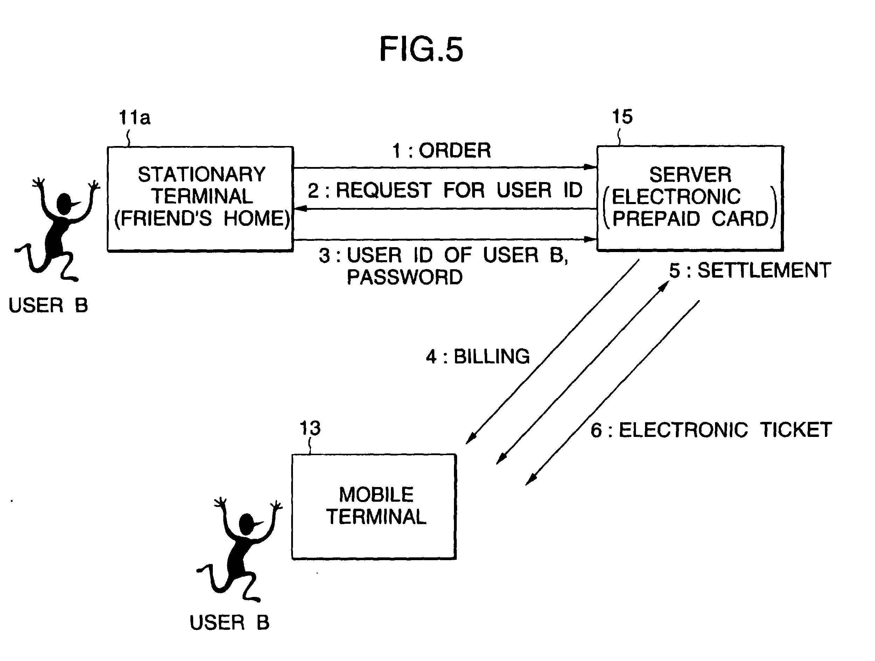

FIG. 5 is a block diagram showing a second example of the electronic asset purchasing system according to the first embodiment of the electronic asset utilization system of the present invention. In the present example, the stationary terminal (hereinafter referred to as "stationary terminal 11a") is owned by another person, such as a friend of user B. The present example is based on the assumption that user B uses the stationary terminal 11a and the mobile terminal 13. The server 15 of the present example issues an electronic ticket.

First, user B places an order with the server 15 for an electronic ticket through use of the stationary terminal 11a owned by his friend. In response to the order, the server 15 requests a user ID and a password. When user B sends his user ID and password to the server 15 by way of the stationary terminal 11a, the server 15 verifies the user ID and the password. If a match is determined to exist between the user ID and the password, and the data that have been registered in a second ID table (not shown) in advance, the server 15 acquires, from the second ID table, the phone number of the mobile terminal 13 owned by user B and requires the mobile terminal 13 to submit payment for the electronic ticket. After user B has settled the charge billed by the server 15, the server 15 downloads the electronic ticket to the mobile terminal 13.

As a result, in the present example, user B places an order for an electronic ticket not by way of the his stationary terminal 11 but by way of the stationary terminal 11a disposed at the home of the friend of user B. Payment for the order is settled by way of the mobile terminal 13 of user B, and the thus-ordered electronic ticket can be acquired by way of the communications network. As mentioned above, user B can send an electronic ticket to user D, and hence the electronic asset utilization system of the present invention can be utilized for sending a gift to a friend or a lover. Further, since an electronic ticket can be transmitted by way of a communications network, the user can freely send a gift to a friend residing in a distant location. Since the server 15 verifies a password as well as a user ID, to thereby identify the user, there can be prevented a crime, which could otherwise be committed by a person who pretends to be user B so as to commit fraud.

### (Third Example)

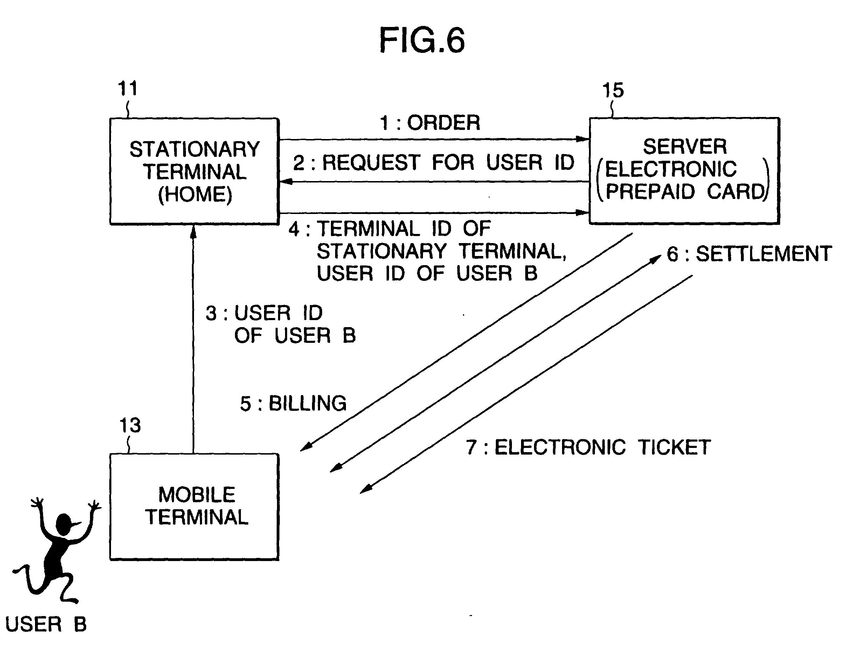

FIG. 6 is a block diagram showing a third example of the electronic asset purchasing system according to the first embodiment of the electronic asset utilization system of the present invention. Although the third example is substantially identical with the first example, a difference between the examples lies in that the mobile terminal 13 has a transmission capability of transmitting data, such as a user ID, to the stationary terminal 11, and in that the stationary terminal 11 has a receiving capability of receiving the data output from the mobile terminal 13. In the present example, when the server 15 requests a user ID, user B does not enter his user ID into the stationary terminal 11 but transmits the user ID to the stationary terminal 11, which awaits entry of an user ID, by means of operating the mobile terminal 13. At this time, only the ID of user B may be transmitted.

As mentioned above, in the present example, the user ID can be sent to the stationary terminal 11 by means of operation of the mobile terminal 13, thereby saving user B the trouble of entering his user ID by way of input means, such as a keyboard. Further, there is no necessity for entering a user ID directly, thus preventing occurrence of an entry failure.

### (Fourth Example)

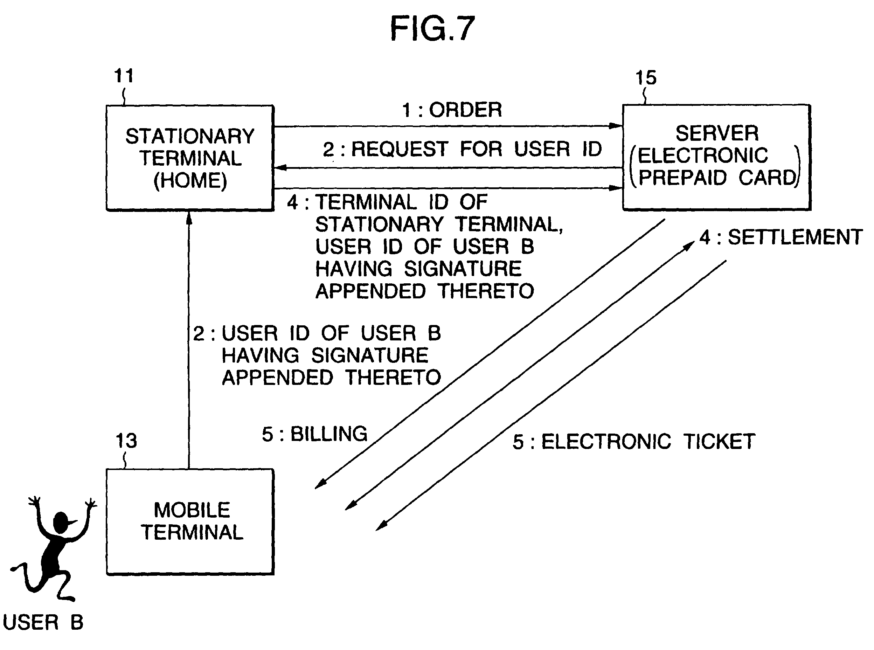

FIG. 7 is a block diagram showing a fourth example of the electronic asset purchasing system according to the first embodiment of the electronic asset utilization system of the present invention. Although the fourth example is substantially identical with the third example (see FIG. 6), a difference between the examples lies in that in the fourth example an electronic signature is appended to a user ID to be transmitted from the mobile terminal 13 to the stationary terminal 11 and the user ID is further transmitted to the server 15 from the stationary terminal 11.

In the present example, since a user ID is transmitted to the server 15 while an electronic signature is appended thereto, the server 15 can determine whether or not the user ID has been tampered with during the course of, for example, transmission through a communications network. Therefore, there can be prevented a crime, which could otherwise be committed by a person who pretends to be user B in order to commit fraud.

### (Fifth Example)

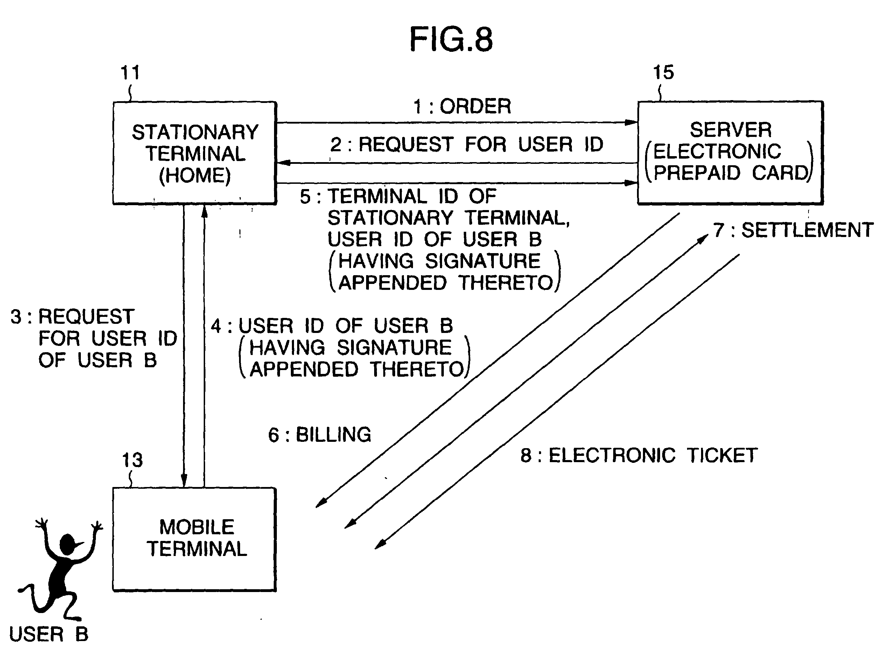

FIG. 8 is a block diagram showing a fifth example of the electronic asset purchasing system according to the first embodiment of the electronic asset utilization system of the present invention. Although the fifth example is substantially identical with the fourth example (see FIG. 7), a difference between the examples lies in that in the fifth embodiment the stationary terminal 11 and the mobile terminal 13 have the capability of establishing bi-directional communications.

In the fourth example, when the server 15 requests a user ID, user B operates the mobile terminal 13 to transmit to the stationary terminal 11 a user ID to which an electronic signature is appended. The present example differs from the fourth example in that when the server 15 requests a user ID, the stationary terminal 11 transmits a user ID transmission request to the mobile terminal 13. In response to the request, the mobile terminal 13 automatically transmits a user ID to which an electronic signature is appended.

In the present example, as mentioned above, in response to the user ID transmission request output from the stationary terminal 11, the mobile terminal 13 automatically enters a user ID transmission mode. Accordingly, there can be eliminated a trouble of switching a mode in order to transmit a user ID to the stationary terminal 11. Further, since the user ID can be automatically transmitted, the user can be avoid the trouble of entering his ID.

### (Sixth Example)

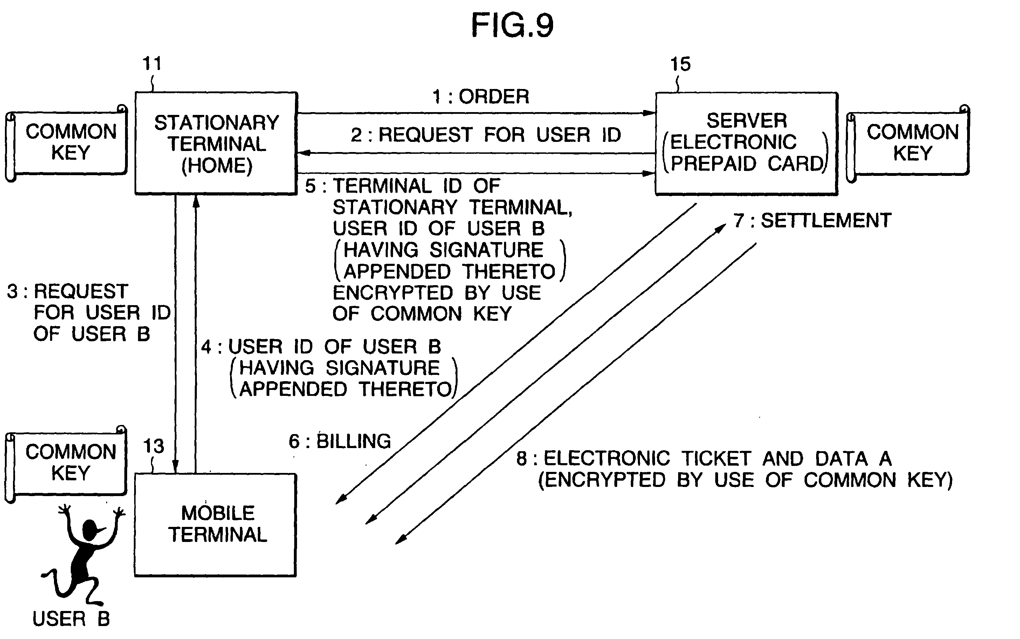

FIG. 9 is a block diagram showing a sixth example of the electronic asset purchasing system according to the first embodiment of the electronic asset utilization system of the present invention. Although the sixth example is substantially identical with the fifth example (see FIG. 8), a difference between the examples lies in that in the sixth example the mobile terminal 13 has the function of remotely controlling the stationary terminal 11, and in that the stationary terminal 11 and the mobile terminal 13 share a common key.

In the present example, the mobile terminal 13 can be used as a remote controller for controlling the stationary terminal 11. While the mobile terminal 13 is brought into a remote control mode, the user performs browsing operations by way of the stationary terminal 11. Upon receipt of a user ID request from the stationary terminal 11, the mobile terminal 13 is switched to a user ID entry mode and transmits to the stationary terminal 11 a user ID to which an electronic signature is appended. The stationary terminal 11 also transmits, as data to be transmitted to the server 15, data which are encrypted by use of a common key and pertain to a service point offered by the provider or the broadcast service provider to which user B subscribes. In the present example, only when a transaction between the mobile terminal 13 and the server 15 is settled, the server 15 transmits, to the mobile terminal 13, the data that have been encrypted with the common key, along with an electronic ticket.

Accordingly, in the present example, user B can decrypt the data, which have been transmitted from the server 15 along with an electronic ticket, through use of the common key stored in the mobile terminal 13. By means of encryption through use of a common key, secure data can be transmitted to the server 15 only when the stationary terminal 11 submits payment to the server 15.

### (Seventh Example)

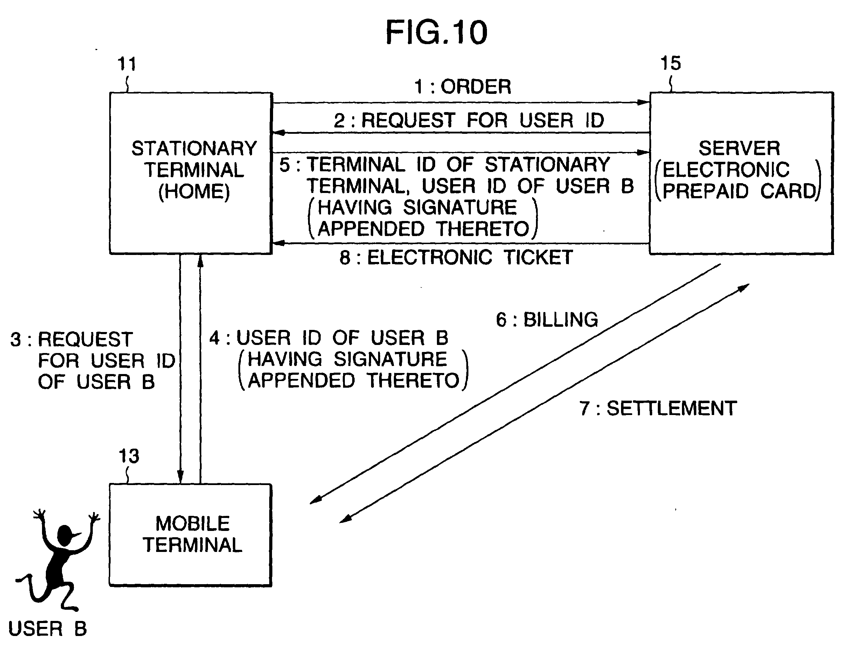

FIG. 10 is a block diagram showing a seventh example of the electronic asset purchasing system according to the first embodiment of the electronic asset utilization system of the present invention. Although the seventh example is substantially identical with the fifth example (see FIG. 8), a difference between the examples lies in that in the seventh example the electronic ticket (a pay-per-view broadcast ticket may also be used) is transmitted not to the mobile terminal 13 but to the stationary terminal 11. As in the case of the fifth example, user B places an order with the stationary terminal 11 for an electronic ticket and submits payment for the order between the mobile terminal 13 and the server 15.

Consequently, in the present example, even in a case where the stationary terminal 11 is shared among a plurality of persons, a user can place an order with the stationary terminal 11 for an electronic ticket and submits payment for the thus-ordered electronic ticket by way of the mobile terminal 13 of a specific person. Since memory or a hard disk drive unit of the stationary terminal 11 is larger in storage capacity than the memory of the mobile terminal 13, user B can utilize the electronic asset utilization system without involvement of a concern about available memory space required for storing the purchased electronic ticket.

### (Eighth Example)

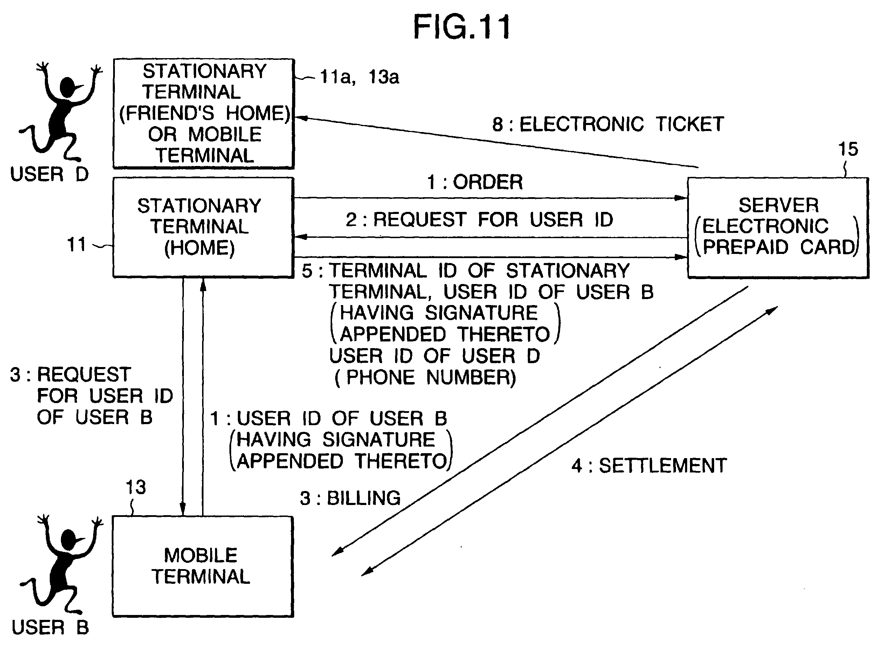

FIG. 11 is a block diagram showing an eighth example of the electronic asset purchasing system according to the first embodiment of the electronic asset utilization system of the present invention. Although the eighth example is substantially identical with the fifth example (see FIG. 8), a difference between the examples lies in that in the eighth example an electronic ticket (a pay-per-view broadcast ticket may also be used) is transmitted not to the mobile terminal 13 but to the stationary terminal 11a or the mobile terminal 13a owned by a friend of user B who has ordered the electronic ticket (hereinafter referred to as "user D"). Further, the eighth example differs from the fifth example in that the terminal ID of the stationary terminal 11a, the user ID of user D, the phone number of the mobile terminal 13a, or the phone number of the stationary terminal 11a, whichever is to receive an electronic ticket, is transmitted at the time of an ID being transmitted to the server 15 from the stationary terminal 11 used by user B. In a case where the user ID of user D has already been registered in the server 15, the terminal ID of the stationary terminal 11a or the user ID of user D is specified. In contrast, in a case where the user ID of user D has not been registered in the server 15, the phone number of the mobile terminal 13a or the phone number of the stationary terminal 11a is specified.

As mentioned above, in the present example, user B can transmit an electronic ticket to user D by way of the communications network, and hence a gift can be sent to a friend or a lover by utilization of the electronic asset utilization system. Further, since an electronic ticket can be sent by way of the communications network, the user can freely send a gift of an electronic ticket to a friend residing in a distant location. User B can designate a plurality of destinations for electronic tickets and hence can send an electronic ticket to each of a plurality of persons. In a case where the user ID of user D and the phone number of the mobile terminal 13a are registered in the first ID table, user B may send the user ID of user D in lieu of the phone number of the stationary terminal 11a. Alternatively, user B may send the name of user D in conjunction with the phone number of the mobile terminal 13a.

### (Ninth Example)

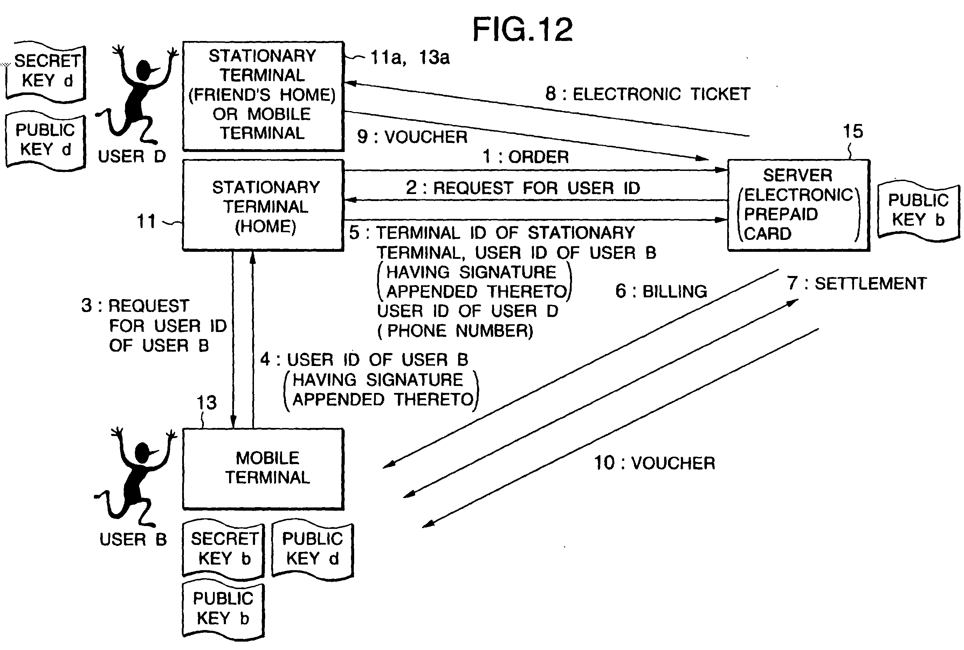

FIG. 12 is a block diagram showing a ninth example of the electronic asset purchasing system according to the first embodiment of the electronic asset utilization system of the present invention. Although the ninth example is substantially identical with the eighth example (see FIG. 11), a difference between the examples lies in that in the ninth example user D, who has received an electronic ticket (a pay-per-view broadcast ticket may also be used), sends an electronic ticket voucher (hereinafter referred to simply as a "voucher") to which the signature of user D is appended, and in that the server 15 transmits the voucher to user B who has placed the order for the electronic ticket. The voucher includes data pertaining to the details of the electronic ticket received by user D, the date when the electronic ticket is received, the server which has transmitted the electronic ticket, and information about the receiver.

In a case where a public key "b" of user B is transmitted to user D and where user D transmits the voucher to user B after having encrypted the voucher through use of the public key "b," user B receives the voucher by way of the server 15 and can decrypt the voucher through use of a secret key "b," to thereby verify the voucher. Here, so long as user D has the public key "b" of user B, there is no necessity for transmitting the public key "b" in conjunction with an electronic ticket. In the present example, a voucher is transmitted to the mobile terminal 13 of user B. However, a voucher may be transmitted to the stationary terminal 11 of user B or to both the stationary terminal 11 and the mobile terminal 13 of the same.

In the present example, user B, who has placed an order for an electronic ticket such that the ticket is to be transmitted to user D, can reliably ascertain whether or not user D has received a desired electronic ticket. Further, an electronic signature is appended to the voucher or the voucher is encrypted through use of the public key "b" of user B, and hence there can be provided an electronic asset system having a high degree of reliability and secrecy.

### (Tenth Example)

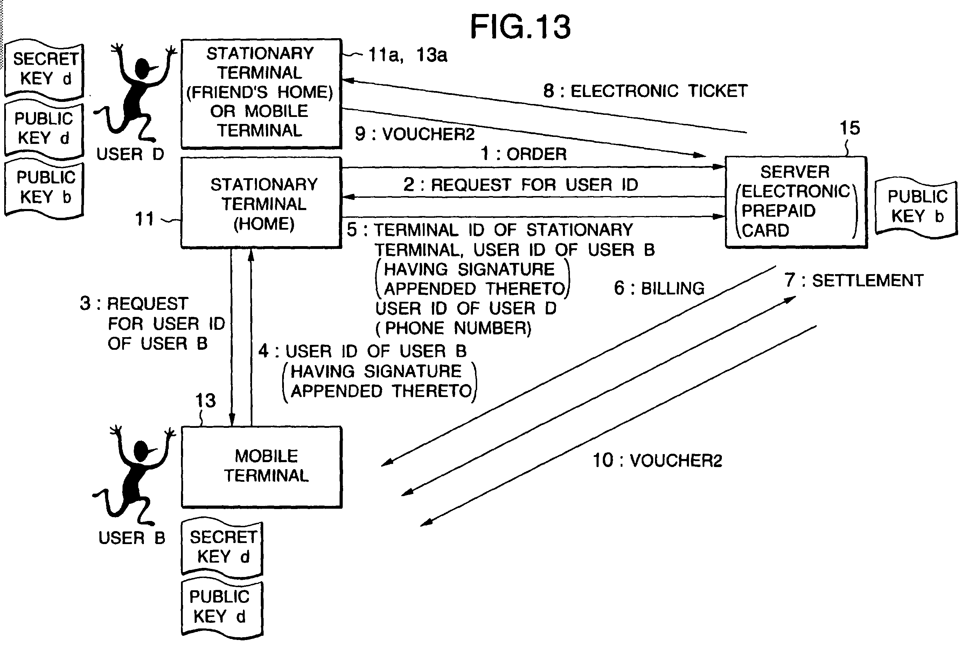

FIG. 13 is a block diagram showing a tenth example of the electronic asset purchasing system according to the first embodiment of the electronic asset utilization system of the present invention. Although the tenth example is substantially identical with the ninth example (see FIG. 12), a difference between the examples lies in that in the tenth example a portion of a voucher to be transmitted from user D; i.e., information about a message to be sent from user D, is transmitted to user B after having been encrypted through use of the public key "b" of user B. An electronic signature may be appended to the message. Consequently, in the present example, user D can send a message to user B in conjunction with a voucher while the content of the message remains confidential.

### (Eleventh Example)

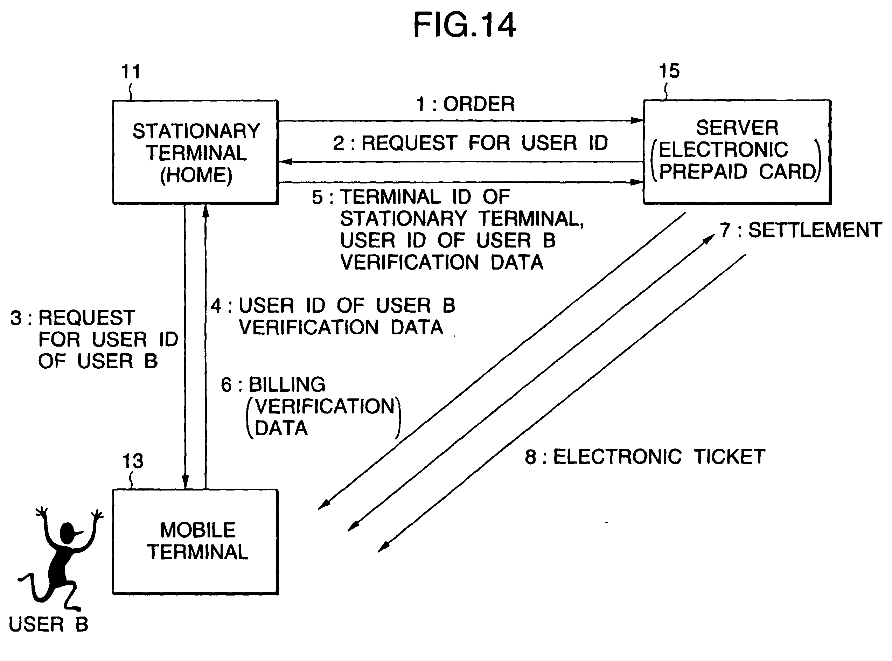

FIG. 14 is a block diagram showing an eleventh example of the electronic asset purchasing system according to the first embodiment of the electronic asset utilization system of the present invention. Although the eleventh example is substantially identical with the fifth example (see FIG. 8), a difference between the examples lies in that in the eleventh example data for verification purposes (hereinafter referred to as "verification data"), such as a number, are transmitted when the user ID of user B is transmitted from the mobile terminal 13 to the stationary terminal 11, and in that the verification data are transmitted when the server 15 send a bill to the mobile terminal 13. Accordingly, in the present example, user B can check the validity of the bill by comparing the transmitted verification data with the received verification data.

### (Twelfth Example)

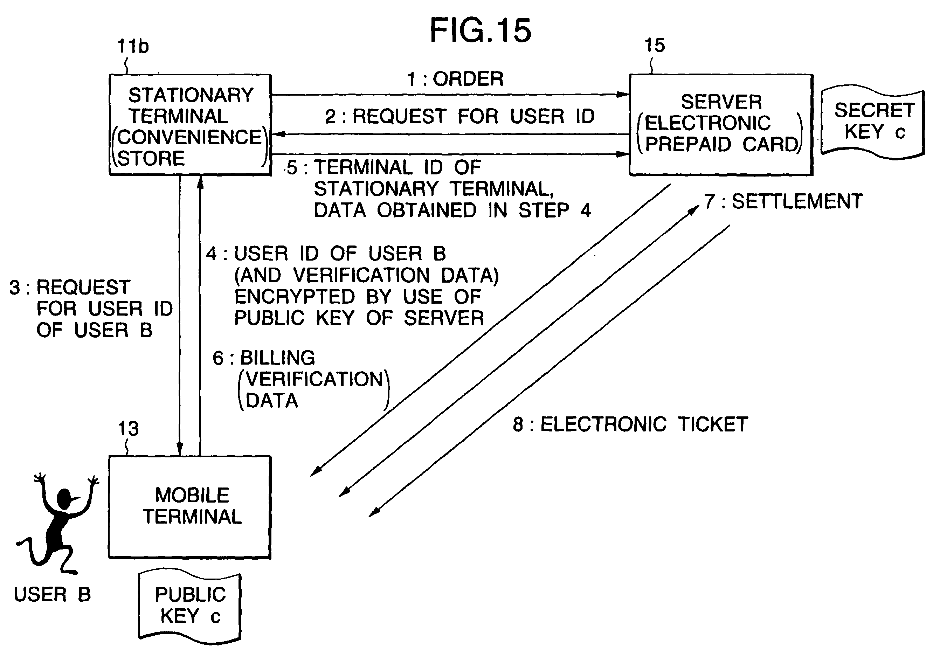

FIG. 15 is a block diagram showing a twelfth example of the electronic asset purchasing system according to the first embodiment of the electronic asset utilization system of the present invention. In the present example, the stationary terminal corresponds to a point-of-sale (POS) terminal (hereinafter referred to as a "stationary terminal 11b") disposed in a convenience store, and the mobile terminal 13 is the property of the user (user B). The present example is based on the assumption that user B uses both the stationary terminal 11 and the mobile terminal 13.

Although the twelfth example is substantially identical with the fifth example (see FIG. 8), a difference between the examples lies in that in the twelfth example the user ID of user B to be transmitted from the mobile terminal 13 to the stationary terminal 11b is encrypted through use of a public key "c" of the server 15. Therefore, the present example can prevent falsification of the user ID, which could otherwise be effected by way of the stationary terminal 11b. Further, the user ID cannot be ascertained by way of the stationary terminal 11b unless the secret key "c" of the server 15 is obtained. Hence, there can be implemented an electronic asset utilization system which has a high degree of security and can prevent unauthorized use of the user ID.

Alternatively, the verification data used in the eleventh example may be transmitted after encryption when the user ID of user B is transmitted to the stationary terminal 11b. In a case where user B does not have the public key "c" of the server 15, the public key "c" may be transmitted to the mobile terminal 13 by way of the stationary terminal 11b when the server 15 requests the server ID.

### (Thirteenth Example)

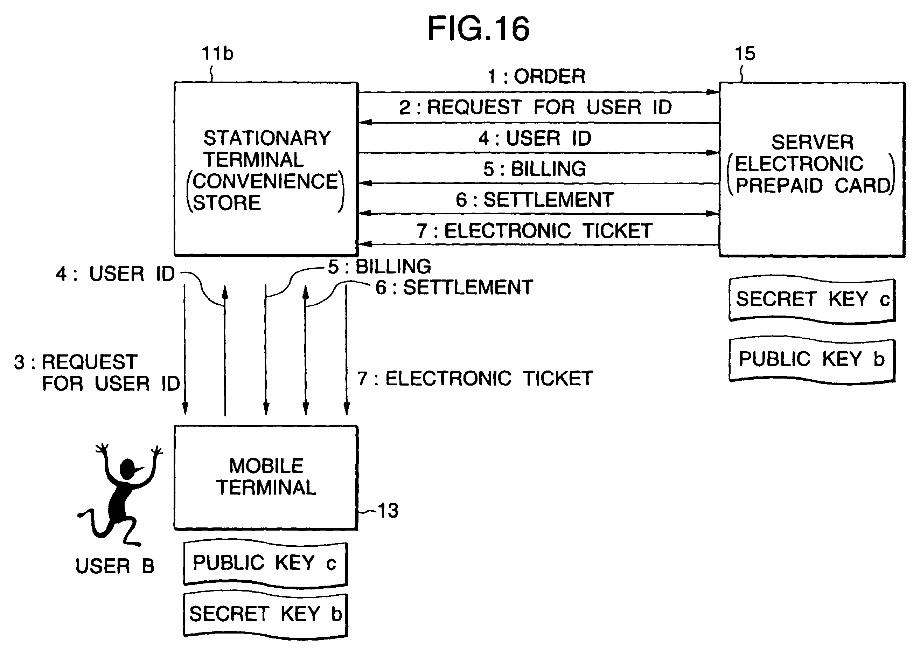

FIG. 16 is a block diagram showing a thirteenth example of the electronic asset purchasing system according to the first embodiment of the electronic asset utilization system of the present invention. In the present example, the stationary terminal 11b is disposed in a convenience store or a like location, and the mobile terminal 13 is the property of the user (user B). The present example is based on the assumption that user B will use both the stationary terminal 11b and the mobile terminal 13. In the present example, communication between the mobile terminal 13 and the server 15 inevitably involves mediation of the stationary terminal 11b.

First, through use of the stationary terminal 11b, user B places an order with the server 15 for an electronic ticket. In response to the order, the server 15 requests the mobile terminal 13 to send the user ID of user B. When user B sends to the server 15 the user ID, which has been encrypted through use of the public key "c" of the server 15, the server 15 decrypts the user ID through use of a secret key "c" of the server 15. Next, the server 15 sends a bill to the mobile terminal 13, and user B settles the bill issued by the server 15. At this time, the data to be transmitted to the server 15 from the mobile terminal 13 are encrypted through use of the public key "c" of the server 15. In contrast, the data to be transmitted from the server 15 to the mobile terminal 13 are encrypted through use of the public key "b" of user B. After settlement of the bill has been completed, the server 15 downloads an electronic asset from the server 15. Here, a time stamp may be transmitted along with the user ID when the user ID is transmitted from the mobile terminal 13 to the server 15. In a case where user B does not have the public key "c" of the server 15, it is desired that the public key "c" be transmitted to the mobile terminal 13 when the server 15 requests transmission of a user ID.

As mentioned above, in the present example, the data to be transmitted from the mobile terminal 13 to the server 15 by way of the stationary terminal 11b are encrypted through use of the public key "c" of the server 15. In contrast, the data to be transmitted from the server 15 to the mobile terminal 13 by way of the stationary terminal 11b are encrypted through use of the public key "b" of user B. Even if the data are read from the stationary terminal 11b, the data are encrypted, and hence usable information cannot be extracted from the data. Thus, there can be provided an electronic asset utilization system having a high degree of reliability. Further, communication between the stationary terminal 11b and the mobile terminal 13 are established through use of local radio communication which does not incur any costs, such as infrared-ray communications (IrDA), short-range radio communications (Bluetooth), or like communications. Hence, user B can conduct communication with the server 15 with little concern for communications fees.

### (Fourteenth Example)

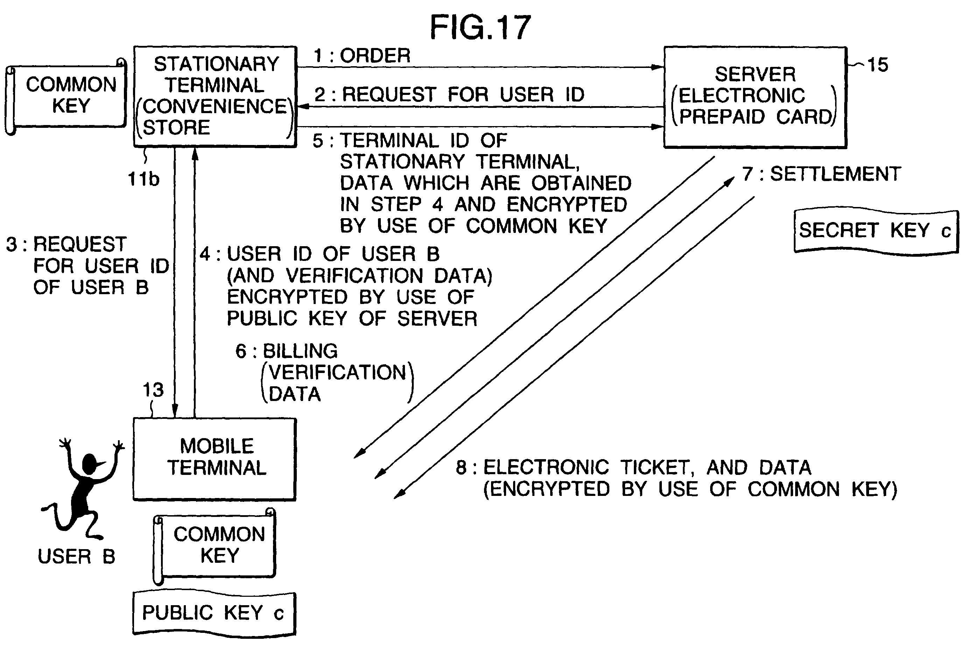

FIG. 17 is a block diagram showing a fourteenth example of the electronic asset purchasing system according to the first embodiment of the electronic asset utilization system of the present invention. The present example corresponds to a combination of the electronic asset utilization systems embodied in the sixth example (see FIG.9), the eleventh example (see FIG. 14), and the twelfth example (see FIG. 15). When the common key is transmitted to the mobile terminal 13 from the server 15 by way of the stationary terminal 11 along with the request for a user ID, user B transmits to the stationary terminal 11b, through use of the mobile terminal 13, the user ID and the verification data, which have been encrypted through use of the public key "c" of the server 15. The stationary terminal 11b transmits, to the server 15, the data pertaining to a service point of the convenience store which have been encrypted through use of the common key, along with the user ID and the verification data. The mobile terminal 13 compares for verification the verification data transmitted when the server 15 sends a bill with the verification data transmitted to the stationary terminal 11 along with the user ID. In a case where the bill is properly settled, the server 15 transmits, to the mobile terminal 13, the data encrypted through use of the common key along with an electronic ticket. When the electronic ticket and the data are transmitted to the mobile terminal 13, user B decrypts the data through use of the common key stored in the mobile terminal 13. Only in a case where the bill is settled, the stationary terminal 11b of the convenience store can transmit from the server 15 to the mobile terminal 13 data, such as a coupon usable only in the convenience store. Since payment is submitted without involvement of the stationary terminal 11b, there can be eliminated a necessity for using the stationary terminal 11b, so long as user B transmits the user ID and the verification data to the stationary terminal 11b. Consequently, loads exerted on the server 15 can be distributed.

### (Fifteenth Example)

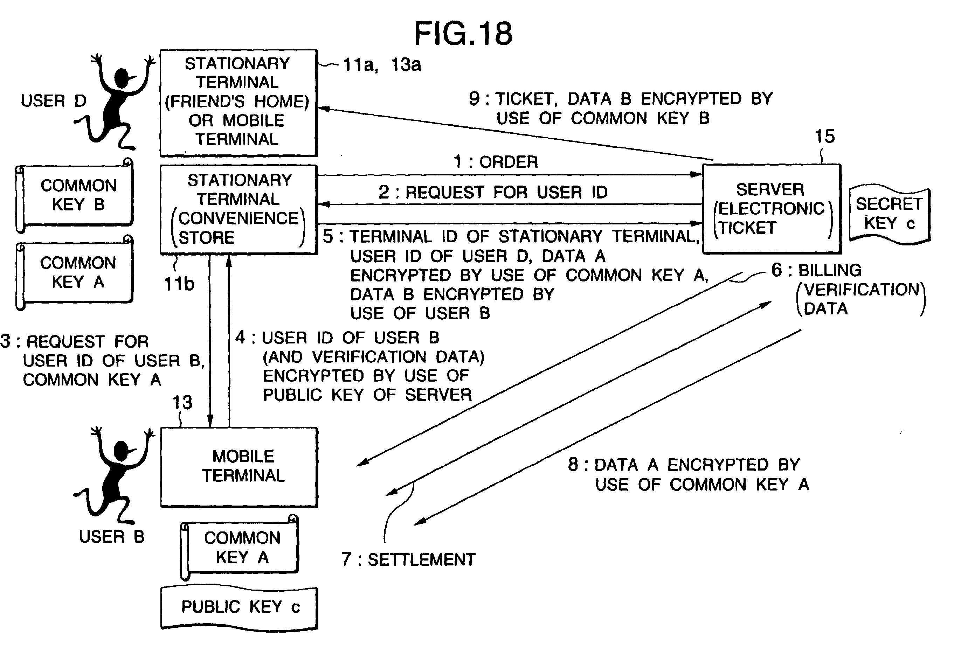

FIG. 18 is a block diagram showing a fifteenth example of the electronic asset purchasing system according to the first embodiment of the electronic asset utilization system of the present invention. The present example corresponds to a combination of the electronic asset utilization systems embodied in the eighth example (see FIG. 11) and the fourteenth example (see FIG. 17). The stationary terminal 11b transmits, to the server 15, secret data B destined for user D which are encrypted through use of a common key B and secret data A destined for user B which are encrypted through use of a common key A. When a bill is settled normally, the server 15 transmits to the mobile terminal 13 the data A, which are encrypted through use of the common key A. Further, the server 15 transmits, to the stationary terminal 11a or the mobile terminal 13a owned by user D, the data B, which are encrypted through use of the common key B.

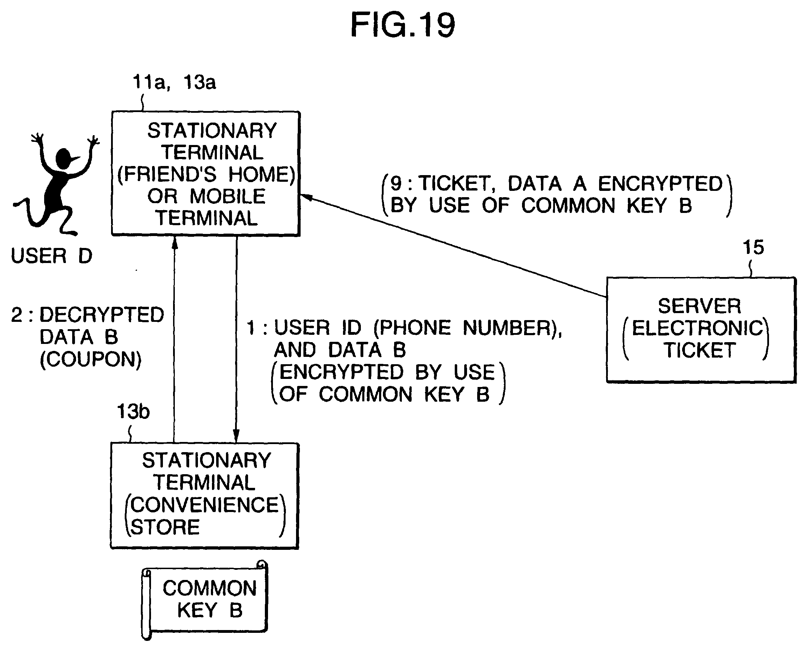

As shown in FIG. 19, user D brings his mobile terminal 13a (or a compact memory card) having the encrypted data B stored therein to a shop, such as a convenience store, where the stationary terminal 11a is disposed and which is assigned a common key B. Either the user ID of user D or the phone number of the mobile terminal 13a of user D is input to the stationary terminal 11a in conjunction with the encrypted data B. The stationary terminal 11 decrypts the data B and transmits the thus-decrypted data B to the mobile terminal 13a assigned the user ID. In a case where the data B correspond to an electronic ticket per se, the stationary terminal 11a transmits the thus-decrypted data B, or an electronic ticket, to user D. Further, in a case where user D desires an electronic ticket in the form of a coupon (i.e., paper), the stationary terminal 11a can output the data B in the form of a coupon.

In the present example, data, such as a coupon or a like ticket usable in the shop where the stationary terminal 11b is disposed, can be transmitted to user B who has placed the order for the electronic ticket, as well as to user D who has received the electronic ticket, without the server 15 being aware of the contents of the data. Further, the secret data D may also be encrypted through use of the public key "d" of user D. In this case, the stationary terminal 11b must have the public key "d" of user D or user B must have the public key "d" of user D, and the public key "d" must be transmitted to the stationary terminal 11b. The common key A may be identical with the common key B.

### (Sixteenth Example)

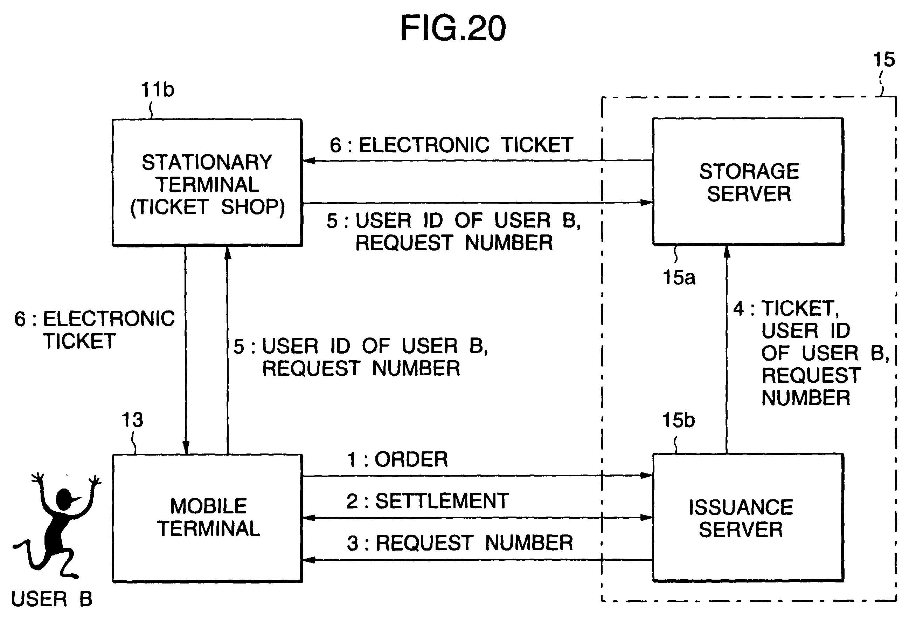

FIG. 20 is a block diagram showing a sixteenth example of the electronic asset purchasing system according to the first embodiment of the electronic asset utilization system of the present invention. In the present example, the mobile terminal 13 is property of the user (user B), and the stationary terminal 11b corresponds to a POS terminal disposed in a ticket shop or a convenience store. The present example is based on the assumption that user B uses the mobile terminal 13. Further, the server 15 comprises a server 15a for issuing an electronic ticket (hereinafter referred to simply as a "ticket issue server") and a server 15b for storing an ordered electronic ticket (hereinafter referred to simply as a "storage server"). The server 15 and the stationary terminal 11b are administered by a single administrator.

First, user B accesses the ticket issue server 15a in the field through use of the mobile terminal 13, thereby placing an order for a desired electronic ticket. In response to the order, the ticket issue server 15a settles charge for the order of user B. In a case where the settlement of the charge is performed properly, the ticket issue server 15a transmits, to the mobile terminal 13 of user B, a request number for specifying the ordered electronic ticket. Further, the ticket issue server 15a transmits, to the storage server 15b, an electronic ticket, the user ID of user B, and the request number.

Next, user B brings, to the shop where the stationary terminal 11b is disposed, his mobile terminal 13 having the request number stored therein. The user ID of user B and the request number are transmitted to the stationary terminal 11b, to thereby request downloading of the ordered electronic ticket. When the stationary terminal 11b transmits the user ID and the request number to the storage server 15b, the storage server 15b specifies the electronic ticket requested by user B, through use of the user ID, the request number, and a fourth ID table (not shown) and downloads the thus-specified electronic ticket to the mobile terminal 13 by way of the stationary terminal 11b.

In the present example, the electronic ticket can be stored in the storage server 15b until user B requires the ticket, and hence user B can download the electronic ticket immediately before commencement of an event, thereby minimizing the chance of losing the ticket. Even in case user B loses his mobile terminal 13, user B can acquire his electronic ticket by means of another method. Further, the storage capacity of the memory of the server 13 can be saved. In the present embodiment, the server 15 is constituted of the ticket issue server 15a and the storage server 15b. The server 15 may be formed from a single server. Further, a request number may be encrypted through use of a public key of the storage server 15b.

### (Seventeenth Example)

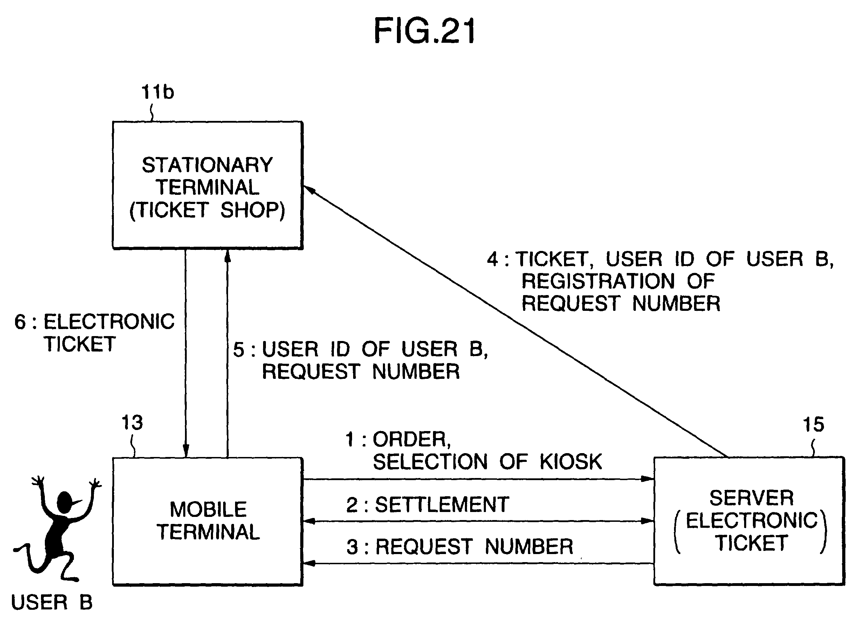

FIG. 21 is a block diagram showing a seventeenth example of the electronic asset purchasing system according to the first embodiment of the electronic asset utilization system of the present invention. In the present example, the mobile terminal 13 is a property of the user (user B), and the stationary terminal 11b is disposed in a ticket shop or a convenience store. The server 15 corresponds to a ticket issue server for issuing an electronic ticket, and the present example is based on the assumption that user B uses the mobile terminal 13. Further, the server 15 and the stationary terminal 11b are managed by a single service provider.

First, user B accesses the server 15 for issuing an electronic ticket, through use of the mobile terminal 13, thereby placing an order for a desired electronic ticket. At this time, a shop ID for specifying a shop at which the electronic ticket is to be received and the user ID of user B are also transmitted to the server 15. In response to the order, the server 15 settles a charge for the order placed through the mobile terminal 13. After completion of the settlement, the server 15 sends a request number to the mobile terminal 13. Further, the request number, the user ID of user B, and an electronic asset are transmitted to the stationary terminal 11b disposed in the shop specified by user B. The data sets transmitted to the stationary terminal 11b; i.e., the request number, the user ID, and the electronic asset, are registered in a fifth ID table (not shown).

Next, user B brings his mobile terminal 13 having the request number stored therein to the shop designated by user B. The user ID of user B and the request number are sent to the stationary terminal 11b, thus requesting downloading of the ordered electronic ticket. Through use of the fifth ID table, the stationary terminal 11b verifies the user ID and the request number. If these data sets are determined to match the information, which has been registered in the fifth ID table in advance, the electronic ticket requested by user B is specified, and the thus-specified electronic ticket is downloaded to the mobile terminal 13.

Even in the present example, as in the case of the sixteenth example, the electronic ticket ordered by user B can be stored in the stationary terminal 11b until user B desires it, thus minimizing a chance of losing the ticket. Further, even in case user B loses his mobile terminal 13, user B can receive his electronic ticket by means of another method. The storage capacity of the memory of the mobile terminal 13 can also be saved. In the present example, user B can select from a plurality of stationary terminals 11b a desired stationary terminal 11b where user B receives an electronic asset. In the present embodiment, since the electronic ticket is stored in the stationary terminal 11b, the electronic ticket can be downloaded to the mobile terminal 13 within a time shorter than that required for downloading the electronic ticket in the case of the sixteenth example.

In a modification of the present example, the public key "b" of user B may be transmitted to the server 15 when user B places an order with the server 15, and the server 15 may encrypt an electronic ticket to be sent to the stationary terminal 11b, through use of the public key "b" of user B. In this case, the encrypted electronic ticket is decrypted by only the mobile terminal 13 of user B, so that the contents of the electronic ticket are prevented from being known by way of the stationary terminal 11b. Further, there can be prevented falsification or theft of an electronic thicket, which could otherwise be effected by way of the stationary terminal 11b.

### (Eighteenth Example)

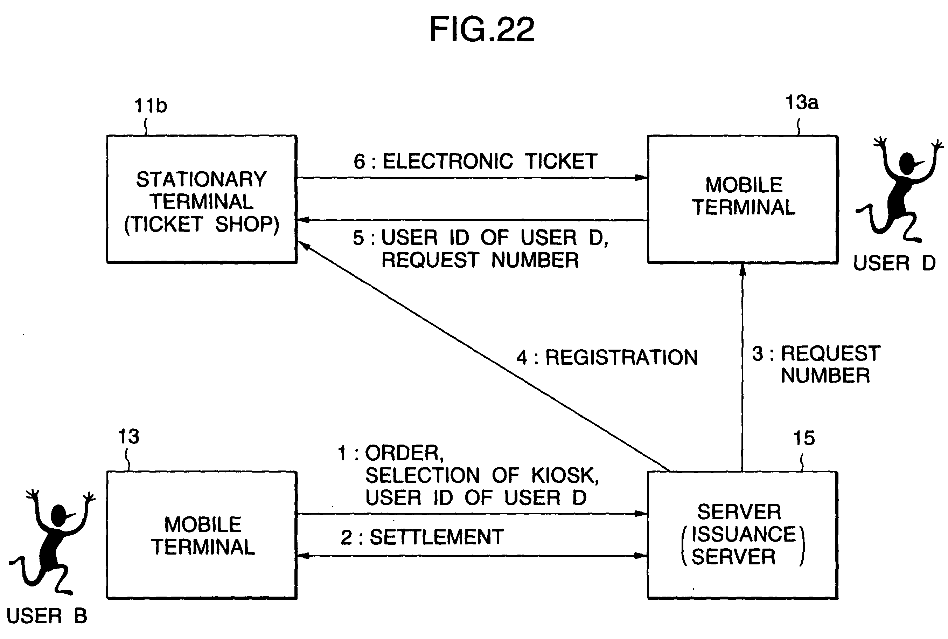

FIG. 22 is a block diagram showing an eighteenth example of the electronic asset purchasing system according to the first embodiment of the electronic asset utilization system of the present invention. As distinct from the seventeenth example (see FIG. 21) in which user B, who has placed an order for an electronic ticket, receives the electronic ticket, the present example is directed to a case where an electronic ticket is sent to user D, who is a friend of user B. In the present example, user B owns the mobile terminal 13, and user D owns the mobile terminal 13a.

First, user B accesses the server 15 for issuing an electronic ticket, through use of the mobile terminal 13, thereby placing an order for a desired electronic ticket. At this time, as in the case of the seventeenth example (see FIG. 21), a shop ID for specifying a shop at which the electronic ticket is to be received and user ID of user B are also transmitted to the server 15. Particularly in the present example, the user ID of user D is transmitted to the server 15. Alternatively, the user ID may correspond to the phone number of the mobile terminal 13a. After the server 15 has completed settling a charge billed to the mobile terminal 13, the server 15 sends a request number to the mobile terminal 13 owned by user D. The user ID of user D, the request number, and an electronic asset are transmitted to the stationary terminal 11b disposed in the shop specified by user B. The data sets transmitted to the stationary terminal 11b; i.e., the request number, the user ID, and the electronic asset, are registered in a sixth ID table (not shown).

User D, who has received the request number, brings his mobile terminal 13a to the shop designated by user B. The user ID of user D and the request number are sent to the stationary terminal 11b disposed in the shop. The stationary terminal 11b verifies the user ID and the request number. If these data sets are determined to match the information which has been registered in the sixth ID table in advance, the electronic ticket requested by user B is specified, and the thus-specified electronic ticket is downloaded to the mobile terminal 13a.

Accordingly, in the present example, a gift of an electronic ticket can be readily given to a friend through use of the mobile terminal 13, thus providing an electronic asset utilization system providing a high degree of convenience. Further, since a shop convenient to user D can be specified, the system is useful for sending an electronic ticket to a friend who resides in a distant location. In the present example, the stationary terminal 11b is disposed at a ticket shop or a store, such as a convenience store. The location of the stationary terminal is not limited to such locations. The stationary terminal 11b may be disposed at the entrance of an event hall. In this case, the user can download the electronic ticket immediately before entering the event hall, thereby reducing a much lesser extent the chance of losing the ticket to.

In a case where user B has already acquired the electronic ticket, user B may send the electronic ticket directly to the mobile terminal 13a owned by user D with or without involvement of the server 15. The electronic ticket may be transmitted directly to the mobile terminal 13a of user D. Alternatively, when the electronic ticket is transmitted by way of the server 15, the electronic ticket may be temporarily stored in the server 15, and the ticket may be transmitted to the stationary terminal 11a or the mobile terminal 13a at a date and time desired by user D.

### (Nineteenth Example)

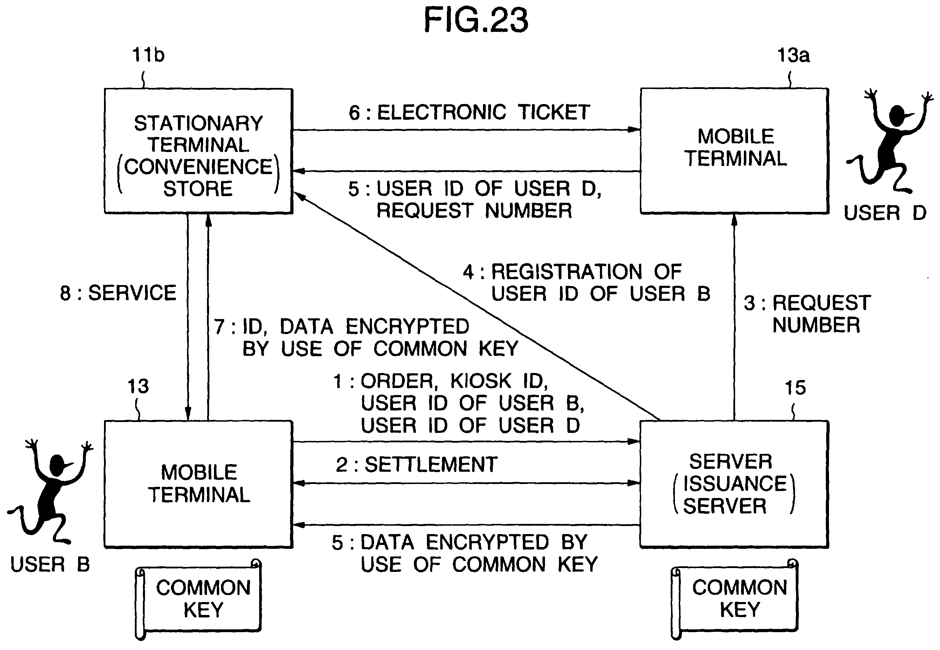

FIG. 23 is a block diagram showing a nineteenth example of the electronic asset purchasing system according to the first embodiment of the electronic asset utilization system of the present invention. The present example is directed to a system which can be utilized when a ticket shop or a store, such as a convenience store, offers service to user B who has utilized the electronic asset utilization system.

Although the nineteenth example is substantially identical with the eighteenth example (see FIG. 22), a difference between the examples lies in that in the nineteenth example the server 15 is provided, in advance, with a seventh ID terminal (not shown), wherein the terminal ID of the stationary terminal 11b corresponds to the secret data encrypted through use of the common key. After the server 15 has transmitted data, such as a request number, to the mobile terminal 13a and the stationary terminal 11b, settlement is performed, whereupon the server 15 transmits the encrypted data to the mobile terminal 13.

User B brings his mobile terminal 13 to the shop where the stationary terminal 11b is disposed, and the user ID of user B and the encrypted data are transmitted to the stationary terminal 11b. The stationary terminal 11b decrypts the encrypted data through use of the common key and offers service, such as a discount coupon, to the mobile terminal 13. The data to be transmitted from the server 15 to the stationary terminal 11b include the server ID of the server 15 and the user ID of user B, as well as the user ID of user D, the request number, and the electronic ticket.

In another modification of the present example, the electronic ticket to be transmitted from the server 15 to the stationary terminal 11b may be encrypted through use of the public key "d" of user D. In this case, the contents of the electronic ticket cannot be ascertained by way of the stationary terminal 11b, and hence there can be provided an electronic asset utilization system having a high degree of secrecy. In this case, however, the public key "d" of user D must be registered in the server 15, or user D has to send the public key "d" to the server 15.

As has been described above, in the electronic asset utilization system (i.e., the electronic asset purchasing system), there is no necessity for the consumer and the clerk to direct exchange cash and a voucher or to complicated settle a charge to a credit card. Settlement of a charge for a commodity product or service through use of an electronic asset or transmission and receipt of an electronic asset can be effected by way of a communications network. Therefore, there can be provided a sales/settlement system having a high degree of convenience. Encryption of a user ID, use of a password, and transmission of data for use in checking receipt of an electronic asset enable provision of a sales/settlement system having a high degree of reliability and security.

Data other than the purchased electronic asset, such as a coupon or a message, can be exchanged in a manner beneficial to each of the parties by means of changing the configuration of encryption in accordance with the operation of the server and the stationary terminals.

In any of the previous examples, in the event that the available memory space of the mobile terminal 13 is small or where the downloaded electronic asset does not need to be used immediately, user B may transfer the downloaded electronic asset to his stationary terminal 11 and temporarily stores the valuable in the stationary terminal 11. Further, user B who has placed an order for an electronic asset can select the time and date at which the electronic asset is to be downloaded, by means of setting.

### [Second Embodiment]

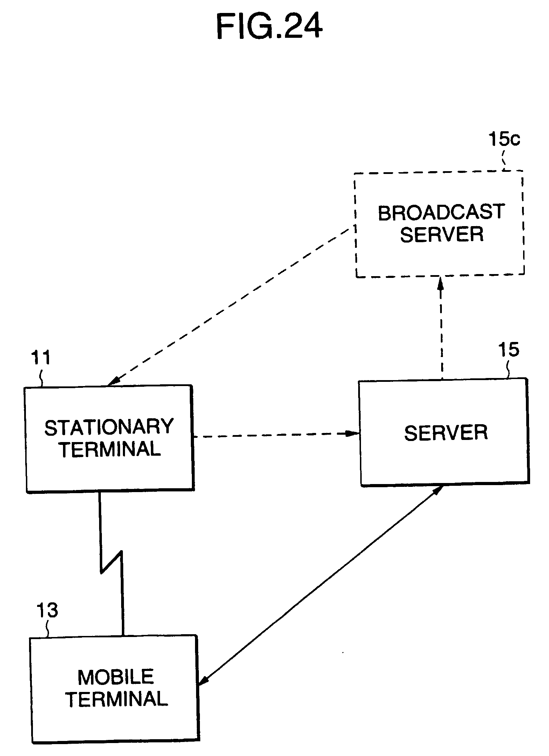

FIG. 24 is a block diagram showing an electronic asset use system according to a second embodiment of the electronic asset utilization system of the present invention of the present invention. In the drawing, those elements which are the same as those shown in FIG. 1 (i.e., the first embodiment) are assigned the same reference numerals, and repetition of their explanations is omitted here. In the present embodiment, the electronic asset utilization system of the present invention is used for embodying the electronic asset use system.

As in the case of the electronic asset utilization system of the first embodiment, the electronic asset utilization system 20 of the present embodiment comprises a stationary terminal 11, a mobile terminal 13, and a server 15. As shown in FIG. 24, the electronic asset utilization system 20 may further comprise a broadcast server 15c for offering broadcast service, according to which broadcast data are transmitted to users by means of digital television broadcast or a like broadcast.

In the present embodiment, the stationary terminal 11 may also be considered to correspond to a gas meter or an electric meter, as well as to a PC, an STB, or a POS terminal disposed at a convenience store or a like shop. Further, the server 15 may also be considered to correspond to a broadcast charge settlement server for settling a charge for a pay-per-view program, a gas/electric settlement server for settling a charge for gas and electricity, and a server which settles, in combination, charges for mail-order sales, subscription of newspaper or magazines, pay-per-view broadcast, gas, and electricity.

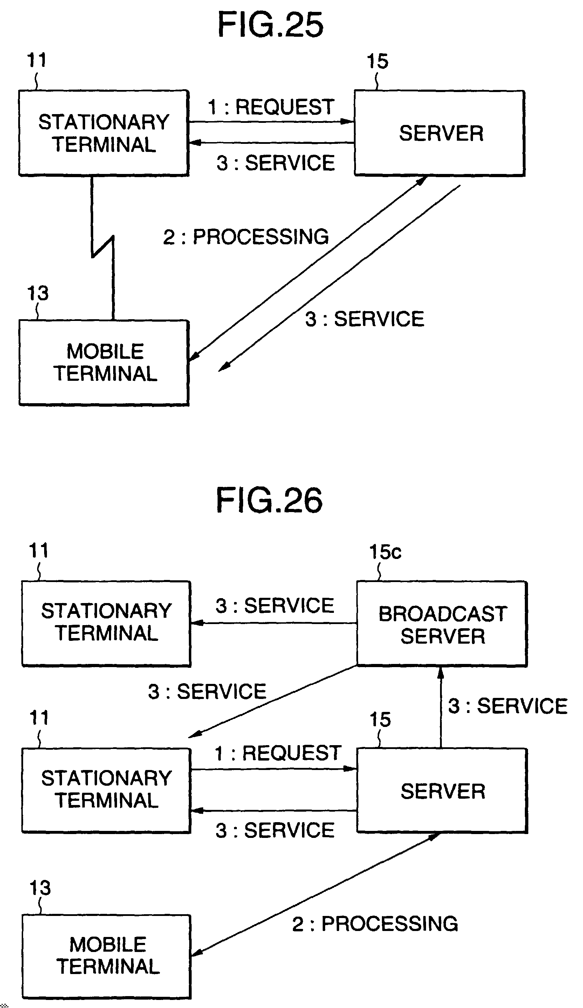

As shown in FIG. 25, in the electronic asset utilization system 20 of the present embodiment, when the server 15 receives a service request from the stationary terminal 11, the server 15 performs processing relating to the request with respect to the mobile terminal 13. The requested service or data pertaining to the service are transmitted to either the mobile terminal 13 or the stationary terminal 11. Alternatively, as shown in FIG. 26, the requested service or the data pertaining to the service may be transmitted to either the stationary terminal 11 or a broadcast server 15c. The broadcast server 15c transmits broadcast service to either the stationary terminal 11 or another stationary terminal 11. In a modification of the embodiment, there may be employed only the mobile terminal 13 and the stationary terminal 11. Alternatively, the server 15 receives a service request from the mobile terminal 13 and transmits service to either the stationary terminal 11 or another mobile terminal 13. Further, the request to be transmitted from the stationary terminal 11 to the server 15 may be transmitted to the server 15 from the stationary terminal 11 by way of the mobile terminal 13.

### (First Example)

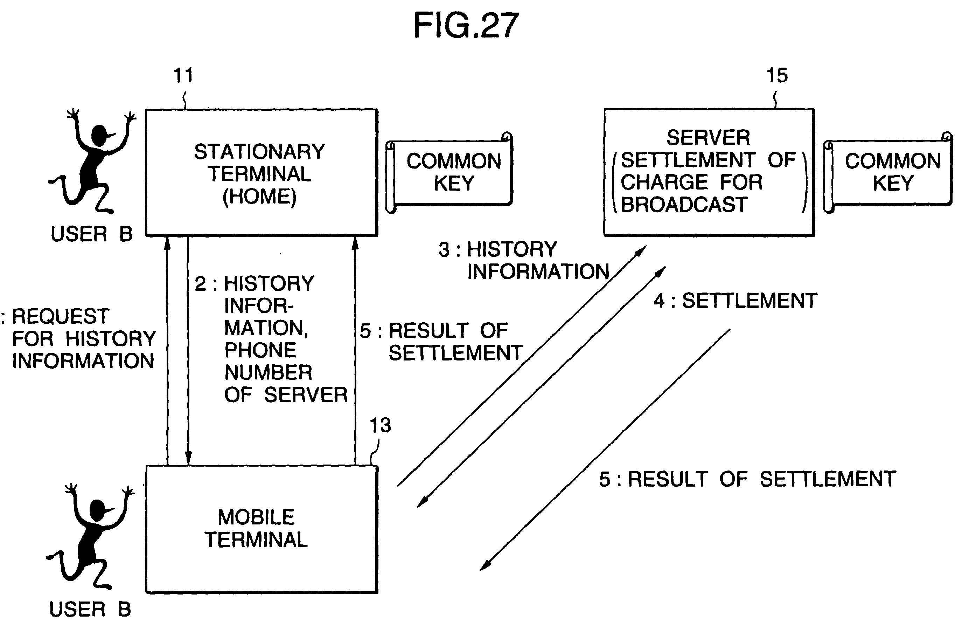

FIG. 27 is a block diagram showing a first example of the electronic asset use system according to the second embodiment of the electronic asset utilization system of the present invention. In the present example, the stationary terminal 11 corresponds to an STB or a PC disposed at the home of the user (hereinafter referred to as "user B"). The server 15 corresponds to a server for settling a charge for pay-per-view broadcast. This example is based on the assumption that user B uses both the stationary terminal 11 and the mobile terminal 13. History information about the pay-per-view programs viewed by user B (i.e., billing information) is stored in the stationary terminal 11. Further, an electronic prepaid card serving as an electronic asset is stored in the mobile terminal 13.

Through use of the mobile terminal 13, user B sends, to the stationary terminal 11, a request for transmitting the history information. In response to the request, the stationary terminal 11 transmits the history information to the mobile terminal 13 in conjunction with the phone number of the server 15 with which communications are to be established. Next, user B transmits the history information to the server 15 through use of the mobile terminal 13, thus requesting settlement of a charge. In response to the request for settling a charge, the server 15 sends, to the mobile terminal 13, a request for paying the charge with an electronic prepaid card, thus settling the charge with the electronic prepaid card. The server 15 transmits the result of settlement to the mobile terminal 13 along with a voucher, and user B transmits the settlement result to the stationary terminal 11. The stationary terminal 11 updates the history information on the basis of the thus-received settlement result.

As mentioned above, in the present example, user B can pay the charge for a pay-per-view program at any time by utilization of an electronic prepaid card. Therefore, there can be provided an electronic asset utilization system which provides a high degree of convenience.

Settlement of a charge is not limited to payment by use of an electronic prepaid card but may also be achieved by payment by use of a credit card or by a withdrawal from a bank account. Further, the result of the charge being settled by the server 15 may also be directly transmitted to the stationary terminal 11. In a case where the stationary terminal 11 and the server 15 share the same common keys, the history information to be transmitted from the stationary terminal 11 to the mobile terminal 13 and the settlement result to be transmitted from the server 15 may be encrypted through use of the common key. Further, in a case where the phone number of the server 15 is incorporated in an electronic asset, there may be eliminated a necessity for transmitting the phone number of the server 15 to the mobile terminal 13.

In a modification of the present example, a gas meter or an electric meter may be taken as the stationary terminal 11, and a gas/electricity settlement server may be taken as the server 15. In this case, through use of the mobile terminal 13 user B requests billing information about charges for gas and electricity, and the user ID of user B is transmitted to the stationary terminal 11, whereby billing information can be transmitted to an authorized user.

### (Second Example)

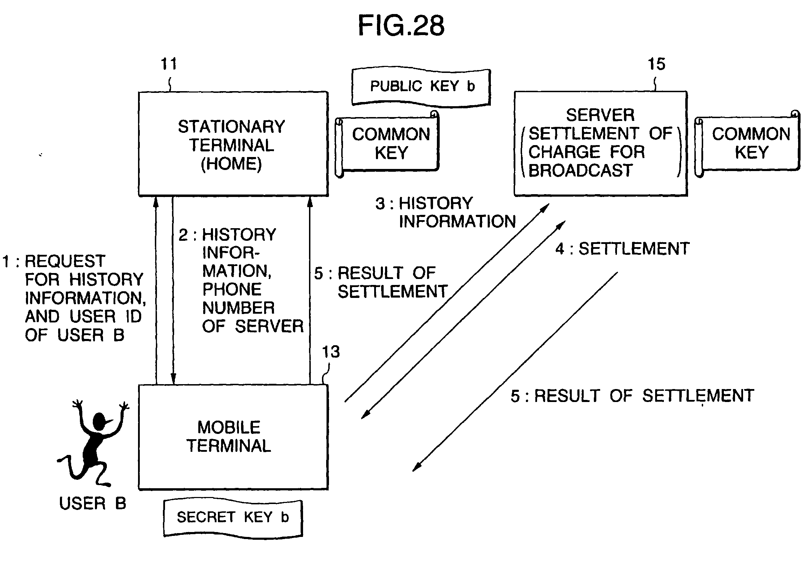

FIG. 28 is a block diagram showing a second example of the electronic asset use system according to the second embodiment of the electronic asset utilization system of the present invention. Although the present example is substantially identical with the first example (see FIG. 27), a difference between the examples lies in that in the second example the history information is transmitted to the mobile terminal 13 after having been encrypted with a public key through use of a history table, in which table correspondence exists between the user ID transmitted from the mobile terminal 13, the history information (billing information), and the public key of the user. The encrypted history information becomes valid after having been decrypted through use of the secret key. In the present example, a specific user can determine his history information, thus preventing another person from illegally acquiring his history information.

### (Third Example)

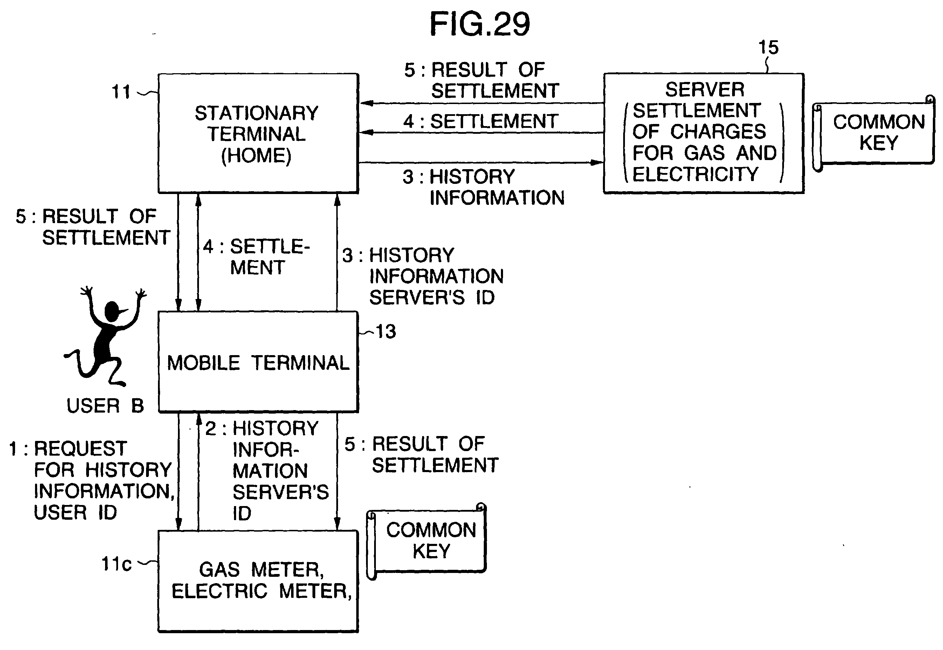

FIG. 29 is a block diagram showing a third example of the electronic asset use system according to the second embodiment of the electronic asset utilization system of the present invention. In the present example, the stationary terminal 11 corresponds to a gas meter or an electric meter (hereinafter referred to as a "stationary terminal 11c"), and the server 15 corresponds to a gas/electricity settlement server. The present example is based on the assumption that user B establishes communication with the server 15 by way of a stationary terminal disposed in his home, such as an STB or a PC, through use of the mobile terminal 13. Billing information about the gas or electricity consumed by user B is stored in the stationary terminal 11c. Further, the mobile terminal 13 stores an electric prepaid card as an electronic asset.

In the present example, when user B sends, to the stationary terminal 11c, a request for transmitting the billing information, through use of the mobile terminal 13. In response to the request, the stationary terminal 11c sends, to the mobile terminal 13, the billing information in conjunction with the phone number of the server 15 with which communications are to be established. When user B transmits, to the stationary terminal 11, the billing information and the phone number of the server 15, through use of the mobile terminal 13, the stationary terminal 11 specifies the phone number of the server 15 through use of a server table in which correspondence exists between the phone number of the server 15 and the server ID. Next, the stationary terminal 11 accesses the server 15 and transmits the billing information, thereby sending to the server 15 a request for settling charges for gas and electricity.

In response to the request for settling the charges, the server 15 sends, to the mobile terminal 13, a request for paying the charges through use of the electronic prepaid card and settles the charges through use of the electronic prepaid card. Next, the server 15 sends the result of settlement to the mobile terminal 13 in conjunction with a voucher, and user B transits the settlement result to the stationary terminal 11c. The stationary terminal 11c updates the billing information on the basis of the thus-received settlement result. In a case where the server ID corresponds to the phone number of the server 15, the server table is not necessary.

When the stationary terminal 11c and the server 15 share common key, the billing information to be transmitted from the stationary terminal 11c to the mobile terminal 13 and the settlement result to be transmitted to the server 15 may be encrypted through use of the common key. In this case, even if the billing information or the settlement result are illegally read from the stationary terminal 11b, usable information cannot be extracted from the billing information or the settlement result, which is encrypted through use of the common key.

In a modification of the present example, the stationary terminal 11 corresponds to a POS terminal disposed in a shop such as a convenience store or a like store, and the stationary terminal 11c or the mobile terminal 13 has the public key "c" of the server 15. In such a case, communications data to be exchanged between the mobile terminal 13 and the server 15 by way of the stationary terminal 11 may be encrypted through use of the public keys belonging to the mobile terminal 13 and the server 15, respectively. In this modification of the present example, since the billing information, the settlement result, and an electronic asset are encrypted, there can be provided an electronic asset utilization system having a high degree of security.

As mentioned above, in the present example, communications between the stationary terminal 11 and the mobile terminal 13 and communications between the mobile terminal 13 and the stationary terminal 11c are carried out through use of infrared-ray communications (IrDA) or local radio communications such as short-range radio communications (e.g., Bluetooth), thus saving communications cost. When a charge for connection between the stationary terminal 11 and the communications network is compared with a charge for connection between the mobile terminal 13 and the communications network, the charge for connection between the stationary terminal 11 and the communications network is usually found to be cheaper. In the present example, since communication with the server 15 are conducted by the stationary terminal 11, the communications cost can be made cheaper than in the case of the mobile terminal 13 in the third example of the second embodiment.

### (Fourth Example)

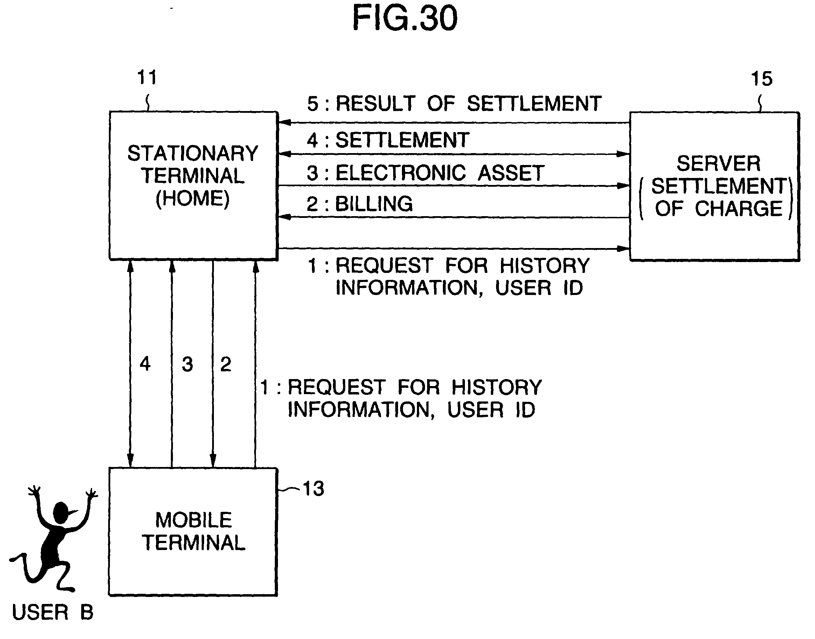

FIG. 30 is a block diagram showing a fourth example of the electronic asset use system according to the second embodiment of the electronic asset utilization system of the present invention. In the present example, the stationary terminal 11 corresponds to an STB or a PC disposed at the home of user B. The server 15 corresponds to a server for settling various charges for gas, electricity, mail-order sales, and pay-per-view broadcasts. This example is based on the assumption that user B conducts communication with the server 15 by way of the stationary terminal 11 through use of the mobile terminal 13. History information, for example, billing information about electricity, is stored in the server 15. Further, an electronic prepaid card serving as an electronic asset is stored in the mobile terminal 13.

In the present example, user B transmits his user ID to the server 15 through use of the mobile terminal 13, thus requesting submission of billing information. At this time, user B may perform direct entry of user ID and the request for history information through use of the stationary terminal 11. When user B sends, to the server 15, a request for settling charges after the server 15 has transmitted the requested billing information to the mobile terminal 13, the server 15 sends, to the mobile terminal 13, a request for paying the charges with an electronic asset. The server 15 pays the charges with an electronic prepaid card and transmits the result of payment to the mobile terminal 13 in conjunction with a voucher. Further, after having completed payment, the server 15 updates the billing information on the basis of the payment result.

In a modification of the present example, the stationary terminal 11 corresponds to a POS terminal disposed in a shop such as a convenience store or a like store, and the mobile terminal 13 has the public key "c" of the server 15. Further, the server 15 has the public key "b" of user B. In such a case, communications data to be exchanged between the mobile terminal 13 and the server 15 by way of the stationary terminal 11 may be encrypted through use of the respective public keys belonging to the mobile terminal 13 and the server 15. Further, in a case where the secret data to be transmitted from the server 15 to the stationary terminal 11 are displayed on the stationary terminal 11, the data may be transmitted to the stationary terminal 11 after having been encrypted by the server 15 through use of the common key. In this case, in the event that communications data are illegally read by way of the communications network or a POS terminal, usable information cannot be extracted from the communications data, because the communications data are encrypted. Accordingly, there can be provided an electronic asset utilization system having a high degree of reliability. Further, since communication with the server 15 are conducted by way of the POS terminal, user B can establish communications with the server 15 without incurring communications cost. Further, user B can bring the stationary terminal 11 into a billing information check mode or a payment mode by means of directly operating the stationary terminal 11.

### (Fifth Example)

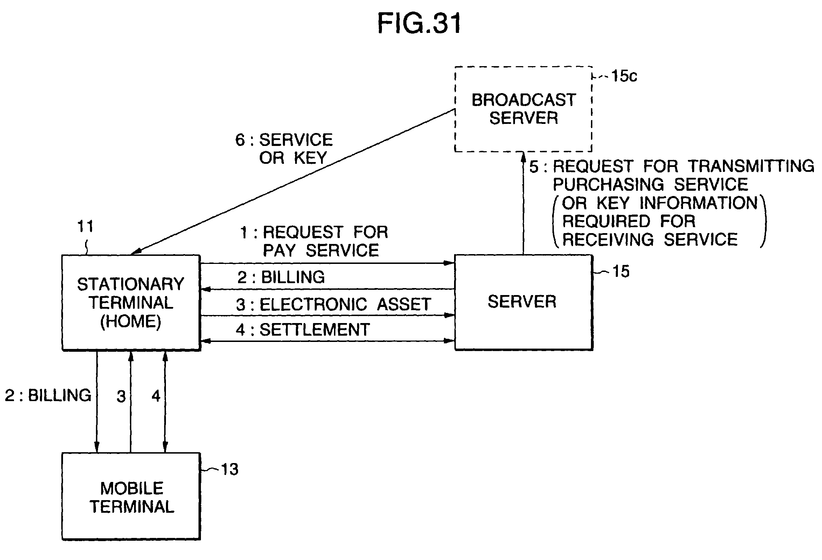

FIG. 31 is a block diagram showing a fifth example of the electronic asset use system according to the second embodiment of the electronic asset utilization system of the present invention. In the present example, the electronic asset use system comprises the broadcast server 15c; as well as the stationary terminal 11, such as an STB or a PC disposed at the home of user B; the mobile terminal 13 of user B; and the server 15. Even this example is based on the assumption that user B conducts communications with the server 15 by way of the stationary terminal 11 through use of the mobile terminal 13. Further, a pay-per-view broadcast program ticket is stored as an electronic asset in the mobile terminal 13.

In the present example, user B sends, to the server 15, a request for offering pay-per-view broadcast service, through use of the stationary terminal 11. In response to the request, the server 15 sends, to the mobile terminal 13, a request for paying a charge for the pay-per-view broadcast service with an electronic asset, thus paying the charge with an electronic asset. The server 15 sends the result of payment as a voucher to the mobile terminal 13 and sends, to the broadcast server 15c, a request for transmitting the requested pay-per-view broadcast service. The server 15 sends, to the broadcast server 15c, a request for transmitting the pay-per-view broadcast service to the stationary terminal 11 and also sends a request for sending key information if a specific key is required for utilizing the pay-per-view broadcast service.

As mentioned above, in the present example, the stationary terminal 11 can receive pay-per-view broadcast service by paying a charge for the service with an electronic asset. Accordingly, there can be provided an electronic asset utilization system which provides a high degree of convenience.

### (Sixth Example)

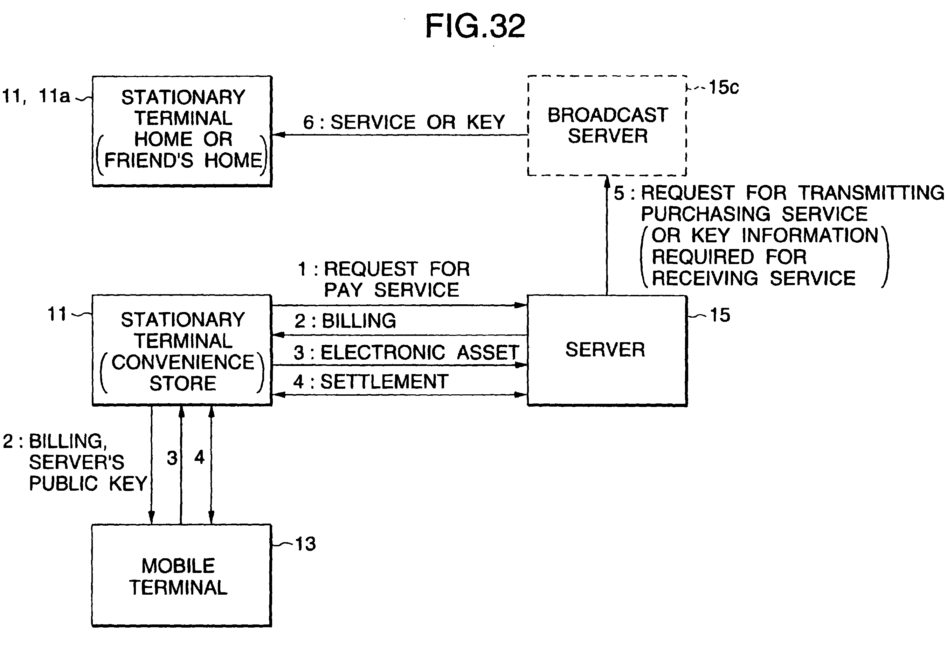

FIG. 32 is a block diagram showing a sixth example of the electronic asset use system according to the second embodiment of the electronic asset utilization system of the present invention. In contrast with the fifth example (see FIG. 31), pay-per-view broadcast service is transmitted to the stationary terminal 11a owned by a friend (hereinafter referred to as "user D") of user B who has placed the order for the pay-per-view broadcast service. Here, the stationary terminal 11 may correspond to a POS terminal disposed in a shop such as a convenience store. In such a case, communications data to be exchanged between the mobile terminal 13 and the server 15 by way of the stationary terminal 11 may be encrypted through use of the public keys of the mobile terminal 13 and the server 15.

As mentioned above, in the present example, a request for transmitting pay-per-view broadcast service to the stationary terminal 11a of user D can be sent by way of the stationary terminal 11 by means of paying a charge for the service with an electronic asset. Therefore, there can be provided an electronic asset utilization system which provides a high degree of convenience.

### (Seventh Example)

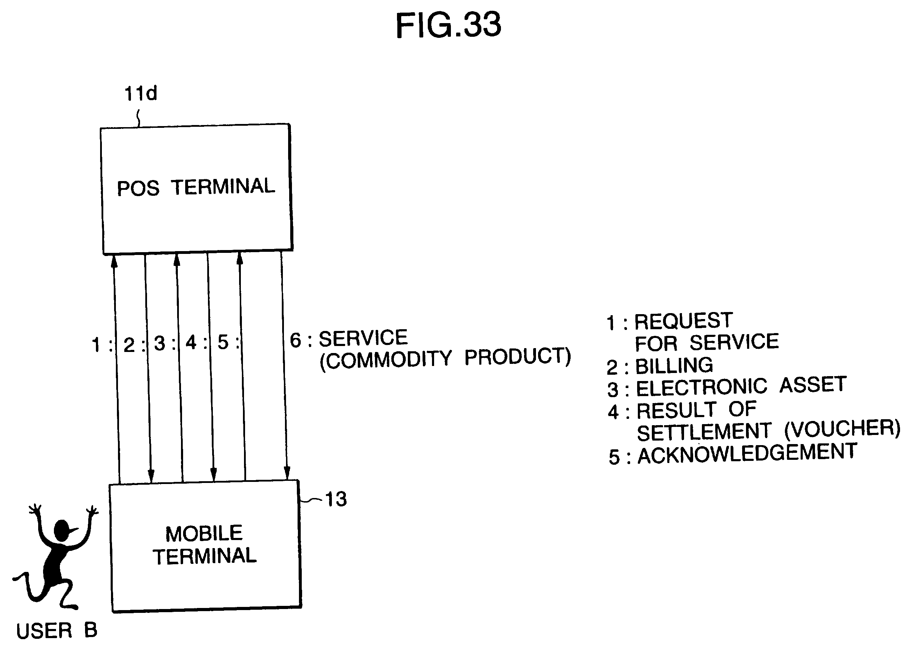

FIG. 33 is a block diagram showing a seventh example of the electronic asset use system according to the second embodiment of the electronic asset utilization system of the present invention. In the present example, the electronic asset use system comprises a POS terminal 11d disposed in a shop, such as a convenience store, serving as a stationary terminal and the mobile terminal 13 owned by user B. Further, electronic money is stored as an electronic asset in the mobile terminal 13.

In the present example, through use of the mobile terminal 13, user B pays electronic money in exchange for service. Thereafter, user B receives the result of payment from the POS terminal 11d in the form of a voucher. In order to allow the POS terminal 11d to ascertain whether or not the result of payment has been properly transmitted to the mobile terminal 13, the mobile terminal 13 sends an acknowledgement to the POs terminal 11d. Here, the term "acknowledgement" refers to a digest which is calculated by subjecting the result of payment to hashing computation and is encrypted through use of the secret key of the electronic asset. The POS terminal 11d, which has received the acknowledgement, decrypts the acknowledgement with the public key of the electronic asset, thereby preparing a digest. The digest calculated by subjecting, to hashing computation, the result of payment transmitted to the mobile terminal 13 is compared for verification with the digest prepared from the acknowledgement. If no anomaly is found in the result of comparison between the digests, the POS terminal 11d completes a round of processing operations.

As mentioned above, in the present example, a round of processing operations are completed after the result of payment has been properly transmitted to the mobile terminal 13. Hence, there can be provided an electronic asset utilization system which has a higher degree of reliability.

As mentioned above, the electronic asset utilization system of the present example (i.e., the electronic asset user system) eliminates a necessity for submitting, to a clerk, a bill or a ticket on which personal information appears. Payment with an electronic asset and receipt of service can be carried out by way of the communications network. Accordingly, there can be provided a settlement/service providing system which provides a high degree of convenience. Further, so long as history information, billing information, and a result of payment are encrypted, unauthorized disclosure of valid personal data can be prevented, thus providing a settlement/service providing system having a high degree of reliability and security.

A business establishment, such as a television broadcasting corporation which unidirectionally broadcasts data to subscribers, does not need to newly provide communications means for acquiring the billing information stored in a stationary terminal disposed at the subscriber's home. Accordingly, the burden imposed on the business corporation can be alleviated. Nowadays, in the case of a home television, pay-per-view broadcasts are charged to the contractor of the house. In the case of a guest of a hotel, pay-per-view broadcasts are charged to the guest occupying the room. The electronic asset utilization system enables everybody to pay.

In any one of the previous examples, an acknowledgement may be transmitted to the server 15 n order to enable the server 15 to ascertain whether or not the result of payment or the result of processing relating to provision of service has been properly transmitted to the user. In this case, a round of processing operations is not completed unless the server 15 receives an acknowledgement, thereby providing an electronic asset utilization system having a higher degree of reliability.

### [Third Embodiment]

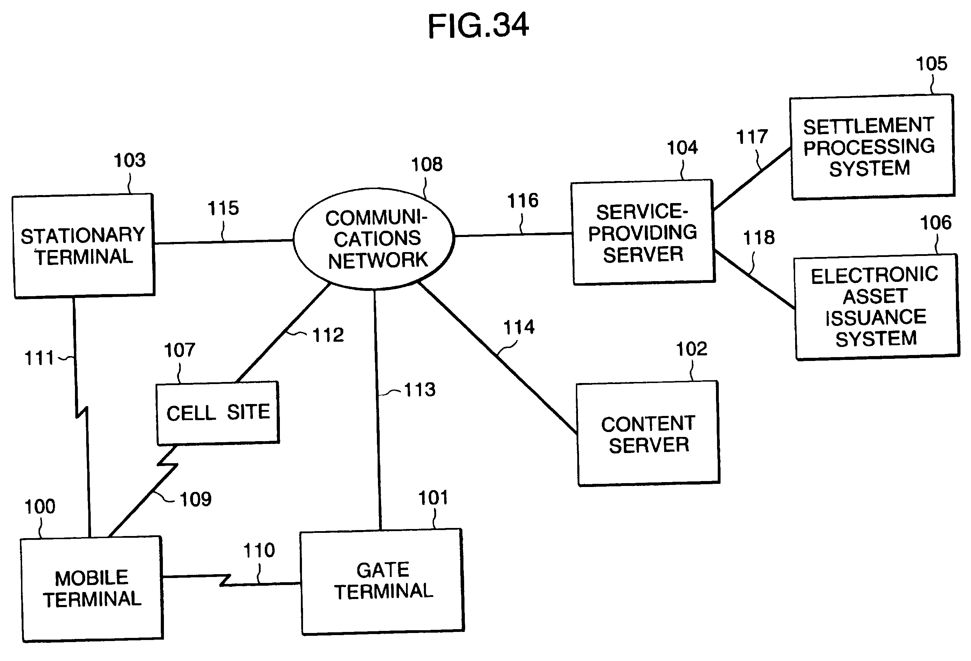

FIG. 34 is a block diagram showing an electronic asset utilization system according to a third embodiment of the present invention. In the drawing, the electronic asset utilization system of the present embodiment comprises a mobile terminal 100; a gate terminal 101; a content server 102; a stationary terminal 103; a service-providing server 104; a settlement processing system 105; an electronic asset issuance system 106; a wireless phone cell site; and a communications network 108. specifically, the mobile terminal 100 has a bi-directional communications function comprising two circuits, that is, infrared-ray communications and wireless communications; a function of purchasing an electronic asset; and a function of using an electronic asset. The gate terminal 101 has a bi-directional communications function comprising two circuits, that is, infrared-ray communications and wireless communications, and enables automatic use of an electronic asset. The content server 102 has a service data region where setting data are stored and a content data region where contents data to be handled as a commodity product are stored. Further, the content server 102 offers on-line service and settles payment by use of an electronic asset. The stationary terminal 103 has a bi-directional communications function and a television receiving function and performs receipt of a television broadcast, browsing of on-line data, and receipt of service from the content server 102. The service-providing server 104 is located at the center of a communications network which interconnects the mobile terminal 100, the gate terminal 101, the content server 102, the stationary terminal 103, the settlement processing system 105, and the electronic asset issuance system 106. Further, the service-providing server 104 performs offer of an electronic asset and payment for an electronic asset. The settlement processing system 105 settles credit transactions at a credit card company or a settlement processing corporation. The electronic asset issuance system 106 issues electronic asset at an event company, an electronic ticket issue corporation, a retail sales corporation, or an electronic prepaid card issue corporation. The wireless phone cell site 107 connects the mobile terminal 100 with the communications network 108. The communications network 108 provides a data transmission channel in the network.

In FIG. 34, reference numeral 109 designates a transmission channel over which wireless communications are established between the mobile terminal 100 and the cell site 107; 110 designates a transmission channel over which infrared-ray communications are established between the mobile terminal 100 and the gate terminal 101; 111 designates a transmission channel over which infrared-ray communications are established between the mobile terminal 101 and the communications network 108; 112 designates a communications channel for interconnecting the cell site 107 and the communications network 108; 113 designates a communications channel for interconnecting the gate terminal 101 and the communications network 108; 114 designates a communications channel for interconnecting the communications network and the content server 102; 115 designates a communications channel for interconnecting the stationary terminal 103 and the communications network 108; 116 designates a communications channel for interconnecting the communications network 108 and the service-providing server 104; 117 designates a communications channel for interconnecting the service-providing server 104 and the settlement processing system 105; and 118 designates a communications channel for interconnecting the service-providing server 104 and the electronic asset issuance system 106. The communications channels may utilize either analog lines or digital lines.

The following is assumed to be a common pattern in which the electronic asset utilization system is operated. The settlement processing system 105 is disposed in a credit card company, a bank, or a settlement processing corporation. The electronic asset issuance system 106 is disposed in an event company, a ticket issue company, a retail sales company, or a prepaid card issue corporation. The gate terminal 101 is disposed at the entrance of a movie theater or an event hall, and the content server 102 is disposed at a corporation operating on-line shops. The stationary terminal 103 is disposed in a home or in guest rooms of a hotel, and the mobile terminal 100 is carried by a consumer. The service-providing server 104 is disposed in a corporation which offers the electronic asset utilization system of the present embodiment.

The social relationship between the proprietors of units constituting the electronic asset utilization system and the proprietors of the systems is based on the following premise. The consumer owing the mobile terminal 100 has signed a membership contract with a credit card company or a bank, a membership contract for the electronic asset utilization system with the company providing the electronic asset utilization system, and a wireless communications service contract with a wireless communications company.

The proprietor of the gate terminal 101; for example, the manager of a movie theater or an event hall, has signed with the proprietor of the electronic asset issuance system 106 a contract for handling an electronic asset issued by the electronic asset issuance system 106; has signed with a company which provides the electronic asset utilization system a contract relating to a member store of the electronic asset utilization system; and has signed with a communications corporation a communications service contract. Here, a single proprietor may own the gate terminal 101 and the electronic asset issuance system 106.

The company owning the content server 102 has signed with the proprietor of the electronic asset issuance system 106 a contract for handling an electronic asset issued by the electronic asset issuance system 106; has signed with the company providing the electronic asset utilization system a contract relating to a member shop of the electronic asset utilization system; and has signed with the communications company a communications service contract. Here, a single proprietor may own both the content server 102 and the electronic asset issuance system 106. In a case where the content server 102 sells the right to view a pay-per-view program, the company owning the content server 102 has signed with the broadcast company a contract for issuing a right to view a pay-per-view program. Here, the broadcast company may own the content server 102.

The proprietor of the electronic asset issuance system 106 has signed with a credit card company or a bank a contract relating to a member shop of credit service; has signed with the company for providing the electronic asset utilization system a contract relating to an issuer for issuing a ticket by way of the electronic asset utilization system; and has signed with the communications company a communications service contract. Here, the proprietor of the electronic asset issuance system 106 is the company providing the electronic asset utilization system.

In a case where the settlement processing company settles credit transactions through use of the settlement processing system 105, the settlement processing company has signed with one or a plurality of credit card companies or banks a contract for executing settlement of credit transactions for the credit card company or bank.

In a case where a settlement processing system for settling credit transactions differs according to a credit card, a plurality of settlement processing systems are connected to the service-providing server 104 by way of communications channels, as in the case of the settlement processing system 105 shown in FIG. 34.

Similarly, in a case where the electronic asset issuance system differs according to the type of an electronic asset, a plurality of ticket issuance systems are connected to the service-providing server 104 by way of communications channels, as in the case of the electronic asset issuance system 106 shown in FIG. 34.

For the sake of brevity in describing the electronic asset utilization system of the present embodiment, a consumer owning the mobile terminal 100 is called a user. A business person who owns the gate terminal 101 or the content server 102 and offers a commodity product or service is called a merchant. A company which owns the service-providing server 104 and offers the electronic asset utilization system is called a service provider. A credit card company or a settlement processing company which owns the settlement processing system 105 and settles credit transactions is called a settlement processing institution. A business person who owns the electronic asset issuance system 106 and sells electronic asset is called an electronic asset issuer.

Under the service offered by way of the electronic asset utilization system of the present embodiment, trade of electronic assets by way of the communications network, delivery of electronic assets, and use of electronic assets are wholly carried out electronically.

More specifically, according to the service of the present embodiment, the user purchases an electronic asset from the electronic asset issuance system 106 by way of the service-providing server 104 through use of the mobile terminal 100. An electronic asset, such as an electronic ticket or an electronic prepaid card, is downloaded from the service-providing server 104, and the thus-downloaded electronic asset is stored in and managed by the mobile terminal 100. At the time of use of the electronic asset, payment is settled by use of the electronic asset stored in the mobile terminal, by means of communication between the mobile terminal 100 and the gate terminal 101, communication between the mobile terminal 100 and the content server 102, or communications established between the mobile terminal 100 and the content server 102 by way of the stationary terminal 103.

Settlement is divided into several types according to the type of pay contents; for example, cash settlement for settling a payment every time contents are purchased; prepayment for settling bills before contents are purchased, in accordance with accumulated billing information items; and deferred settlement for settling bills after contents have been purchased, in accordance with accumulated billing information items. According to the cash settlement system, the content server 102 verifies an electronic asset transmitted from the mobile terminal 100 of the user every time contents are purchased and issues a voucher (a receipt). According to the prepayment or deferred settlement system, bills are settled in accordance with accumulated billing information items pertaining to purchase of contents.

Communication established between the units of the electronic asset utilization system during provision of and payment for the service are carried out through use of the following transmission channels or communications lines.

The mobile terminal 100 carries out communication with the service-providing server 104 by way of the transmission channel 109, the cell site 107, the communications line 112, the communications network 108, and the communications line 116; carries out communication with the content server 102 by way of the transmission channel 109, the cell site 107, the communications line 112, the communications network 108, and the communications line 114; carries out infrared-ray communications with the gate terminal 101 by way of the transmission channel 110; and carries out infrared-ray communications with the stationary terminal 103 by way of the transmission channel 111.

Communications are established between the gate terminal 101 and the service-providing server 104 by way of the communications line 113, the communications network 108, and the communications line 116. Further, communications are established between the content server 102 and the service-providing server 104 by way of the communications line 114, the communications network 108, and the communications line 116. Communications are established between the stationary terminal 103 and the service-providing server 104 by way of the communications line 115, the communications network 108, and the communications line 116. Further, communications are established between the stationary terminal 103 and the content server 102 by way of the communications line 115, the communications network 108, and the communications line 114.

Communications are established between the service-providing server 104 and the settlement processing system 105 by way of the communications line 117. Further, communications are established between the service-providing server 104 and the electronic asset issuance system 106 by way of the communications line 118.

All information data sets are transmitted after having been encrypted by way of communications between the mobile terminal 100 and the service-providing server 104; communications between the gate terminal 101 and the service-providing server 104; communications between the content server 102 and the service-providing server 104; communications between the service-providing server 104 and the settlement processing system 105; and communications between the service-providing server 104 and the electronic asset issuance system 106. The informational data are converted into an electronic letter through use of a cryptosystem using a secret key and a public key in combination.

The data stratum of an electronic asset used in the electronic asset utilization system of the present embodiment will next be described.

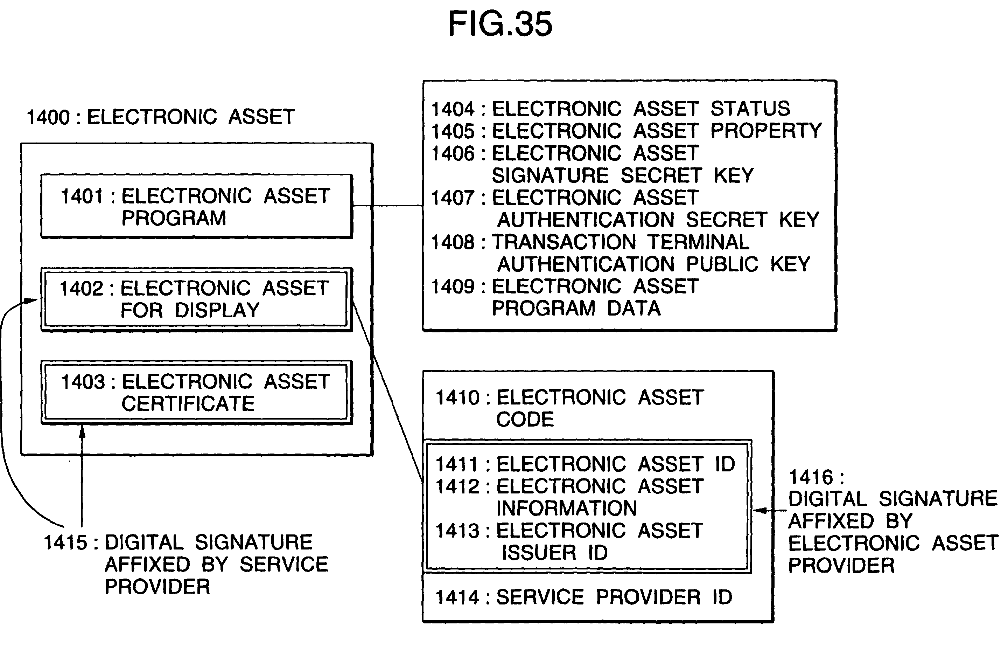

FIG. 35 is a descriptive illustration for showing the data stratum of an electronic asset. In the drawing, areas enclosed by a double line designates sections in which electronic signatures are to be entered. As shown in FIG. 35, an electronic asset 1400 comprises three sections; i.e., an electronic asset program 1401, an electronic asset for display purposes (hereinafter referred to as a "display electronic asset") 1402, and an electronic asset certificate 1403. The electronic asset program 1401 corresponds to information for defining an operation for managing the status of the electronic asset 1400 and an operation unique to the electronic asset 1400. The display electronic asset 1402 corresponds to information to be displayed on the gate terminal 101 or the content server 102 as information for representing the contents of the electronic asset 1400. The electronic asset certificate 1403 is a certificate of the electronic asset 1400 issued by the service provider and corresponds to information showing that the electronic asset is valid.

The electronic asset 1400 is encrypted through use of any one of three cryptosystems using a public key cryptosystem, in accordance with circumstances. Hence, the electronic asset 1400 is provided with four keys. More specifically, one of the three cryptosystems is a combination of a secret key of an electronic asset and a corresponding public key; i.e., an electronic asset signature secret key 1406 stored in the electronic asset program 1401, and an electronic asset signature public key stored in the electronic asset certificate 1403. Another one of the three cryptosystems is an electronic asset authentication secret key 1407 which is stored in the electronic asset program 1401 and is used for authenticating an electronic asset by way of the gate terminal 101 or the content server 102. The remaining one of the three cryptosystems is a transaction terminal authentication public key 1408 which is used by the mobile terminal 100 for authenticating the gate terminal 101 or the content server 102 and is stored in the electronic asset program 1401.

The electronic asset signature secret key 1406 and the electronic asset signature public key constitute a key pair which differs according to the type of electronic asset. The gate terminal 101 is provided with an electronic asset authentication public key corresponding to the electronic asset authentication secret key 1407, as well as a transaction terminal authentication secret key corresponding to the transaction terminal authentication public key 1408.

The electronic asset program 1401 comprises an electronic asset status 1404; an electronic asset property 1405; the electronic asset signature secret key 1406; the electronic asset authentication secret key 1407; the transaction terminal authentication public key 1408; and electronic asset program data 1409.

The electronic asset status 1404 corresponds to information which shows the state (status) of the electronic asset 1400 and shows whether or not the electronic asset 1400 is available. The electronic asset property 1405 is optionally set according to the type of an electronic asset. For example, in a case where the electronic asset 1400 corresponds to a coupon ticket, an initial value and the number of coupon tickets are set for the electronic asset property 1405. The number of times the electronic asset 1400 is used is incremented every time the electronic asset 1400 is used. In a case where the electronic asset 1400 is an electronic prepaid card, an initial value relating to the initial amount of an electronic prepaid card and the amount expended are set. The amount expended is increased every time the prepaid card is used.

The electronic asset signature secret key 1406 is a secret key for use in affixing an electronic signature to an electronic asset. Similarly, the electronic asset authentication secret key 1407 is a secret key for use in authenticating an electronic asset. The transaction terminal authentication public key 1408 is to be used for authenticating the gate terminal 101 or the content server 102.

The electronic asset program data 1409 correspond to a program module for specifying an operation unique to the electronic asset 1400. Various types of electronic asset can be defined by combination of the electronic asset program data 1409 and the electronic asset property 1405, thus specifying various operations pertaining to use of the electronic asset 1400.

The display electronic asset 1402 comprises an electronic asset code 1410, an electronic asset ID 1411, electronic asset information 1412, an electronic asset issuer ID 1413, and a service provider ID 1414. The electronic asset issuer affixes an electronic signature to the electronic asset ID 1411, the electronic asset information 1412, and the electronic asset issuer ID 1413 (1416). Further, the service provider affixes an electronic signature to the display electronic asset 1402 (1415).

The electronic asset code 1410 corresponds to code information representing the type of the electronic asset 1400. Further, the electronic asset ID 1411 corresponds to identification information which varies according to an electronic asset, and the electronic asset information 1412 corresponds to information which is converted into an ASCII code representing the contents of the electronic asset 1400. More specifically, the electronic asset information 1412 describes various types of information items while tag information is appended to the respective information items, the information items including the title of the electronic asset 1400, a date, a time, the type of a sheet, a promoter, information indicating whether or not the electronic asset 1400 can be transferred, and information about requirements for use of the electronic asset 1400, such as the number of coupon tickets in a case where the electronic asset 1400 serves as coupon tickets.

The electronic asset issuer ID 1413 corresponds to ID information representing an electronic asset issuer who has issued the electronic asset 1400. The service provider ID 1414 corresponds to ID information representing a service provider.

The electronic asset certificate 1403 comprises an electronic asset ID, an electronic asset signature public key, an electronic asset certificate ID, a service provider ID, and a time and date at which an electronic asset certificate is issued (1415).

Next will be described service to be offered by way of the electronic asset utilization system of the present embodiment.

Service includes purchase of an electronic asset in which the user places with the electronic asset issuer an order for an electronic asset; use of an electronic asset in which the user receives service from the gate terminal 101 or the content server 102 through use of an electronic asset; and payment effected between the service provider server 104 and the gate terminal 101 or the content server 102.

Purchase of an electronic asset through use of the electronic asset utilization system of the present embodiment will next be described hereinbelow.

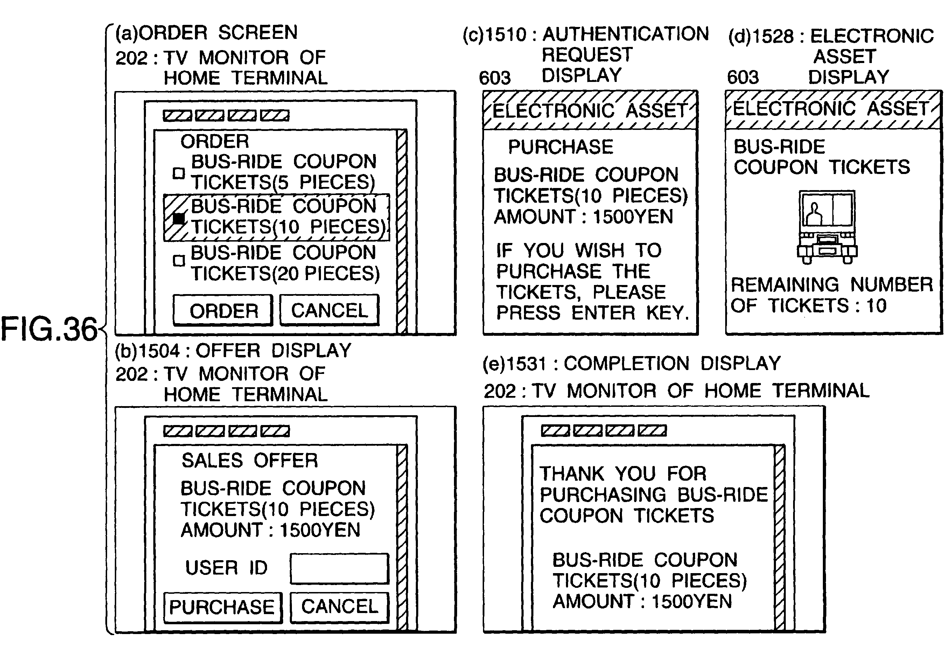

FIGS. 36A, 36B, and 36E show display examples appearing on the monitor 202 of the stationary terminal 103 at the time of purchase of an electronic asset. FIGS. 36C and 36D show display examples appearing on an LCD (liquid crystal display) of the mobile terminal 100 at the time of purchase of an electronic asset. As show in FIG. 36A, the user operates the remote controller 204, to thereby select an electronic asset to be purchased on an order screen appearing on the monitor 202, and selects an order button.

In a case where offer information 1506 contains an offer for sale of an electronic asset sales, an electronic asset sales offer appears on the monitor 202, as shown in FIG. 36B. In contrast, in a case where the offer information 1506 does not contain any off for sale of electronic asset, a message showing that an electronic asset cannot be issued appears on the monitor 202. Next, as shown in FIG. 36C, a screen prompting the user to purchase an electronic asset appears on the LCD of the mobile terminal 100.

The mobile terminal 100 sends, to the service-providing server 104, an acknowledgement which constitutes a message representing receipt of an electronic asset. As shown in FIG. 36D, an electronic asset is displayed on the LCD of the mobile terminal 100. On the basis of the received acknowledgement, the stationary terminal 103, which has received an acknowledgment relating to completion of purchase of the electronic asset, displays on the monitor 202 a message to the effect that the order placed by the user has been completed.

Purchase of an electronic asset is roughly divided into four types; i.e., purchase of a commodity product; purchase of an electronic ticket; purchase of information service; and purchase of pay-per-view broadcast service. First, in the case of purchase of a commodity product, a commodity product for which the user has made an application for purchase is delivered. To this end, a scheduled date on which the commodity product is to be delivered appears on the monitor 202. In the case of purchase of an electronic ticket, the service-providing server 104, which has received a request from the content server 102, transmits an electronic ticket to the mobile terminal 100. A result of transmission of the electronic ticket appears on the monitor 202 or the LCD of the mobile terminal 100. Further, in the case of purchase of information service, the information service purchased by the user appears on the monitor 202.

In the case of purchase of pay-per-view broadcast service, a purchased pay-per-view program and a key for viewing the pay-per-view program are transmitted to the stationary terminal 103 from the content server 102, and the key is stored in the memory of the stationary terminal 103. As a result, the stationary terminal 103 decrypts the program whose pay-per-view broadcast ticket has been purchased, to thereby make the program viewable and display the program on the monitor 202.

As mentioned above, on-line trade of any combination of a commodity product, information service, and pay-per-view broadcast service becomes feasible. For instance, in the field of education, there may be available service which comprises in combination sale of a text (corresponding to trade of a commodity product), sale of tickets for interview lessen (corresponding to trade of an electronic ticket), correction service delivered over the Internet (corresponding to trade of information service), and provision of lectures (corresponding to trade of pay-per-view broadcast service). In the field of music, there may be available service which comprises in combination sale of a CD (corresponding to trade of a commodity product), sale of a concert ticket (corresponding to trade of an electronic ticket), and provision of a live show to be viewed over the Internet (corresponding to trade of information service). As mentioned above, products and service, which have been traded individually, can be offered in combination to the user on-line, thus improving convenience to the consumer. Further, such an on-line trade adds values to commodity products, which in turn promotes sales.

Use of an electronic asset by utilization of the electronic asset utilization system of the present embodiment; particularly, payment effected by use of an electronic prepaid card, will now be described.

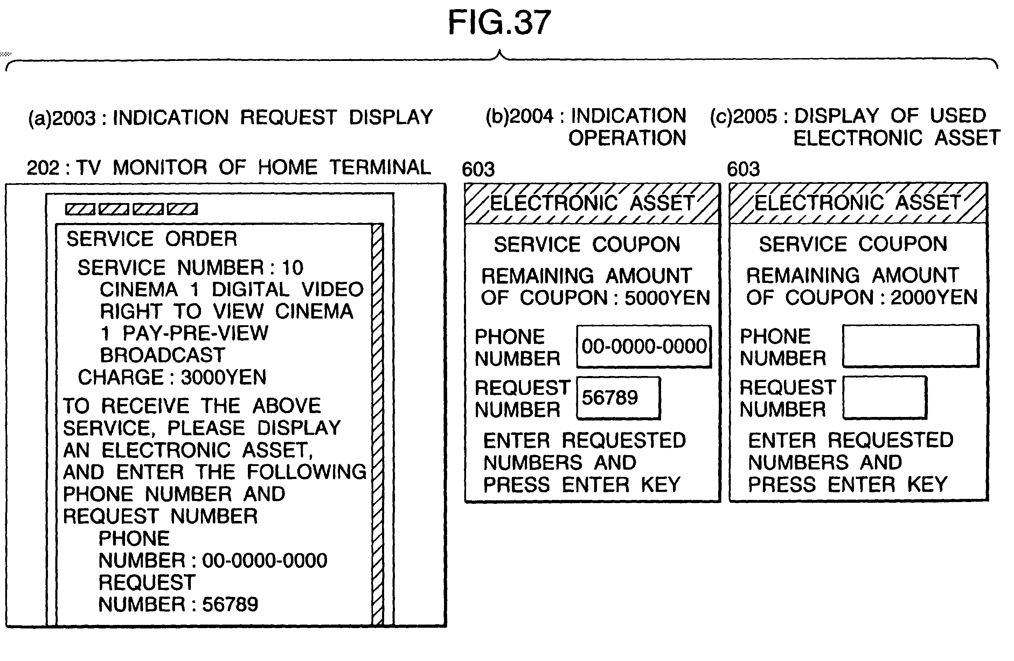

FIG. 37A shows an example display which appears on the monitor 202 of the stationary terminal 103 at the time of use of an electronic asset. FIGS. 37B and 37C show example displays which appear on the LCD of the mobile terminal 100 at the time of use of an electronic asset. First, the user accesses the content server 102 from the home terminal 103 by way of the communications network 108, thus sending to the content server 102 a request for desired surface. The content server 102-which has received the service request-transmits, to the stationary terminal 103, a message for requesting display of an electronic asset on the mobile terminal 100. The stationary terminal 103, which has received the message, displays on the monitor 202 of the stationary terminal 103 a message prompting the user to use an electronic asset, along with a phone number and a request number.

When the user displays an electronic asset to be used by actuation of the mobile terminal 100, a screen prompting the user to enter a phone number and a request number appears on the LCD of the mobile terminal 13. As shown in FIG. 37B, the user enters the phone number and the request number, which are displayed on the monitor 202, and presses an execution switch. The thusentered data are transmitted to the content server 102, where the request number and the type of the electronic asset are verified. In a case where a match is determined to exist between the thus-entered request number and the registered request number and where the type of the electronic asset is determined to be valid, payment for the electronic asset is effected. After the payment operation, a voucher is transmitted in response to payment to the mobile terminal 100. As shown in FIG. 37C, the mobile terminal 100 displays, on the LCD, the electronic asset that has been updated. Further, the mobile terminal 100, which has received the voucher, transmits an acknowledgement to the content server 102. If the acknowledgement is determined to be valid, service is offered to the stationary terminal 103.

In a case where each of the mobile terminal 100 and the stationary terminal 103 has a communications capability using infrared-ray communications (IrDA) or short-range radio communications (e.g., Bluetooth), interposition of the stationary terminal 103 between the mobile terminal 100 and the content server 102, obviates the need for the mobile terminal 100 to require the user to manually enter a phone number and a request number, thus improving the convenience of the electronic asset utilization system.

As mentioned above, the electronic asset utilization system of the present embodiment enables payment for a commodity product or service by use of an electronic asset or enables transmission and receipt of an electronic asset by way of a communications network. Accordingly, the present invention can provide a sales/settlement system which provides a high degree of convenience. Further, payment for a product or service by use of an electronic asset and receipt of service can be carried out by way of the communications network. Therefore, the present invention can provide a settlement/service provision system which provides a high degree of convenience.

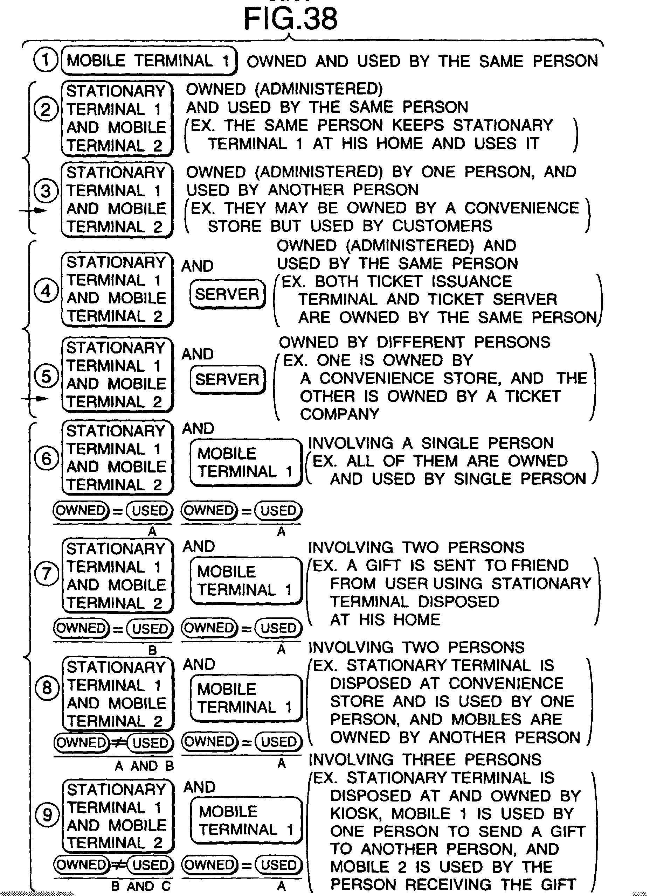

FIG. 38 shows various modes of relationship between the stationary terminal, the proprietor (administrator) of the mobile terminal or the server, and the user.

### [Advantages of the Invention]

In the present invention, the first stationary terminal instructs the server to supply a desired electronic asset to the first mobile terminal by way of the communications network (instruction step). In accordance with the instruction from the first stationary terminal, the server supplies a desired electronic asset to the first mobile terminal by way of the communications network (supply step).

In the present invention, the second mobile terminal instructs the server to supply a desired electronic asset to the first mobile terminal by way of the communications network (instruction step). In accordance with the instruction from the second mobile terminal, the server supplies a desired electronic asset to the first mobile terminal by way of the communications network (supply step).

In the present invention, the first stationary terminal instructs the server to supply a desired electronic asset to the first stationary terminal by way of the communications network (instruction step). In accordance with the instruction from the first stationary terminal, the server supplies a desired electronic asset to the first stationary terminal, or to the first mobile terminal by way of the first stationary terminal (supply step).

In the present invention, the third mobile terminal instructs the server to supply a desired electronic asset to the third stationary terminal by way of the communications network (instruction step). In accordance with the instruction from the third mobile terminal, the server supplies a desired electronic asset to the third stationary terminal by way of the communications network (supply step).

In the present invention, the fourth stationary terminal instructs the server to supply a desired electronic asset to the third mobile terminal by way of the communications network (instruction step). In accordance with the instruction from the first stationary terminal, the server supplies a desired electronic asset to the third stationary terminal by way of the communications network (supply step).

Accordingly, in a case where the user requests to purchase an electronic asset, for example, an electronic prepaid card or an electronic ticket, the user places with the server an order for a desired electronic asset by way of the communications network. The server performs processing corresponding to the order and can again transmit the desired electronic asset (such as an electronic prepaid card or an electronic ticket) to the set terminal by way of the communications network.

In a case where the use requests to settle payment or receive service through use of an electronic asset, such as electronic money, an electronic ticket, and a pay-per-view broadcast ticket, the user sends, to the server, a desired request by way of the communications network. The server performs processing operation corresponding to the request and can transmit an electronic asset (such as a result of settlement of payment or desired service) to the terminal by way of the communications network.

As mentioned above, the user can acquire a required electronic asset, as required, by way of the communications network. Accordingly, the user does not need to go out for only the purpose of purchasing or suing an electronic asset. Therefore, the present invention can achieve a higher degree of convenience.

As mentioned above, the terminal capable of storing an electronic asset is not limited to the terminal to which the electronic asset has been supplied. The electronic asset may be stored in another terminal through use of transfer means. Therefore, the storage capacity of memory of a terminal to which an electronic asset is to be supplied can be saved. Even in the event that the user loses the terminal, the risk of losing the electronic asset along with the first mobile terminal can be reduced.

In the present invention, the electronic asset is supplied to the first stationary terminal or the first mobile terminal owned by a person differing from the owner or user of the second mobile terminal. Further, the electronic asset is supplied to the third mobile terminal or the third stationary terminal owned by a person differing from the owner or user of the fourth stationary terminal.

Further, the user can send a desired electronic asset or service to a person other than the user who has placed an order to an electronic asset or the user who has requested provision of service. Therefore, an electronic asset or service can be utilized as a gift for another person other than the user, i.e., a friend or lover. Since the electronic asset utilization system uses the communications network, the present invention can provide an electronic asset utilization system which can send an electronic asset or service to a person residing in a distant location.

## Claims

1. An electronic asset utilization system comprising:
a first mobile terminal which has first wireless communications means capable of establishing connection to a communications network by means of wireless communications and is portable;
a first stationary terminal which is disposed to be stationary and outputs a signal for instructing supply of a desired electronic asset to the first mobile terminal; and
a server which supplies the desired electronic asset to the first mobile terminal in accordance with the signal output from the first stationary terminal, wherein
the first mobile terminal, the first stationary terminal, and the server are connected to the communications network.

2. An electronic asset utilization system comprising:
a first mobile terminal which has first wireless communications means capable of establishing connection to a communications network by means of wireless communications and is portable;
a second mobile terminal which has second wireless communications means capable of establishing connection to the communications network by means of wireless communications, outputs a signal for instructing supply of a desired electronic asset to the first mobile terminal, and is portable; and
a server which supplies the desired electronic asset to the first mobile terminal in accordance with the signal output from the second stationary terminal, wherein
the first mobile terminal, the second mobile terminal, and the server are connected to the communications network.

3. An electronic asset utilization system comprising:
a first mobile terminal which has first wireless communications means capable of establishing connection to a communications network by means of wireless communications and is portable;
a first stationary terminal which is disposed to be stationary and outputs a signal for instructing supply of a desired electronic asset; and
a server which supplies the desired electronic asset to the first mobile terminal by way of the first stationary terminal or to the first mobile terminal, in accordance with the signal output from the first stationary terminal, wherein
the first mobile terminal, the first stationary terminal, and the server are connected to the communications network.

4. The electronic asset utilization system as defined in claim 1 or 2, wherein the first mobile terminal has transfer means capable of transferring the electronic asset supplied to the first mobile terminal to the stationary terminal that is disposed to be stationary.

5. The electronic asset utilization system as defined in claim 4, wherein the transfer means corresponds to communications means capable of carrying out communications with the stationary terminal.

6. The electronic asset utilization system as defined in claim 4, wherein the transfer means corresponds to portable recording means.

7. The electronic asset utilization system as defined in any one of claims 1, 2, 3, 4, 5, and 6, wherein an owner or user of the first stationary terminal or the second mobile terminal differs from an owner or user of the first mobile terminal.

8. The electronic asset utilization system as defined in any one of claims 2, 4, 5, and 6, wherein the first mobile terminal is identical with the second mobile terminal.

9. The electronic asset utilization system as defined in any one of claims 1, 2, 4, 5, 6, 7, and 8, wherein, upon receipt, from the first stationary terminal or the second mobile terminal, of an instruction for supplying an electronic asset, the server sends a request for effecting payment to the first stationary terminal or the second mobile terminal.

10. The electronic asset utilization system as defined in any one of claims 1, 3, 4, 5, and 6, wherein, upon receipt, from the first stationary terminal, of an instruction for supplying an electronic asset, the server sends a request for effecting payment to the first mobile terminal.

11. The electronic asset utilization system as defined in claim 9 or 10, wherein the first stationary terminal, the first mobile terminal, or the second mobile terminal sends an electronic asset having a monetary value to the server, in exchange for the electronic asset supplied in accordance with the instruction output from the first stationary terminal or the second mobile terminal.

12. The electronic asset utilization system as defined in any one of claims 1, 3, 4, 5, 6, and 7, wherein the first stationary terminal or the server has history/billing information storage means for storing history/billing information pertaining to the electronic asset supplied in accordance with the instruction, and
the first mobile terminal sends an electronic asset having a monetary value to the server as a payment, on the basis of the history/billing information stored in the history/billing information storage means.

13. The electronic asset utilization system as defined in claim 12, wherein the first mobile terminal sends the history/billing information to the server.

14. The electronic asset utilization system as defined in any one of claims 11, 12, and 13, wherein the server settles the payment by use of the electronic asset having a monetary value and sends the result of settlement to the first stationary terminal or the second mobile terminal.

15. The electronic asset utilization system as defined in claim 14, wherein the first stationary terminal updates the history/billing information stored in the history/billing information storage means, through use of the result of settlement transmitted to the first stationary terminal.

16. The electronic asset utilization system as defined in any one of claims 1 through 15, wherein the first stationary terminal or the second mobile terminal sends, to the server, personal identification information pertaining to a person who has instructed supply of the electronic asset.

17. The electronic asset utilization system as defined in claim 16, wherein the personal identification information is supplied from the first mobile terminal.

18. The electronic asset utilization system as defined in claim 16 or 17, wherein the personal identification information is encrypted so that the server can decrypt the information.

19. An electronic asset utilization system comprising:
a third stationary terminal which is disposed to be stationary;
a third mobile terminal which has third wireless communications means capable of establishing connection to a communications network by means of wireless communications, outputs a signal for instructing supply of a desired electronic asset to the third mobile terminal, and is portable; and
a server which supplies the desired electronic asset to the third stationary terminal in accordance with the signal output from the third mobile terminal, wherein
the third stationary terminal, the third mobile terminal, and the server are connected to the communications network.

20. An electronic asset utilization system comprising:
a third stationary terminal which is disposed to be stationary;
a fourth stationary terminal which is disposed to be stationary and outputs a signal for instructing supply of a desired electronic asset to the third stationary terminal; and
a server which supplies the desired electronic asset to the third stationary terminal in accordance with the signal output from the fourth stationary terminal, wherein
the third stationary terminal, the fourth stationary terminal, and the server are connected to the communications network.

21. The electronic asset utilization system as defined in claim 19 or 20, wherein the third stationary terminal has transfer means capable of transferring to a portable mobile terminal the electronic asset supplied to the third stationary terminal.

22. The electronic asset utilization system as defined in claim 21, wherein the transfer means corresponds to communications means capable of carrying out communications with the stationary terminal.

23. The electronic asset utilization system as defined in claim 21, wherein the transfer means corresponds to portable recording means.

24. The electronic asset utilization system as defined in any one of claims 19, 20, 21, 22, and 23, wherein an owner or user of the third mobile terminal or the fourth stationary terminal differs from an owner or user of the third stationary terminal.

25. The electronic asset utilization system as defined in any one of claims 20, 21, 22, and 23, wherein the third stationary terminal is identical with the fourth stationary terminal.

26. The electronic asset utilization system as defined in any one of claims 19, 20, 21, 22, 23, 24, and 25, wherein, upon receipt, from the third mobile terminal or the fourth stationary terminal, of an instruction for supplying an electronic asset, the server sends a request for effecting payment to the third mobile terminal or the fourth stationary terminal.

27. The electronic asset utilization system as defined in any one of claims 19, 21, 22, and 23, wherein, upon receipt, from the third mobile terminal, of an instruction for supplying an electronic asset, the server sends a request for effecting payment to the third stationary terminal.

28. The electronic asset utilization system as defined in claim 26, wherein the third mobile terminal or the fourth stationary terminal sends an electronic asset having a monetary value to the server, in exchange for the electronic asset supplied in accordance with the instruction output from the third mobile terminal or the fourth stationary terminal.

29. The electronic asset utilization system as defined in any one of claims 20, 21, 22, 23, and 24, wherein the fourth stationary terminal or the server has history/billing information storage means for storing history/billing information pertaining to the electronic asset supplied in accordance with the instruction, and
the fourth stationary terminal sends an electronic asset having a monetary value to the server as a payment, on the basis of the history/billing information stored in the history/billing information storage means.

30. The electronic asset utilization system as defined in claim 29, wherein the fourth stationary terminal sends the history/billing information to the server.

31. The electronic asset utilization system as defined in any one of claims 28, 29, and 30, wherein the server settles the payment by use of the electronic asset having a monetary value and sends the result of settlement to the third mobile terminal or the fourth stationary terminal.

32. The electronic asset utilization system as defined in claim 31, wherein the fourth stationary terminal updates the history/billing information stored in the history/billing information storage means, through use of the result of settlement transmitted to the fourth stationary terminal.

33. The electronic asset utilization system as defined in any one of claims 19 through 31, wherein the third mobile terminal or the fourth stationary terminal sends, to the server, personal identification information pertaining to a person who has instructed supply of the electronic asset.

34. The electronic asset utilization system as defined in any one of claims 1 through 33, wherein the electronic value is supplied at a set time and date.

35. The electronic asset utilization system as defined in any one of claims 1 through 34, wherein the electronic asset corresponds to an electronic prepaid card having a monetary value, an electronic ticket, or a pay-per-view broadcast ticket for use in viewing a pay-per-view broadcast program.

36. The electronic asset utilization system as defined in claim 35, wherein the pay-per-view broadcast ticket contains key information to be used in a processing operation for making a broadcast program viewable.

37. An electronic asset utilization system comprising:
a mobile terminal which is connected to a communications network by means of wireless communications and is portable;
a stationary terminal which has information storage means for storing information and is disposed to be stationary; and
a server connected to the communications network, wherein
the information transferred from the stationary terminal to the mobile terminal is sent to the serer by way of the communications network.

38. The electronic asset utilization system as defined in claim 37, wherein the information transferred to the mobile terminal is sent to the server by way of another stationary terminal which is disposed to be stationary and the communications network.

39. An electronic asset utilization method for use with an electronic asset utilization system including a first mobile terminal which is connected to a communications network by means of wireless communications and is portable, a first stationary terminal disposed to be stationary, and a server connected to the first mobile terminal and the first stationary terminal by way of the communications network, the method comprising:
an instruction step in which the first stationary terminal instructs the server to supply a desired electronic asset to the first mobile terminal; and
a supply step in which the server supplies the desired electronic asset to the first mobile terminal in accordance with the instruction output from the first stationary terminal.

40. An electronic asset utilization method for use with an electronic asset utilization system including first and second mobile terminals which are connected to a communications network by means of wireless communications and are portable, and a server connected to the first and second mobile terminals by way of the communications network, the method comprising:
an instruction step in which the second mobile terminal instructs the server to supply a desired electronic asset to the first mobile terminal; and
a supply step in which the server supplies the desired electronic asset to the first mobile terminal in accordance with the instruction output from the second mobile terminal.

41. An electronic asset utilization method for use with an electronic asset utilization system including a first mobile terminal which is connected to a communications network by means of wireless communications and is portable, a first stationary terminal disposed to be stationary, and a server connected to the first mobile terminal and the first stationary terminal by way of the communications network, the method comprising:
an instruction step in which the first stationary terminal instructs the server to supply a desired electronic asset; and
a supply step in which the server supplies the desired electronic asset to the first stationary terminal or the first mobile terminal by way of the first stationary terminal, in accordance with the instruction output from the first stationary terminal.

42. The electronic asset utilization method as defined in claim 39 or 40, wherein the electronic asset utilization system has a stationary terminal disposed to be stationary, and the electronic asset utilization method has a step of transferring the electronic asset supplied to the first mobile terminal to the stationary terminal.

43. The electronic asset utilization method as defined in any one of claims 39, 40, 41, and 42, wherein the electronic asset is supplied to the first stationary terminal or the first mobile terminal owned by a person differing from the owner or user of the second mobile terminal.

44. The electronic asset utilization method as defined in claim 40 or 42, wherein the first mobile terminal is identical with the second mobile terminal.

45. The electronic asset utilization method as defined in any one of claims 39, 40, 42, 43, and 44, further comprising a billing step of sending a request for effecting payment to the first stationary terminal or the second mobile terminal when the first stationary terminal or the second mobile terminal instructs supply of an electronic asset.

46. The electronic asset utilization method as defined in any one of claims 39, 41, 42, and 44, further comprising a billing step of sending a request for effecting payment to the first mobile terminal when the first stationary terminal instructs supply of an electronic asset.

47. The electronic asset utilization method as defined in claim 45 and 46, further comprising a payment step in which the first stationary terminal or the second mobile terminal sends an electronic asset having a monetary value to the server, in exchange for the electronic asset supplied in the instruction step.

48. The electronic asset utilization method as defined in any one of claims 39, 41, 42, and 43, further comprising a payment step in which the first mobile terminal sends an electronic asset having a monetary value to the server as a payment, on the basis of history/billing information which is stored in the first stationary terminal or the server and pertains to the electronic asset supplied in accordance with the instruction in the instruction step.

49. The electronic asset utilization method as defined in claim 48, further comprising a history/billing information transmission step in which the first mobile terminal transmits the history/billing information to the server.

50. The electronic asset utilization method as defined in any one of claims 47 to 49, further comprising
a settlement step of settling a charge by use of the electronic asset having a monetary value; and
a settlement result transmission step of transmitting the result of the settlement performed in the settlement step to the first stationary terminal or the second mobile terminal.

51. The electronic asset utilization method as defined in claim 50, wherein the history/billing information is updated through use of the settlement result transmitted to the first stationary terminal.

52. The electronic asset utilization method as defined in any one of claims 39 through 51, further comprising a personal identification information transmission step in which the first stationary terminal or the second mobile terminal sends, to the server, personal identification information pertaining to a person who has instructed supply of the electronic asset.

53. The electronic asset utilization method as defined in claim 52, wherein the personal identification information is supplied from the first mobile terminal.

54. The electronic asset utilization method as defined in claim 52 or 53, wherein the personal identification information is encrypted such that the information can be decrypted later.

55. The electronic asset utilization method as defined in claim 47, wherein processing is carried out in sequence from the instruction step, the payment step, and the supply step.

56. An electronic asset utilization method for use with an electronic asset utilization system including a third stationary terminal disposed to be stationary, a third mobile terminal which is connected to a communications network by means of wireless communications and is portable, and a server connected to the third stationary terminal and the third mobile terminal by way of the communications network, the method comprising:
an instruction step in which the third mobile terminal instructs the server to supply a desired electronic asset to the third stationary terminal; and
a supply step in which the server supplies the desired electronic asset to the third stationary terminal in accordance with the instruction output from the third mobile terminal.

57. An electronic asset utilization method for use with an electronic asset utilization system including third and fourth stationary terminals disposed to be stationary, and a server connected to the third and fourth stationary terminals by way of a communications network, the method comprising:
an instruction step in which the fourth stationary terminal instructs the server to supply a desired electronic asset to the third stationary terminal; and
a supply step in which the server supplies the desired electronic asset to the third stationary terminal in accordance with the instruction output from the fourth stationary terminal.

58. The electronic asset utilization method as defined in claim 56 or 57, wherein the electronic asset utilization system further comprises a portable mobile terminal, and the electronic asset utilization method includes a step of transferring the electronic asset supplied to the third stationary terminal to the mobile terminal.

59. The electronic asset utilization method as defined in any one of claims 56, 57, and 58, wherein the electronic asset is supplied to the third mobile terminal or the third stationary terminal owned by a person differing from the owner or user of the fourth stationary terminal.

60. The electronic asset utilization method as defined in claim 57 or 58, wherein the third stationary terminal is identical with the fourth stationary terminal.

61. The electronic asset utilization method as defined in any one of claims 56, 57, 58, 59, and 60, further comprising a billing step of sending a request for effecting payment to the third mobile terminal or the fourth stationary terminal when the third mobile terminal or the fourth stationary terminal instructs supply of an electronic asset.

62. The electronic asset utilization method as defined in any one of claims 56, 58, and 60, further comprising a billing step of sending a request for effecting payment to the third stationary terminal when the third mobile terminal instructs supply of an electronic asset.

63. The electronic asset utilization method as defined in claim 61, further comprising a payment step in which the third mobile terminal or the fourth stationary terminal sends an electronic asset having a monetary value to the server, in exchange for the electronic asset supplied in the instruction step.

64. The electronic asset utilization method as defined in any one of claims 57, 58, and 59, further comprising a payment step in which the fourth stationary terminal sends an electronic asset having a monetary value to the server as a payment, on the basis of history/billing information which is stored in the fourth stationary terminal and pertains to the electronic asset supplied in accordance with the instruction in the instruction step.

65. The electronic asset utilization method as defined in claim 64, further comprising a history/billing information transmission step in which the fourth stationary terminal transmits the history/billing information to the server.

66. The electronic asset utilization method as defined in any one of claims 63 to 65, further comprising
a settlement step of settling a charge by use of the electronic asset having a monetary value; and
a settlement result transmission step of transmitting the result of the settlement performed in the settlement step to the third mobile terminal or the fourth stationary terminal.

67. The electronic asset utilization method as defined in claim 66, wherein the history/billing information is updated through use of the settlement result transmitted to the fourth stationary terminal.

68. The electronic asset utilization method as defined in any one of claims 56 through 66, further comprising a personal identification information transmission step in which the third mobile terminal or the fourth stationary terminal sends, to the server, personal identification information pertaining to a person who has instructed supply of the electronic asset.

69. The electronic asset utilization method as defined in claim 63, wherein processing is carried out in sequence from the instruction step, the payment step, and the supply step.

70. The electronic asset utilization method as defined in any one of claims 39 to 69, wherein the electronic asset is supplied at a set time and date.

71. The electronic asset utilization method as defined in any one of claims 39 to 70, wherein the electronic asset corresponds to any one of an electronic prepaid card having a monetary value, an electronic ticket, and a pay-per-view broadcast ticket for use in viewing a pay-per-view program.

72. The electronic asset utilization method as defined in claim 71, wherein the pay-per-view broadcast ticket includes key information for use with an operation for making a broadcast program viewable.

73. An electronic asset utilization method for use with an electronic asset utilization system including a mobile terminal which is connected to a communications network by means of wireless communications and is portable, a stationary terminal which has information storage means for storing information and is disposed to be stationary, and a server connected to the communications network, the method comprising:
a transfer step of transferring the information stored in the information storage means from the stationary terminal to the mobile terminal; and
a transmission step of transmitting the information transferred to the mobile terminal to the server by way of the communications network.

74. The electronic asset utilization system as defined in claim 73, wherein the information transferred to the mobile terminal is sent to the server by way of another stationary terminal disposed to be stationary and the communications network.

75. A server which is connected, by way of a communications network, to a first portable mobile terminal and a first stationary terminal disposed to be stationary, and supplies a desired electronic asset to the first mobile terminal in accordance with a signal which is received from the first stationary terminal for instructing supply of the desired electronic asset to the first mobile terminal.

76. A server which is connected, by way of a communications network, to first and second portable mobile terminals, and supplies a desired electronic asset to the first mobile terminal in accordance with a signal which is received from the second stationary terminal for instructing supply of the desired electronic asset to the first mobile terminal.

77. A server which is connected, by way of a communications network, to a first stationary terminal disposed to be stationary, and supplies a desired electronic asset to the first mobile terminal or to a first portable mobile terminal capable of being connected to the first stationary terminal by way of the first stationary terminal, in accordance with a signal which is received from the first stationary terminal for instructing supply of the desired electronic asset.

78. A server which is connected, by way of a communications network, to a third portable mobile terminal and a third stationary terminal disposed to be stationary, and supplies a desired electronic asset to the third stationary terminal in accordance with a signal which is received from the third mobile terminal for instructing supply of the desired electronic asset to the third stationary terminal.

79. A server which is connected, by way of a communications network, to third and fourth stationary terminals disposed to be stationary, and supplies a desired electronic asset to the third stationary terminal in accordance with a signal which is received from the fourth stationary terminal for instructing supply of the desired electronic asset to the third stationary terminal.

80. The server as defined in claim 75, 76, 78, and 79, wherein a bill is sent when supply of an electronic asset is instructed by any one of the first stationary terminal, the first mobile terminal, the second mobile terminal, the third mobile terminal, and the third stationary terminal.

81. The server as defined in claim 80, wherein the bill is settled by use of an electronic asset which has a monetary value and has been transmitted in response to the bill, and the result of settlement is transmitted to the terminal that has instructed supply of the electronic asset.

82. The server as defined in any one of claims 75, 76, 77, 78, 79, 80, and 81, wherein the electronic asset is supplied at a set time and date.

83. A server for use with an electronic asset utilization system comprising:
a first mobile terminal which has first wireless communications means capable of establishing connection to a communications network by means of wireless communications and is portable;
a first stationary terminal which is disposed to be stationary and outputs a signal for instructing supply of a desired electronic asset to the first mobile terminal; and
a server which supplies the desired electronic asset to the first mobile terminal in accordance with the signal output from the first stationary terminal, wherein
the first mobile terminal, the first stationary terminal, and the server are connected to the communications network.

84. A server for use with an electronic asset utilization system comprising:
a first mobile terminal which has first wireless communications means capable of establishing connection to a communications network by means of wireless communications and is portable;
a second mobile terminal which has second wireless communications means capable of establishing connection to the communications network by means of wireless communications, outputs a signal for instructing supply of a desired electronic asset to the first mobile terminal, and is portable; and
a server which supplies the desired electronic asset to the first mobile terminal in accordance with the signal output from the second stationary terminal, wherein
the first mobile terminal, the second mobile terminal, and the server are connected to the communications network.

85. A server for use with an electronic asset utilization system comprising:
a first mobile terminal which has first wireless communications means capable of establishing connection to a communications network by means of wireless communications and is portable;
a first stationary terminal which is disposed to be stationary and outputs a signal for instructing supply of a desired electronic asset; and
a server which supplies the desired electronic asset to the first mobile terminal by way of the first stationary terminal or to the first mobile terminal, in accordance with the signal output from the first stationary terminal, wherein
the first mobile terminal, the first stationary terminal, and the server are connected to the communications network.

86. A server for use with an electronic asset utilization system comprising:
a third stationary terminal which is disposed to be stationary;
a third mobile terminal which has third wireless communications means capable of establishing connection to a communications network by means of wireless communications, outputs a signal for instructing supply of a desired electronic asset to the third mobile terminal, and is portable; and
a server which supplies the desired electronic asset to the third stationary terminal in accordance with the signal output from the third mobile terminal, wherein
the third stationary terminal, the third mobile terminal, and the server are connected to the communications network.

87. A server for use with an electronic asset utilization system comprising:
a third stationary terminal which is disposed to be stationary;
a fourth stationary terminal which is disposed to be stationary and outputs a signal for instructing supply of a desired electronic asset to the third stationary terminal; and
a server which supplies the desired electronic asset to the third stationary terminal in accordance with the signal output from the fourth stationary terminal, wherein
the third stationary terminal, the fourth stationary terminal, and the server are connected to the communications network.

88. The server as defined in claim 83, 84, 85, 86, and 87, wherein a bill is sent when supply of an electronic asset is instructed by any one of the first stationary terminal, the first mobile terminal, the second mobile terminal, the third mobile terminal, and the third stationary terminal.

89. The server as defined in claim 88, wherein the bill is settled by use of an electronic asset which has a monetary value and has been transmitted in response to the bill, and the result of settlement is transmitted to the terminal that has instructed supply of the electronic asset.

90. The server as defined in any one of claims 83, 84, 85, 86, 87, 88, and 89, wherein the electronic asset is supplied at a set time and date.

91. A computer-readable recording medium on which there is recorded a program for carrying out an electronic asset utilization method as defined in any one of claims 39 to 74.
